# EUROPEAN PATENT SPECIFICATION

(11) **EP 3 858 088 B1**
(45) Date of publication and mention of the grant of the patent: **09.03.2022**
(21) Application number: 19773962.6
(22) Date of filing: 18.09.2019
(51) Int. Cl.: H04W 36/00, H04W 76/16, H04W 76/15, H04W 88/06

(54) **A RADIO NETWORK NODE, A WIRELESS DEVICE AND METHODS THEREIN FOR RESUMING A RADIO CONNECTION**
FUNKNETZWERKKNOTEN, DRAHTLOSE VORRICHTUNG UND VERFAHREN DARIN ZUR WIEDERAUFNAHME EINER FUNKVERBINDUNG
NOEUD DE RÉSEAU RADIO, DISPOSITIF SANS FIL ET PROCÉDÉS ASSOCIÉS POUR LA REPRISE D'UNE CONNEXION RADIO

(30) Priority: 25.09.2018 US 201862735872 P
(43) Date of publication of application: 04.08.2021
(73) Proprietor: TELEFONAKTIEBOLAGET LM ERICSSON (PUBL), 164 83 Stockholm (SE)
(72) Inventor: RUGELAND, Patrik, 117 58 STOCKHOLM (SE); MILDH, Gunnar, 192 55 SOLLENTUNA (SE); DA SILVA, Icaro L. J., 170 77 SOLNA (SE)
(74) Representative: Ericsson
(86) International application number: PCT/SE2019/050878
(87) International publication number: WO 2020/067961

(56) References cited:
- WO-A1-2018/029621
- "3rd Generation Partnership Project; Technical Specification Group Services and System Aspects; 3GPP System Architecture Evolution (SAE); Security architecture (Release 15)", 3GPP STANDARD ; TECHNICAL SPECIFICATION ; 3GPP TS 33.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V15.1.0, 21 September 2017 (2017-09-21), pages 1-161, XP051337096, [retrieved on 2017-09-21]

## Description

### BACKGROUND

In a typical wireless communication network, wireless devices, also known as wireless communication devices, mobile stations, stations (STAs) and/or User Equipments (UEs), communicate via a Local Area Network (LAN) such as a WiFi network or a Radio Access Network (RAN) to one or more Core Networks (CN). The RAN covers a geographical area which is divided into service areas or cell areas, which may also be referred to as a beam or a beam group, with each service area or cell area being served by a radio network node such as a radio access node e.g., a Wi-Fi access point or a Radio Base Station (RBS), which in some networks may also be denoted, for example, a NodeB, eNodeB (eNB), or gNB as denoted in 5G. A service area or cell area is a geographical area where radio coverage is provided by the radio network node. The radio network node communicates over an air interface operating on radio frequencies with the wireless device within range of the radio network node.

Specifications for the Evolved Packet System (EPS), also called a Fourth Generation (4G) network, have been completed within the 3rd Generation Partnership Project (3GPP) and this work continues in the coming 3GPP releases, for example to specify a Fifth Generation (5G) network also referred to as 5G New Radio (NR). The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs used in 3G networks. In general, in E-UTRAN/LTE the functions of a 3G RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Multi-antenna techniques may significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO.

In addition to faster peak Internet connection speeds, 5G planning aims at higher capacity than current 4G, allowing higher number of mobile broadband users per area unit, and allowing consumption of higher or unlimited data quantities in gigabyte per month and user. This would make it feasible for a large portion of the population to stream high-definition media many hours per day with their mobile devices, when out of reach of Wi-Fi hotspots. 5G research and development also aims at improved support of machine to machine communication, also known as the Internet of things, aiming at lower cost, lower battery consumption and lower latency than 4G equipment.

### 1.1 Inter-RAT and Inter 5GC working in LTE and NR

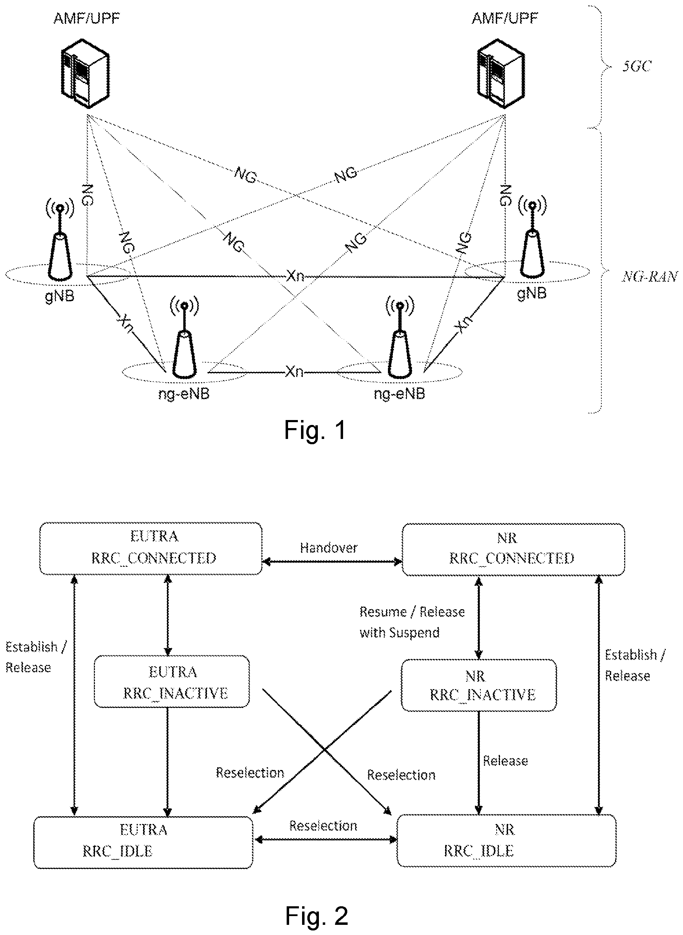

The 5G network in the 3GPP introduces both a new core network (5GC) and a new Radio Access Network (NR). The core network, 5GC, will however, also support other RATs than NR. It has been agreed that the LTE (or E-UTRA) RAT should also be connected to the 5GC. LTE base stations (eNBs) that are connected to the 5GC is called ng-eNB and is part of the NG-RAN which also consists of NR base stations called gNBs. **Figure 1** schematically shows how the base stations are connected to each other and to the nodes in the 5GC.

Currently in an LTE (EUTRA) RAT connected to the 5GC (5G Core network) and in the NR RAT, the state transitions schematically illustrated in **Figure 2** are supported. Figure 2 schematically illustrates a UE state machine and state transitions between NR/5GC, E-UTRA/EPC and E-UTRA/5GC.

As shown, it is possible to move ongoing UE connection, i.e. a UE in an RRC_CONNECTED state, between the two RATs using a handover procedure. Additionally (not shown) it is possible for the network to move the UE to the other RAT by sending a Release message with re-direct information. When the UE is in an IDLE state or an INACTIVE state the cell reselection procedure will be used when transiting between the RATs. Within the RATs there is also an RRC Re-establishment procedure which may be triggered if the UE loses the radio connection, e.g. due to a Radio Link Failure (RLF), or at intra- or inter-RAT handover failure. The RRC re-establishment procedure is not supported between the RATs, instead the UE which e.g. experiences an RLF in one RAT will if it finds a suitable cell in a different RAT performing a transition to the RRC_IDLE state and perform a new RRC connection setup (further elaborated in next section).

The RRC states in the NG-RAN (Next Generation RAN).

In NR and E-UTRA (i.e. LTE connected to 5GC) it has been introduced a new RRC state called an RRC_INACTIVE state. In this disclosure, the term NG-RAN refers to either NR or LTE connected to 5G Core network.

In the RRC_INACTIVE, the UE stores certain configurations, e.g. Data Radio Bearer (DRB) configurations and physical layers parameters. When the UE needs to resume the connection, it transmits an *RRCConnectionResumeRequest* or an *RRCResumeRequest* in the LTE and NR network respectively. The UE may then reuse the stored settings and reduce the time and signaling needed to enter an RRC_CONNECTED state.

Note: In the NR network an equivalent message exists for the case of long Inactive Radio Network Temporary Identifier (I-RNTI) of 40 bits used as UE identifier *RRCResumeRequest1*, associated to a different logical channel compared to the short I-RNTI used in the *RRCResumeRequest* message.

In the Rel-15 (first release) of the NG-RAN standard it has been agreed to not support direct transition between the RRC_INACTIVE state in LTE/E-UTRA and the RRC_INACTIVE state in NR. Hence, a Rel-15 UE in the RRC_INACTIVE state in one RAT performing cell reselection to the other RAT would trigger the UE to release its Access Stratum (AS) context, to enter an RRC_IDLE state and to perform a Registration Area Update.

### 1.2 RRC Resume

When a UE is suspended from an RRC_CONNECTED state to an RRC_INACTIVE state, it suspends all communication, but maintains its configuration to be able to more rapidly resume the connection when needed.

When the UE resumes, it transmits a Resume request message, e.g. an RRCConnectionResumeRequest in LTE and an RRCResumeRequest or an RRCResumeRequest1 in NR which comprises a UE identifier and a resume cause so that the network may locate the UEs stored Access Stratum (AS) context and provide appropriate response depending on the resume cause (e.g. location updates using 'mosignaling', starting a data session using 'mo-data', or an emergency call, etc). To prevent that a rouge user impersonates the UE, the resume request also contains a shortened Message Authentication Code for Integrity (MAC-I), i.e. a security token, which verifies the UE identity.

Below are included the RRCConnectionResumeRequest from agreed TP (R2-1812449, during RAN2#103) and RRCResumeRequest and RRCResumeRequest1 from NR RRC 38.331 ASN.1 review phase 2 (R2-1813492, Latest NR RRC CR to be approved during RAN plenary sept 2018). The LTE RRCConnectionResumeRequest has been critically extended, meaning that the UE may select to transmit either the RRCConnectionResumeRequest-13 or RRCConnectionResumeRequest-15, depending on whether the UE connects to E-UTRA connected to EPC (LTE/EPC) or E-UTRA connected to 5C (LTE/5GC).

In NR, the Resume Request is divided into two separate messages (RRCResumeRequest and RRCResumeRequest1), depending on the size of the resume identity, e.g. the I-RNTI used. The size may be 24 or 40 bit. Apart from that, the messages are treated the same way.

### RRC Resume Request messages in TS 36.331:

The MAC-I in the resume message is underlined:

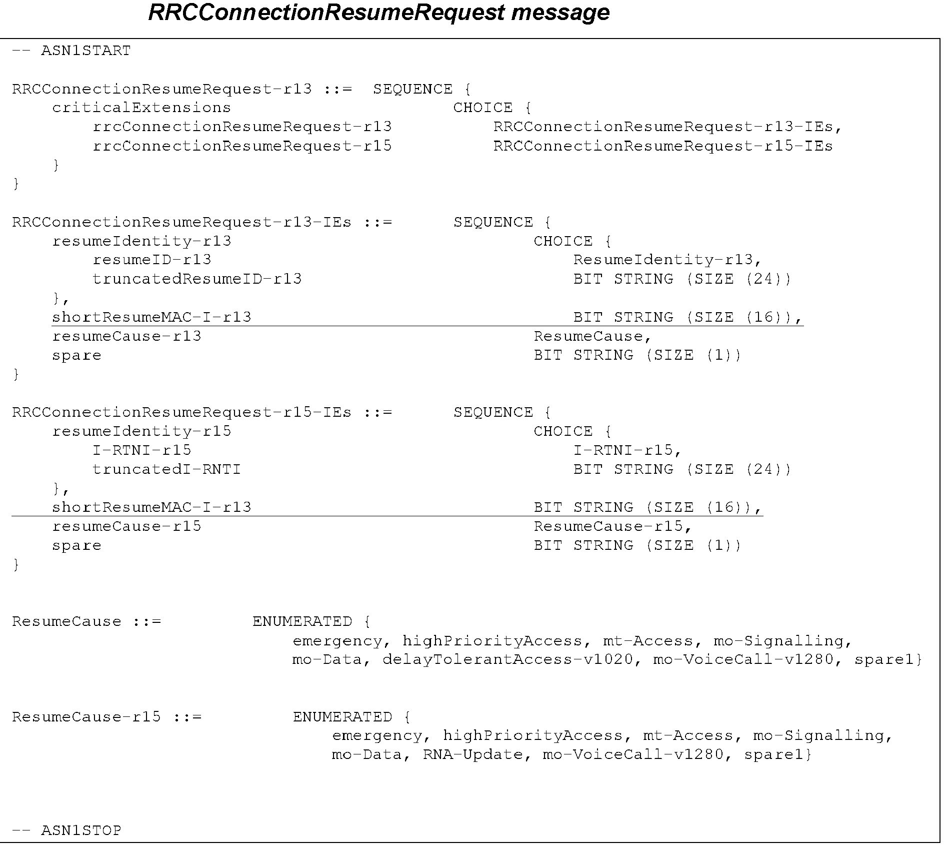

RRC Resume request messages from TS 38.331:

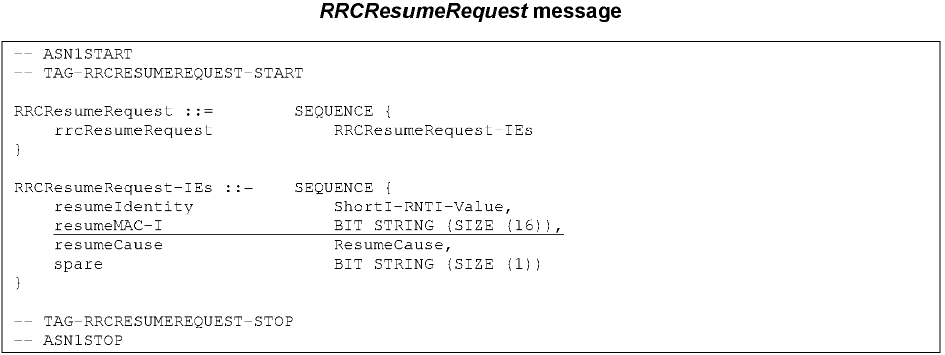

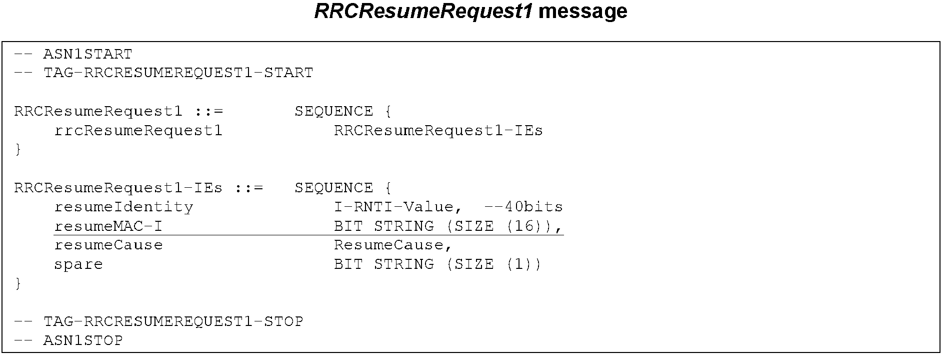

### 1.3 Message authentication code - integrity

In the LTE and the NR technologies, the integrity protection of messages is performed in the Packet Data Convergence Protocol (PDCP) in both the network and the UE by computing a Message Authentication Code - Integrity (MAC-I) which is included in the PDCP header. When the receiver receives the PDCP packet it computes and verifies the MAC-I using the same inputs and algorithms as the transmitter so that each side may be authenticated. The derivations are specified in Technical Specifications TS 33.401 and TS 33.501 for the EPS and the 5GS, respectively, although the only difference is which algorithms are applied. For the radio access E-UTRA connected to either the EPC or the

5GC, the algorithms used are defined in TS 33.401, while for the NR the algorithms used are defined in the TS 33.501.

Below is an excerpt from the TS 33.501 v 15.1.0 (2018-06) for the derivation of the MAC-I:

The input parameters to the integrity algorithm are a 128-bit integrity key named KEY, a 32-bit COUNT, a 5-bit bearer identity called BEARER, the 1-bit direction of the transmission i.e. DIRECTION, and the message itself i.e. MESSAGE. The DIRECTION bit shall be 0 for uplink and 1 for downlink. The bit length of the MESSAGE is LENGTH.

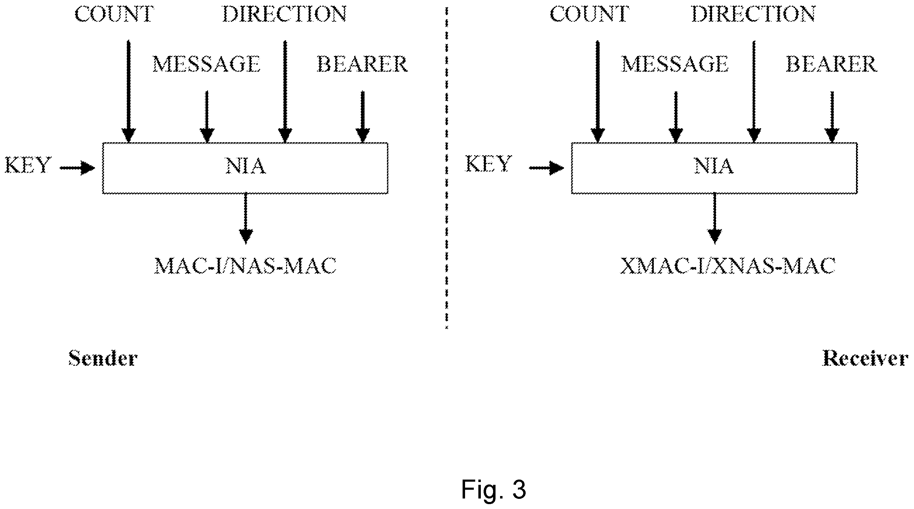

**Figure 3** schematically illustrates the use of an integrity algorithm, e.g. a NR Integrity Protection Algorithm (NIA), to authenticate the integrity of messages. Thus, Figure 3 schematically illustrates the derivation of an MAC-I/NAS-MAC or an XMAC-I/XNAS-MAC at the sender and the receiver, respectively. The sender may be a wireless device, such as a UE, and the receiver may be a radio network node, such as an eNB or a gNB, and vice versa.

Based on these input parameters the sender computes a 32-bit message authentication code, e.g. an MAC-I/NAS-MAC, using the integrity algorithm NIA. The message authentication code is then appended to the message when sent. For integrity protection algorithms, the receiver computes the expected message authentication code (XMAC-I/XNAS-MAC) on the message received in the same way as the sender computed its message authentication code on the message sent and verifies the data integrity of the message by comparing it to the received message authentication code, i.e. MAC-I/NAS-MAC.

The integrity protection is applied for control signaling, such as e.g. RRC messages, and is configurable for user plane messages in NR. **<page 6a>**

### SUMMARY

Embodiments disclosed herein relate to inactive inter-RAT mobility, i.e. when the wireless device is suspended in a source RAT, and needs to resume in another RAT, i.e. to resume in a target RAT being different from the source RAT. In the prior art, it is not clear how the wireless device determines or calculates the security token, e.g. a MAC-I or a part thereof, of a target RAT and how the wireless device handles input parameters when it has been suspended in a cell from the source RAT, since the input parameters used in the calculation of the security token is different in the source RAT and in the target RAT. For example, the input parameters may differ in terms of the number of bits, their exact meaning, etc.

The document 3rd Generation Partnership Project describes "Security architecture", 3GPP TS 33.401, Release 15, vol. SA WG3, no. V15.1.0, 21 September 2017, pages 1-161 (XP051337096). WO 2018/029621 A1 discloses a method for resuming a radio connection for a wireless device that is moving from a first cell with a RAT to a second cell with a second RAT, while being in an inactive state. The method comprises: receiving a resume identifier from a first network node in the first cell; sending, to a second network node in the second cell, a request to resume the radio connection, the request comprising the received resume identifier; and in response to sending the request, receiving a resume connection message from the second network node in the second cell.

The invention is defined by the independent claim 1, 8, 13 and 17.

An object of embodiments disclosed herein is therefore to overcome or at least ameliorate the drawbacks with the prior art.

According to an aspect of embodiments herein, the object is achieved by a method performed by a wireless device for resuming a radio connection in a wireless communications network comprising a first Radio Access Technology (RAT), and a second RAT being different from the first RAT. The wireless device is operating in a first cell served by a first radio network node operating in the first RAT.

When a connection with first cell is suspended, the wireless device performs a reselection to a second cell served by a second radio network node operating in the second RAT.

The wireless device triggers an RRC resume procedure in the second cell.

Further, the wireless device receives a first set of parameters associated with the first cell. The first set of parameters comprises at least one parameter identifying the wireless device or the first cell.

Furthermore, the wireless device receives a second set of parameters associated with the second cell. The second set of parameters comprises at least one parameter identifying the wireless device or the second cell

Yet further, the wireless device determines a security token based on the first and second sets of parameters, and transmits, to the second cell, a resume request message comprising the security token.

According to another aspect of embodiments herein, the object is achieved by a wireless device for resuming a radio connection in a wireless communications network comprising a first Radio Access Technology (RAT), and a second RAT being different from the first RAT. The wireless device is configured to operate in a first cell served by a first radio network node configured to operate in the first RAT.

The wireless device is configured to perform a re-selection to a second cell served by a second radio network node operating in the second RAT when a connection with first cell is suspended.

The wireless device is configured to trigger an RRC resume procedure in the second cell.

Further, the wireless device is configured to receive a first set of parameters associated with the first cell. The first set of parameters comprises at least one parameter identifying the wireless device or the first cell.

Furthermore, the wireless device is configured to receive a second set of parameters associated with the second cell. The second set of parameters comprises at least one parameter identifying the wireless device or the second cell

Yet further, the wireless device is configured to determine a security token based on the first and second sets of parameters, and transmits, to the second cell, a resume request message comprising the security token.

According to another aspect of embodiments herein, the object is achieved by a method performed by a first radio network node for assisting a wireless device in resuming a radio connection in a wireless communications network comprising a first Radio Access Technology (RAT), and a second RAT being different from the first RAT. The wireless device is operating in a first cell served by the first radio network node operating in the first RAT.

The first radio network node provides the wireless device with a first set of parameters associated with the first cell, wherein the first set of parameters comprises at least one parameter identifying the wireless device or the first cell.

When a connection between the wireless device and the first cell is suspended, the first radio network node receives, from a second radio network node operating in the second RAT, a second set of parameters associated with a second cell served by the second radio network node.

Further, the first radio network node receives, from the second radio network node, a security token. The security token is received by the second radio network node in a resume request message from the wireless device when the connection with the first radio network node is suspended.

Furthermore, the first radio network node determines an expected security token based on the received first and second sets of parameters.

Yet further, the first radio network node verifies the wireless device's identity by means of the received security token and the determined expected security token.

The first radio network node transmits, to the second radio network node, one or more configurations and/or parameters relating to the radio connection to be resumed, when the wireless device is verified as valid.

According to another aspect of embodiments herein, the object is achieved by a first radio network node for assisting a wireless device in resuming a radio connection in a wireless communications network comprising a first Radio Access Technology (RAT), and a second RAT being different from the first RAT. The wireless device is configured to operate in a first cell served by the first radio network node operating in the first RAT.

The first radio network node is configured to provide the wireless device with a first set of parameters associated with the first cell, wherein the first set of parameters comprises at least one parameter identifying the wireless device or the first cell.

The first radio network node is configured to receive, from a second radio network node operating in the second RAT, a second set of parameters associated with a second cell served by the second radio network node when a connection between the wireless device and the first cell is suspended.

Further, the first radio network node is configured to receive, from the second radio network node, a security token. The security token is received by the second radio network node in a resume request message from the wireless device when the connection with the first radio network node is suspended.

Furthermore, the first radio network node is configured to determine an expected security token based on the received first and second sets of parameters.

Yet further, the first radio network node is configured to verify the wireless device's identity by means of the received security token and the determined expected security token.

The first radio network node is configured to transmit, to the second radio network node, one or more configurations and/or parameters relating to the radio connection to be resumed, when the wireless device is verified as valid.

Since the wireless device determines the security token based on the first set of parameters associated with the first cell of the first RAT from which first cell the wireless device is suspended and based on the second set of parameters associated with the second cell of the second RAT being different from the first RAT, the signaling needed to resume a suspended connection is reduced as is the time needed for resuming the connection. This results in an improved performance of the wireless communications network.

An advantage of some embodiments disclosed herein is that they enable a wireless device to suspend a connection in one RAT, e.g. in LTE or NR, and then attempt to resume the connection in the other RAT. Thanks to that, faster transitions and hence, lower control plane latency are possible as the RRC resume procedure is expected to be faster to execute than a transition via the RRC_IDLE state which is the current solution for the scenarios in Rel-15 specifications.

Another advantage of some embodiments disclosed herein is that by supporting transitions between the RRC_INACTIVE state in both the LTE and the NR it is possible to configure RAN Notification Areas, e.g. paging areas, which areas comprise both NR cells and LTE cells. That is advantageous since it makes it possible to minimize signaling for the UEs which frequently toggle, e.g. ping pong between the LTE and NR technologies, since these UEs do not need to perform any RAN Notification Area Update procedure. Toggling is particularly likely since NR may be deployed in quite high frequencies and rely on beamforming, where toggling may be more common than in current systems.

### BRIEF DESCRIPTION OF THE DRAWINGS

Examples of embodiments herein are described in more detail with reference to attached drawings in which:
- **Figure 1**: is a schematic block diagram illustrating a 5G wireless communications network according to prior art;
- **Figure 2**: is a schematic block diagram illustrating a UE state machine and state transitions between an EUTRA access network and a NR access network according to prior art;
- **Figure 3**: is a schematic block diagram illustrating input parameters to and output parameter from an NR integrity algorithm NIA at a sender and a receiver, respectively, according to prior art;
- **Figure 4A**: is a combined signaling scheme and flowchart illustrating inter-RAT signaling when a UE connection with an NR cell served by an NR gNB is suspended, e.g. released with suspend configuration, and when the UE connection is resumed with an EUTRA cell served by an LTE gNB;
- **Figure 4B**: is a combined signaling scheme and flowchart illustrating inter-RAT signaling when a UE connection with an EUTRA cell served by an LTE gNB is suspended, e.g. released with suspend configuration, and when the UE connection is resumed with an NR cell served by an NR gNB;
- **Figure 5**: is a schematic block diagram illustrating embodiments of a wireless communications network;
- **Figure 6**: is a flowchart depicting embodiments of methods in a wireless device;
- **Figure 7**: is schematic block diagram illustrating embodiments of a wireless device;
- **Figure 8A**: is a flowchart depicting embodiments of methods in a first radio network node;
- **Figure 8B**: is schematic block diagram illustrating embodiments of a first radio network node;
- **Figure 9A**: is a flowchart depicting embodiments of methods in a second radio network node;
- **Figure 9B**: is schematic block diagram illustrating embodiments of a second radio network node;
- **Figure 10**: is a flowchart depicting embodiments of methods in a wireless device being suspended in LTE and resuming in LTE or NR, and when resuming in NR calculating an inter-RAT security token using NR format and procedures;
- **Figure 11**: is a flowchart depicting embodiments of methods in a wireless device being suspended in NR and resuming in NR or LTE, and when resuming in LTE calculating an inter-RAT security token using LTE format and procedures;
- **Figure 12**: is a flowchart depicting embodiments of methods in a wireless device being suspended in LTE and resuming in LTE or NR, and when resuming in NR calculating an inter-RAT security token using LTE format and NR procedures;
- **Figure 13**: is a flowchart depicting embodiments of methods in a wireless device being suspended in NR and resuming in NR or LTE, and when resuming in LTE calculating an inter-RAT security token using NR format and LTE procedures;
- **Figure 14**: is a flowchart depicting embodiments of methods in a wireless device being suspended in LTE and resuming in LTE or NR, and when resuming in NR calculating an inter-RAT security token using a new Information Element (IE) defined in NR format and using NR procedures;
- **Figure 15**: is a flowchart depicting embodiments of methods in a wireless device being suspended in NR and resuming in NR or LTE, and when resuming in LTE calculating an inter-RAT security token using a new Information Element (IE) defined in LTE format and using LTE procedures;
- **Figure 16**: is a flowchart depicting embodiments of methods in a wireless device being suspended in LTE and resuming in LTE or NR, and when resuming in NR calculating an inter-RAT security token using a new Information Element (IE) defined in LTE format and using NR procedures;
- **Figure 17**: is a flowchart depicting embodiments of methods in a wireless device being suspended in NR and resuming in NR or LTE, and when resuming in LTE calculating an inter-RAT security token using a new Information Element (IE) defined in NR format and using LTE procedures;
- **Figure 18**: is a flowchart depicting embodiments of methods in a wireless device being suspended in LTE and resuming in LTE or NR, and when resuming in NR calculating an inter-RAT security token using dummy values for the source parameters;
- **Figure 19**: is a flowchart depicting embodiments of methods in a wireless device being suspended in NR and resuming in NR or LTE, and when resuming in LTE calculating an inter-RAT security token using dummy values for the source parameters;
- **Figure 20**: schematically illustrates a telecommunication network connected via an intermediate network to a host computer;
- **Figure 21**: is a generalized block diagram of a host computer communicating via a base station with a user equipment over a partially wireless connection; and
- **Figures 22-25**: are flowcharts illustrating methods implemented in a communication system including a host computer, a base station and a user equipment.

### DETAILED DESCRIPTION

As a part of developing embodiments herein a problem will first be identified and discussed.

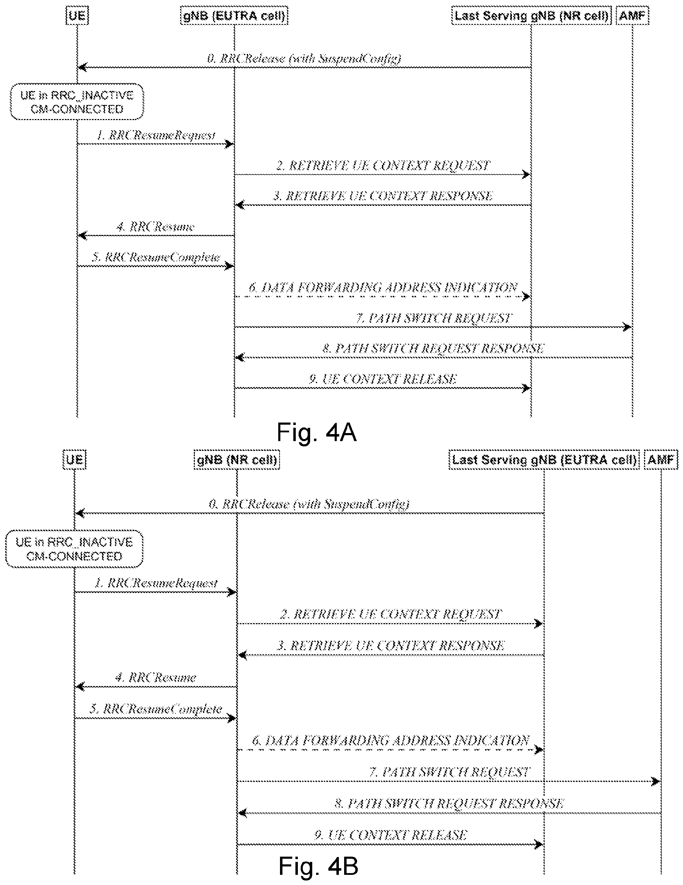

In Rel-15 of the NG-RAN standard, it has been agreed that both the NR and the LTE connected to the core network 5GC supports the RRC_INACTIVE state. During the study item, the benefits of inter-RAT mobility in the RRC_INACTIVE state have been discussed. In inter-RAT mobility, a UE may be suspended in one RAT and resume in another RAT i.e. the UE may remain in the RRC_INACTIVE state even after the inter-RAT cell reselection. In later releases of the NR and the LTE technologies at least when connected to the 5GC, it is expected that functionality will be added. In this case the UE is suspended to the RRC_INACTIVE state in one RAT and will try to resume the connection in another RAT, i.e. the UE is suspended in LTE and resumed to NR or vice versa. A signaling flow for the inter-RAT suspend procedure and the inter-RAT resume procedure between LTE and NR are shown in **Figures 4A and 4B****.**

A problem solved by embodiments disclosed herein is mainly in the context of inactive inter-RAT mobility i.e. when the UE is suspended in one RAT and needs to resume in another RAT. In particular, it is not clear how the UE calculates the security token, e.g. a MAC-I or a part thereof, of a target RAT and how it handles input parameters when it has been suspended in a cell from a different source RAT, since the input parameters used is different in the two RATs e.g. in terms of the number of bits, their exact meaning, etc.

As described in the background section above, in the case of the LTE and the NR technologies, the input parameters used to calculate the security token, e.g. the MAC-I (e.g. exemplified in the UE variables VarShortResumeMAC-Input, VarShortINACTIVE-MAC-Input in LTE TS 36.331, or VarResumeMAC-Input in NR TS 38.331) are different and have different lengths and contains parameters related to both the source and the target cell.

Furthermore, it is not possible to simply use the parameters of one of the RATs, e.g. the source RAT or the target RAT, since the parameters are related to both the source cell and the target cell. For example, the Cellldentity in VarShortResumeMAC-Input is associated with the target cell while the physCellld and the C-RNTI in VarShortResumeMAC-Input or VarShortINACTIVE-MAC-Input are associated with the source cell.

For example, the following differences exist:
- targetCellldentity: This is the Cellldentity of the target cell i.e. the cell the UE is trying to resume. In NR, the targetCellldentity is defined as a bit string of 36 bits. In LTE, the targetCellldentity is defined as a bit string of 28 bits.
- source-C-RNTI: This is the C-RNTI that the UE had in the PCell it was connected to prior to suspension of the RRC connection or the temporary C-RNTI when the UE performed as 2-step RNA update before resuming (or any other two-step suspend/resume). In NR, that is defined as an integer between 0 and 65535, equivalent to a bit string of 16 bits. The same number of bits was defined in LTE.
- sourcePhysCellld: Set to the physical cell identity of the PCell the UE was connected to prior to suspension of the RRC connection. In NR, that is defined as an integer between 0 and 1007, coded as a bit string of 10 bits. In LTE, that is defined as an integer between 0 and 503, coded as a bit string of 9 bits.

When a UE resumes an RRC connection it must include a security token, such as e.g. a ShortResumeMAC-I or ResumeMAC-I; in the RRC Resume Request message, and the network, e.g. a radio network node, calculates the same security token to authenticate the UE. To calculate this security token, the UE and the network, e.g. the radio network node, uses input variables from the source cell and from the target cell.

By the term security token when used herein is meant a message authentication token or some secure signature which may only be generated by an UE which has access to the correct session keys. The generation of the security token may be done using a secure algorithm, e.g. secure hash, checksum, integrity protection algorithm or another suitable algorithm. The security token may be a Message Authentication Code (MAC) or a part thereof. In this disclosure the terms security token and message authentication token may be used interchangeably.

If a UE is suspended in one RAT, e.g. LTE or NR, and resumes in another RAT, e.g. NR or LTE, the required input variables will be defined in different RATs. The parameters will have different sizes and characteristics in the different RATs.

Some embodiments disclosed herein relate to how to convert parameters used to calculate the resume security token from one RAT to another RAT, e.g. convert the source RAT parameter to the target RAT format or vice versa, or how to adapt the procedures to allow input parameters from different source and target RATs.

This may be achieved either by modifying the content of an existing message or by introducing a new message and modifying the procedures.

The expression "target RAT format" when used in this disclosure is meant a format as specified for a target RAT. This could also be expressed as a format associated with the target RAT. In correspondence, the expression "source RAT format" when used herein is meant a format as specified for a source RAT, which also could be expressed as a format associated with the source RAT. Thus, when parameters are converted from the source RAT format to the target RAT format, the parameters are converted from a format adapted for the source RAT to a format adapted for the target RAT.

In this disclosure, the source RAT and the target RAT are sometimes referred to as a first RAT and a second RAT, respectively. Further, the terms "source RAT", "first source RAT" and "first RAT" may be used interchangeably, and the terms "target RAT" and "second RAT" may be used interchangeably.

Some embodiments herein focus on the handling of the security token used for authentication during an RRC Resume procedure, computed based on the MAC-I, in the case the source cell, e.g. the source radio network node serving the source cell, and the target cell, e.g. the target radio network node serving the target cell, have differences in the input parameters for the security token calculation, such as in the case of an inter-RAT inactive mobility or any kind of inter-RAT suspend and resume procedure.

Some embodiments herein provide multiple mechanisms at a UE and a network node for generating a Resume MAC-I (e.g. a security token used in the Resume procedure) and similar cryptographic checksums in case of inter-RAT suspend and resume procedures. More generally, embodiments herein provide multiple mechanisms in case both the source cell where the UE is suspended and the target cell where the UE tries to resume differ in the calculation of the Resume MAC-I or differs in its input parameters. Some embodiments herein comprise a UE that has been suspended in one first source RAT and performs a Resume procedure in a second RAT. The method comprises one or more out of:
- Determining a first set of parameters associated to the first source RAT, e.g. a source physical cell identity in the first RAT, a source C-RNTI in the first RAT. This may be triggered e.g. upon Suspend (and entering inactive state) or upon the initiation of the resume procedure;
- Determining a second set of parameters associated to a second cell in a first RAT (e.g. a target cell identity in first RAT). This may be done e.g. upon cell reselection or before trying to resume in the first RAT. Thus the UE may as soon as it enters an RRC_INACTIVE state obtain the second set of parameters from the cell it is camping on, e.g. the first cell in the first RAT. As soon as the UE re-selects to another cell, it updates/replaces the second set of parameters. If the new cell is an inter-RAT cell, e.g. a cell in a second RAT, the UE will have to update the format. Since at intra-RAT cell-reselection, the UE doesn't always have to resume, the UE may update the second set of parameters several times without signaling anything. Therefore, the UE doesn't have to obtain the parameters during the Resume procedure but it may have done so earlier.
- Determining an updated version of one or multiple parameters from the first set of parameters associated to the first RAT, e.g. the source physical cell identity PCI in the first RAT, or the source C-RNTI in the first RAT. This may be done e.g. upon inter-RAT cell reselection or before trying to resume in a second RAT. How these are determined is explained later in different embodiments.
- Determining an updated version of one or multiple parameters in the second set of parameters associated to a second cell in a second RAT (e.g. a target cell identity in the second RAT or any other parameters for replay attack avoidance or protocol discriminator). This may be done e.g. upon inter-RAT cell reselection or before trying to resume in the second RAT. Thus, the second set of parameters is updated to the format of the second RAT, when the UE reselects to a cell, or resumes in the cell, in the second RAT.
- Upon resuming in a second RAT, after being suspended in a first RAT, using the first and/or second set of parameters, and/or updated version of the parameters to compute a security token to be included in the Resume Request message in the second RAT.

Six exemplifying embodiments will be described in more detail below. These six exemplifying embodiments relate to:
- Some first exemplifying embodiments. Convert the source RAT parameter, e.g. the C-RNTI and the PCI, to a target RAT format by mapping, recalculating, truncating, or padding, and use variables defined in the target RAT format to compute the security token.
- Some second exemplifying embodiments. Convert target RAT parameters, e.g. the Cell ID, to a source RAT format by mapping, recalculating, truncating or padding, and use variables defined in the source RAT format to compute the security token.
- Some third exemplifying embodiments. Create a new variable, e.g. a new Information Element (IE), allowing source parameters, e.g. the C-RNTI and the PCI, in the source RAT format and the target RAT parameters, e.g. the Cell ID, in the target RAT format. The new IE is defined in either the source RAT or in the target RAT. In other words, the new IE is defined in either format of the source RAT or in the format of the target RAT.
- Some fourth exemplifying embodiments. Create a new variable or extend an existing variable to allow both RAT formats for all parameters, e.g. for the C-RNTI, the PCI, and the Cell ID, using e.g. a CHOICE structure. This variable may be used for both intra-RAT and inter-RAT calculation of the security token, e.g. the Resume MAC-I during suspend/resume. The variable may be defined in only the LTE specification, only the NR specification, or in both the LTE and the NR specifications.
- Some fifth exemplifying embodiments. Extend definition of existing variables to use dummy values in the target RAT format for the source parameters, e.g. for the C-RNTI and/or the PCI.
- Some sixth exemplifying embodiments. The network explicitly instructs the UE how to convert parameters from a different RAT, either by providing parameters associated to both RATs, or by providing a parameter defining how the parameters in one RAT may be converted into the second RAT. The converted parameter may either have been converted from the source format to the target format or vice versa.

It should be understood that one or more features from one or more exemplifying embodiments may be combined.

An object of embodiments herein is therefore to improve the performance of a wireless communications network for resuming a radio connection.

Embodiments herein may refer to inter-RAT checksum (MAC-I) calculation at RRC Resume, resume, inactive state, RRC, security procedures.

An advantage of embodiments disclosed herein is that they enable a UE to suspend in one RAT, e.g. in LTE or NR, and then attempt to resume in the other RAT. Thanks to that, faster transitions and hence, lower control plane latency (important 5G KPI) are possible as the RRC resume procedure is expected to be faster to execute than transition via the RRC_IDLE state which is the current solution for the scenarios in Rel-15 specifications. Furthermore, by supporting transitions between the RRC_INACTIVE state in both the LTE and the NR it is possible to configure RAN Notification Areas, e.g. paging areas, which includes both NR and LTE cells. That is advantageous since it makes it possible to minimize signaling for the UEs which frequently toggle, e.g. ping pong between the LTE and NR technologies, since these UEs do not need to perform any RAN Notification Area Update procedure. Toggling is particularly likely since NR may be deployed in quite high frequencies and rely on beamforming, where toggling may be more common than in current systems.

Without the disclosed embodiments, the UE and the network, e.g. the source radio network node and/or the target radio network node, would not be able to calculate the security token required to authenticate the UE during the resume procedure. Or, a secured solution for inter-RAT resume would not be possible to use.

Embodiments herein are mostly exemplified with NR, LTE wireless devices but it may be applicable to other wireless devices which are served by other Radio Access Technologies such as CAT-M, NB-IoT, WiFi, or NR Carriers.

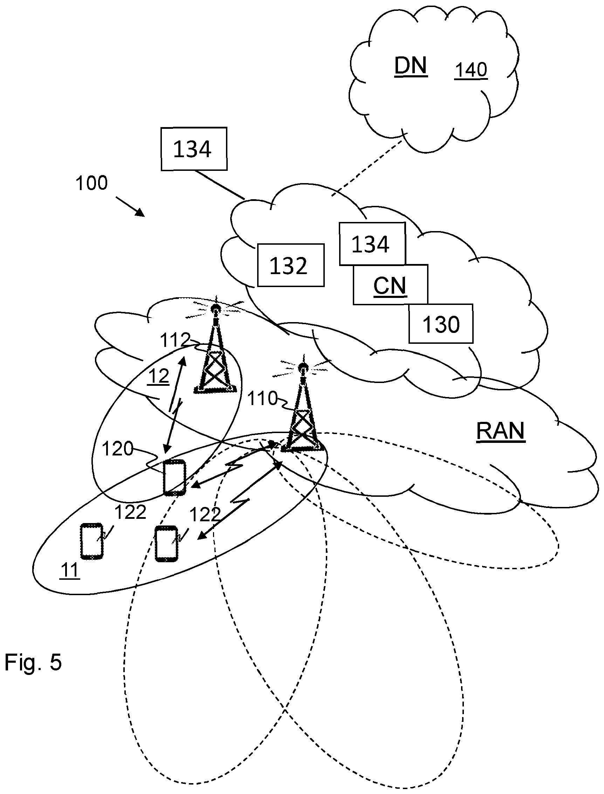

Embodiments herein relate to wireless communication networks in general. **Figure 5** is a schematic overview depicting **a wireless communications network 100.** The wireless communications network 100 may be referred to as a radio communications network. The wireless communications network 100 comprises one or more Radio Access Networks (RANs) and one or more Core Networks (CNs). The radio communications network 100 may use a number of different Radio Access Technologies (RATs), such as NB-IoT, CAT-M, Wi-Fi, eMTC, Long Term Evolution (LTE), LTE-Advanced, 5G, New Radio (NR), Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Sometimes in this disclosure the wireless communications network 100 is referred to as just a network.

In the wireless communication network 100, wireless devices e.g. **a wireless device 120** also referred to as the first UE 120, is operating in the wireless communications network 100. One or more further wireless devices 122 also referred to as one or more second UEs 122 may operate in the wireless communications network 100. As schematically illustrated in Figure 5, the wireless device 120,122 may communicate with a network node, e.g. a network node 110, 112 which will be described below.

The wireless devices 120, 122 may each e.g. be a mobile station, a non-Access Point (non-AP) STA, a STA, a user equipment (UE) and/or a wireless terminals, an NB-loT device, an eMTC device, Integrated Access Backhaul (IAB) node, and a CAT-M device, a WiFi device, an LTE device and an NR device communicate via one or more Access Networks (AN), e.g. RAN, to one or more Core Networks (CN). It should be understood by the skilled in the art that "wireless device" is a non-limiting term which means any terminal, wireless communication terminal, user equipment, Device to Device (D2D) terminal, or node e.g. smart phone, laptop, mobile phone, sensor, relay, mobile tablets or even a small base station communicating within a cell.

In this disclosure, the terms wireless device, terminal and UE are used interchangeably.

Network nodes operate in the radio communications network 100, such as a **Radio Network Node (RNN) 110,112** also referred to as the first network node 110 and the second network node 112, respectively, providing radio coverage over a respective geographical area, e.g. **a service area 11** and **a service area 12**, which may also be referred to as cells, beams or beam groups of a first Radio Access Technology (RAT), or a second RAT. The first and second RATs may be different RATs such as one of the RATs is a NR, 5G, LTE, Wi-Fi, NB-IoT, CAT-M, Wi-Fi, eMTC or similar, and the other RAT is another one of the NR, 5G, LTE, Wi-Fi, NB-IoT, CAT-M, Wi-Fi, eMTC or similar. The network node 110,112 may be a transmission and reception point e.g. a radio access network node such as a Wireless Local Area Network (WLAN) access point or an Access Point Station (AP STA), an access controller, a base station, e.g. a radio base station such as a NodeB, an evolved Node B (eNB, eNode B),an ng-eNB (i.e. NG-RAN eNB, i.e. eNB connected to 5GC), a gNB, a base transceiver station, a radio remote unit, an Access Point Base Station, a base station router, a transmission arrangement of a radio base station, a stand-alone access point or any other network unit capable of communicating with a wireless device within the service area served by the network node 110,112 depending e.g. on the radio access technology and terminology used. The network node 110 may be referred to as a serving radio network node and communicates with the wireless device 120, 122 with Downlink (DL) transmissions to the wireless device 120, 122 and Uplink (UL) transmissions from the wireless device 120, 122.

Further network nodes operate in the radio communications network 100, such as **a Mobility Network Node (MNN) 130** also referred to as a third network node 130. The network node 130 may be a Mobility Management Entity (MME) which is a control node for an EPS access network, a Serving Gateway (SGW), and a Packet Data Network Gateway (PGW). An MME is amongst other responsible for tracking and paging procedure including retransmissions. Further the network node 130 may be an Access and Mobility Management Function (AMF) which is a control node for a 5GS access network, and a User Plane Function (UPF). Further, the network node 130 may be an Operation And Maintenance (OAM) node such as an Operation and Support System Radio and Core (OSS-RC) node or an Ericsson Network Management (ENM) node.

Further network nodes such as a **location server 132** and **a positioning server 134** operate in the radio communications network 100. For example, the location server 30,132 may be an E-SMLC and the positioning server 134 may be an RTK server. The location server 132 and the positioning server 134 may communication with each other over a communications interface.

It should be understood that the positioning server 134 may be arranged external of the radio communications network 100 and in such a scenario the positioning server 134 may be referred to as an external positioning server 132 and the location server 132 and the positioning server 134 may communicate over an IP interface.

The positioning server 134 may sometimes herein be referred to as an RTK server or an RTK network provider.

Methods according to embodiments herein may be performed by any of the network node 110 such as e.g. an eNB, the wireless device 120, e.g. the UE, the mobility network node 130, the location server 132 and/or by the positioning server 134. As an alternative, a Distributed Node **(DN)** and functionality, e.g. comprised in a **cloud 140** as shown in Figure 5 may be used for performing or partly performing the methods.

In this disclosure, the first RAT is the RAT of the first radio network node 110 serving the wireless device 120 when operating in a first service area 11, e.g. a first cell 11, and the second RAT is the RAT of a second radio network node 112 serving a second cell 12. Further, the wireless device 120 is suspended from a connection with the first radio network node 110 which connection is to be resumed by the second radio network node 112. Sometimes in this disclosure, the term "source node/cell" is used instead of the term "first RAT/node/cell", and the term "target RAT/node/cell" is used instead of the term "second RAT/node/cell". Thus, it may for example be said that the wireless device 120 is suspended from a connection with the source radio network node 110 and that the target radio network node 112 is to resume the connection.

### Actions of some embodiments herein

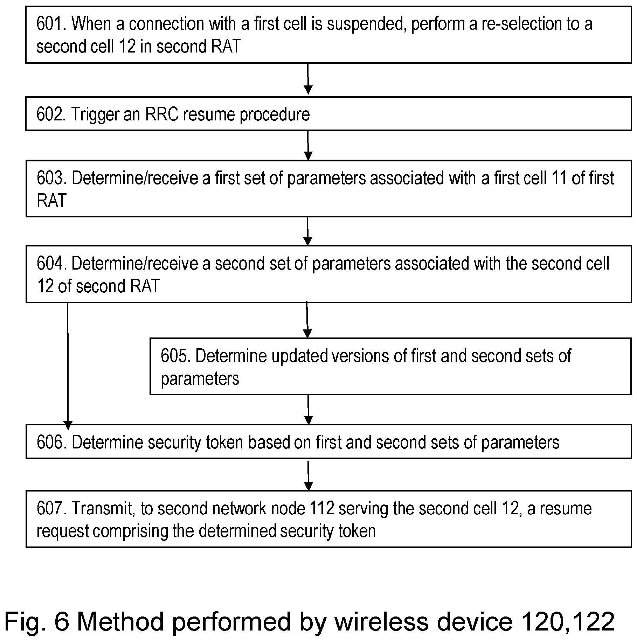

Example embodiments of a flowchart depicting embodiments of **a method performed by the wireless device 120,122,** e.g. to resume a connection, is depicted in **Figure 6** and will be described more in detail in the following. Especially, embodiments herein relates to a method performed by a wireless device 120 for resuming a radio connection in a wireless communications network 100 comprising a first Radio Access Technology (RAT) and a second RAT, wherein the wireless device 120 operates in a first cell 11 served by a first radio network node 110 operating in the first RAT. The first and second RATs are different RATs. The method may comprise one or more of the following actions which actions may be taken in any suitable order. Further, it should be understood that one or more actions may be optional and that actions may be combined.

In **Action 601**, when a connection with a first cell is suspended, the wireless device 120,122 performs a re-selection to a second cell 12 in the second RAT. This may be performed when the wireless device is in an inactive state or in a suspended state. The second cell 12 is served by the second radio network node 112 operating in the second RAT.

In **Action 602**, the wireless device 120,122 may trigger an RRC resume procedure.

The wireless device 120,122 triggers the RRC resume procedure in the second cell 12.

In **Action 603**, the wireless device 120,122 determines and/or receives a first set of parameters associated with the first cell 11 of first RAT. As mentioned above, the first cell 11 is served by the first radio network node 110 operating in the first RAT. The first set of parameters comprises at least one parameter identifying the wireless device 120 or the first cell 11. The first set of parameters may comprise a Cell Radio Network Temporary Identifier (C-RNTI), an Inactive RNTI (I-RNTI), and a Physical Cell Identifier (PCI). The C-RNTI and the I-RNTI identify the wireless device 120 and the PCI identifies the first cell 11.

In **Action 604**, the wireless device 120,122 determines and/or receives a second set of parameters associated with the second cell 12 of the second RAT. As mentioned above, the second cell 12 is served by the second radio network node 112 operating in the second RAT. The second set of parameters comprises at least one parameter identifying the wireless device 120 or the second cell 12. The second set of parameters may comprise a Cell ID or a PCI. The Cell ID and the PCI identify the second cell 12. The wireless device 120,122 may receive the second set of parameters from the first cell 11 or from the second cell 12.

In **Action 605**, the wireless device 120,122 determines updated versions of first and second sets of parameters.

The wireless device 120 determines an updated version of one or more parameters of the first set of parameters or an updated version of one or more parameters of the second set of parameters.

In some embodiments, e.g. in some first exemplifying embodiments, the wireless device 120 determines the updated version of the one or more parameters of the first set of parameters by converting the one or more parameters of the first set of parameters to a format corresponding to the format of the one or more parameters of the second RAT. The wireless device 120 may perform this conversion by performing one or more out of:
mapping, recalculating, or truncating the one or more parameters of the first set of parameters to a shortened bit string when the first RAT is 5G NR and the second RAT is LTE; and
mapping, recalculating, or padding the one or more parameters of the first set of parameters to an extended bit string when the first RAT is LTE and the second RAT is NR. Further, the wireless device 120 may use one or more variables defined in the second RAT. Thus, the wireless device 120 may use the one or more variables defined in the second RAT as input in calculating the security token for the second RAT.

In some embodiments, e.g. in some second exemplifying embodiments, the wireless device 120 determines the updated version of the one or more parameters of the second set of parameters comprises by converting the one or more parameters of the second set of parameters to a format corresponding to the format of the one or more parameters of the first set of parameters, e.g. of the first RAT. The wireless device 120 may perform this conversion by performing one or more out of:
mapping, recalculating, or truncating the one or more parameters of the second set of parameters to a shortened bit string when the first RAT is LTE and the second RAT is NR; and
mapping, recalculating, or or padding the one or more parameters of the second set of parameters to an extended bit string when the first RAT is NR and the second RAT is LTE. , Further, the wireless device 120 may use one or more variables defined in the first RAT as input in calculating the security token for the first RAT.

Thus, the wireless device 120 converts the one or more parameters of the first set of parameters having a format of the first RAT into a format of the second RAT, and converts the one or more parameters of the second set of parameters having a format of the second RAT into a format of the first RAT.

For example, the C-RNTI has the formats: In LTE: 16 bit string and In NR: 16 bit integer, the PCI has the format: In LTE: 9 bit integer and In NR: 10 bit integer, and the Cell ID has the format: In LTE: 28 bit string and in NR: 36 bit string.

In some embodiments, e.g. in some third exemplifying embodiments, the wireless device 120 creates and/or uses a new variable comprising the one or more parameters of the first set of parameters in the format of the first RAT and comprising the one or more parameters of the second set of parameters in the format of the second RAT. The new variable may comprise parameters having formats of more than one RAT. For example, this relates to some third exemplifying embodiments. When a reference is made to a new variable in this disclosure it should be understood to refer to a variable that is new in relation to the variables defined in the current standard, and which variable may comprise parameters having a format of two or more different RATs.

In some embodiments, e.g. in some fourth exemplifying embodiments, the wireless device 120 creates and/or uses a new variable or extending an existing variable to comprise the one or more parameters of the first set of parameters and the one or more parameters of the second set of parameters in both the format of the first RAT and in the format of the second RAT. In other words, the new variable may be an extension of an existing variable. The new variable may comprise parameters of only one format as in the legacy scenario or parameters of two or more formats according to embodiments disclosed herein.

In some embodiments, e.g. in some fifth exemplifying embodiments, the wireless device 120 extends and/or uses definition of existing variables to use one or more values, e.g. predefined values, in the second RAT format for the one or more parameters of the first set of parameters. In other words, the wireless device 120 may determine the updated version of the one or more parameters of the first set of parameters or the updated version of the one or more parameters of the second set of parameters, by extending definition of existing variables to use one or more values in the second RAT format in place of the one or more parameters of the frist set of parameters. However, it should be understood that the value does not have to be predefined. It could also be values which are not associated with the first set of parameters. For instance, the network may signal that for inter-RAT resume, the first set of parameters should be 0, and in another cell, it should be 42 (or something else).

In some embodiments, e.g. in some sixth exemplifying embodiments, the wireless device 120 receives an instruction how to update the first and second sets of parameters. Thus, the wireless device 120 may receive an instruction how to convert the one or more parameters of the first set of parameters into a format corresponding to the format of the one or more parameters of the second set of parameters or how to convert the one or more parameters of the second set of parameters into a format corresponding to the format of the one or more parameters of the first set of parameters. For example, the instruction may be received from the first radio network node 110 during suspension and from the second radio network node 112 during resume. In the latter case, the instruction may be broadcasted from the second radio network node 112. In such embodiments, the wireless device 120 updates the first and second sets of parameters in accordance with the instruction received. For example, this relates to some sixth exemplifying embodiments These sixth embodiments are not according to the invention as defined in the claims and are present for illustration purposes only.

In **Action 606**, the wireless device 120,122 determines a security token based on first and second sets of parameters.

As mentioned above, the wireless device 120 determines an updated version of one or more parameters of the first set of parameters or an updated version of one or more parameters of the second set of parameters. In such embodiments, the wireless device 120 determines the security token by determining the security token based on at least one out of the first set of parameters and the updated version of the one or more parameters of the first set of parameters, and based on at least one out of the second set of parameters and the updated version of the one or more parameters of the second set of parameters. Thus, the security token may be determined based on at least the C-RNTIand the PCI identifying the wireless device 120 and the first cell 11, respectively, and the Cell ID identifying the second cell 12. Further, one or more of the C-RNTI, PCI and Cell ID may be updated before the determination of the security token. Additionally or alternatively, the I-RNTI identifying the wireless device 120 and/or the PCI identifying the second cell 12 may also be used in the determination of the security token.

In some first exemplifying embodiments, the wireless device 120 uses the converted one or more parameters of the first set of parameters in one or more variables defined in the second RAT as input in calculation of the security token for the second RAT.

In some second exemplifying embodiments, the wireless device 120 uses the converted one or more parameters of the second set of parameters in one or more variables defined in the first RAT as input in calculation of the security token for the first RAT.

In some third and fourth exemplifying embodiments, the wireless device 120 uses the new variable as input in calculation of the security token for the second RAT.

In Action 607, the wireless device 120,122, transmits, to the second cell 12 served by the second network node 112, a resume request comprising the determined security token.

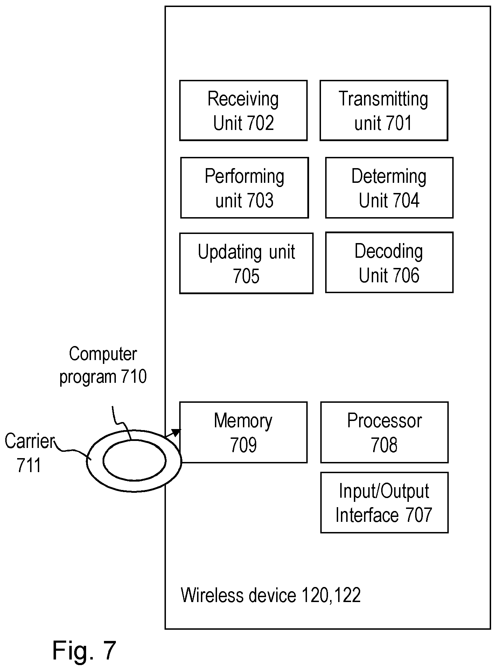

To perform the method actions e.g. for resuming a connection, the wireless device 120 may comprise the arrangement depicted in **Figure 7****.** The wireless device 120,122 may e.g. comprise **a transmitting unit 701, a receiving unit 702,** a **performing unit 703, a determining unit 704, an updating unit 705,** and **a decoding unit 706.** As previously mentioned, the wireless device 120 and the first radio network node 110 are configured to operate in the wireless communications network 100. The wireless device 120 is configured to perform, e.g. by means of the one or more units, one or more of the actions performed by the wireless device 1220 and described herein.

The wireless device 120 is configured to transmit, e.g. by means of the transmitting unit 701, a signal, message or information to one or more nodes operating in the communications network 100. The transmitting unit 701 may be implemented by or arranged in communication with **a processor 708** of the wireless device 120. The processor 708 will be described in more detail below.

The wireless device 120,122, is configured to transmit, to the second cell 12 served by the second network node 112, a resume request comprising a determined security token.

The wireless device 120 is configured to receive, e.g. by means of the receiving unit 702, a signal, message or information from one or more nodes operating in the communications network 100. The receiving unit 702 may be implemented by or arranged in communication with the processor 708 of the wireless device 120.

The wireless device 120,122 is configured to receive a first set of parameters associated with the first cell 11 of first RAT. As mentioned above, the first cell 11 is served by the first radio network node 110 operating in the first RAT. The first set of parameters comprises at least one parameter identifying the wireless device 120 or the first cell 11. The first set of parameters may comprise a Cell Radio Network Temporary Identifier (C-RNTI), an Inactive RNTI (I-RNTI), and a Physical Cell Identifier (PCI). The C-RNTI and the I-RNTI identify the wireless device 120 and the PCI identifies the first cell 11.

Further, the wireless device 120, 122 is configured to receive a second set of parameters associated with the second cell 12 of the second RAT. As mentioned above, the second cell 12 is served by the second radio network node 112 operating in the second RAT. The second set of parameters comprises at least one parameter identifying the wireless device 120 or the second cell 12. The second set of parameters may comprise a Cell ID or a PCI. The Cell ID and the PCI identify the second cell 12.

In some embodiments, e.g. in some sixth exemplifying embodiments, the wireless device 120 is configured to receive an instruction how to update the first and second sets of parameters. Thus, the wireless device 120 may be configured to receive an instruction how to convert the one or more parameters of the first set of parameters into a format corresponding to the format of the one or more parameters of the second set of parameters or how to convert the one or more parameters of the second set of parameters into a format corresponding to the format of the one or more parameters of the first set of parameters. For example, the instruction may be received from the first radio network node 110 during suspension and from the second radio network node 112 during resume. In the latter case, the instruction may be broadcasted from the second radio network node 112. In such embodiments, the wireless device 120 is configured to update the first and second sets of parameters in accordance with the instruction received. These sixth embodiments are not according to the invention as defined in the claims and are present for illustration purposes only.

The wireless device 120 may be configured to perform, e.g. by means of the performing unit 703, a re-selection to a second cell 12 in the second RAT when a connection with the first cell 11 is suspended. The performing unit 703 may be implemented by or arranged in communication with the processor 708 of the wireless device 120.

The wireless device 120 may perform the cell re-selection when the wireless device is in an inactive state or in a suspended state.

Further, the wireless device 120,122 may be performing triggering of an RRC resume procedure. The wireless device 120,122 may trigger the RRC resume procedure in the second cell 12.

The wireless device 120 is configured to determine, e.g. by means of the determining unit 704, a security token, e.g. an inter-RAT security token. The determining unit 704 may be implemented by or arranged in communication with the processor 708 of the wireless device 120.

The wireless device 120,122 is configured to determine a security token based on first and second sets of parameters.

As previously described, the wireless device 120 may determine an updated version of one or more parameters of the first set of parameters or an updated version of one or more parameters of the second set of parameters. In such embodiments, the wireless device 120 may be configured to determine the security token based on at least one out of the first set of parameters and the updated version of the one or more parameters of the first set of parameters, and based on at least one out of the second set of parameters and the updated version of the one or more parameters of the second set of parameters. Thus, the security token may be determined based on at least the C-RNTI and the PCI identifying the wireless device 120 and the first cell 11, respectively, and the Cell ID identifying the second cell 12. Further, one or more of the C-RNTI, PCI and Cell ID may be updated before the determination of the security token. Additionally or alternatively, the I-RNTI identifying the wireless device 120 and/or the PCI identifying the second cell 12 may also be used in the determination of the security token.

In some first exemplifying embodiments, the wireless device 120 is configured to use the converted one or more parameters of the first set of parameters in one or more variables defined in the second RAT as input in calculation of the security token for the second RAT.

In some second exemplifying embodiments, the wireless device 120 is configured to use the converted one or more parameters of the second set of parameters in one or more variables defined in the first RAT as input in calculation of the security token for the first RAT.

In some third and fourth exemplifying embodiments, the wireless device 120 is configured to use the new variable as input in calculation of the security token for the second RAT.

The first wireless device 120 may be configured to update, e.g. by means of the updating unit 705, one or more parameters of the first set of parameters and/or one or more parameters of the second set of parameters. The updating unit 705 may be implemented by or arranged in communication with the processor 708 of the first wireless device 120.

Thus, the wireless device 120,122 may be configured to determine updated versions of first and second sets of parameters.

The wireless device 120 may be configured to determine an updated version of one or more parameters of the first set of parameters or an updated version of one or more parameters of the second set of parameters.

In some embodiments, e.g. in some first exemplifying embodiments, the wireless device 120 is configured to determined the updated version of the one or more parameters of the first set of parameters by converting the one or more parameters of the first set of parameters to a format corresponding to the format of the one or more parameters of the second RAT. The wireless device 120 may be configured to perform this conversion by performing one or more out of:
mapping, recalculating, or truncating the one or more parameters of the first set of parameters to a shortened bit string when the first RAT is 5G NR and the second RAT is LTE; and
mapping, recalculating, or padding the one or more parameters of the first set of parameters to an extended bit string when the first RAT is LTE and the second RAT is NR. Further, the wireless device 120 may be configured to use one or more variables defined in the second RAT. Thus, the wireless device 120 may be configured to use the one or more variables defined in the second RAT as input in calculating the security token for the second RAT.

In some embodiments, e.g. in some second exemplifying embodiments, the wireless device 120 is configured to determined the updated version of the one or more parameters of the second set of parameters by converting the one or more parameters of the second set of parameters to a format corresponding to the format of the one or more parameters of the first set of parameters, e.g. of the first RAT. The wireless device 120 may be configured to perform this conversion by performing one or more out of:
mapping, recalculating, or truncating the one or more parameters of the second set of parameters to a shortened bit string when the first RAT is LTE and the second RAT is NR; and
mapping, recalculating, or or padding the one or more parameters of the second set of parameters to an extended bit string when the first RAT is NR and the second RAT is LTE. , Further, the wireless device 120 may be configured to use one or more variables defined in the first RAT as input in calculating the security token for the first RAT.

Thus, the wireless device 120 may be configured to convert the one or more parameters of the first set of parameters having a format of the first RAT into a format of the second RAT, and to convert the one or more parameters of the second set of parameters having a format of the second RAT into a format of the first RAT.

In some embodiments, e.g. in some third exemplifying embodiments, the wireless device 120 is configured to create and/or use a new variable comprising the one or more parameters of the first set of parameters in the format of the first RAT and comprising the one or more parameters of the second set of parameters in the format of the second RAT. The new variable may comprise parameters having formats of more than one RAT. For example, this relates to some third exemplifying embodiments. When a reference is made to a new variable in this disclosure it should be understood to refer to a variable that is new in relation to the variables defined in the current standard, and which variable may comprise parameters having a format of two or more different RATs.

In some embodiments, e.g. in some fourth exemplifying embodiments, the wireless device 120 is configured to create and/or use a new variable or extending an existing variable to comprise the one or more parameters of the first set of parameters and the one or more parameters of the second set of parameters in both the format of the first RAT and in the format of the second RAT. In other words, the new variable may be an extension of an existing variable. The new variable may comprise parameters of only one format as in the legacy scenario or parameters of two or more formats according to embodiments disclosed herein.

In some embodiments, e.g. in some fifth exemplifying embodiments, the wireless device 120 is configured to extend and/or use definition of existing variables to use one or more values, e.g. predefined values, in the second RAT format for the one or more parameters of the first set of parameters. In other words, the wireless device 120 may be configured to determine the updated version of the one or more parameters of the first set of parameters or the updated version of the one or more parameters of the second set of parameters, by extending definition of existing variables to use one or more values in the second RAT format in place of the one or more parameters of the frist set of parameters.

Those skilled in the art will also appreciate that the units in the wireless device 120,122 described above may refer to a combination of analog and digital circuits, and/or one or more processors configured with software and/or firmware, e.g. stored in the wireless device 120, 122, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a System-on-a-Chip (SoC).

The wireless device 120,122 may comprise **an input and output interface 707** configured to communicate with one or more network nodes, e.g. with the first and second radio network nodes 110,112 and the location server 132. The input and output interface may comprise a wireless receiver (not shown) and a wireless transmitter (not shown).

The embodiments herein may be implemented through a respective processor or one or more processors, such as the **processor 708** of a processing circuitry in wireless device 120,122 depicted in Figure 7, together with respective **computer program code 710** for performing the functions and actions of the embodiments herein. The program code mentioned above may also be provided as a computer program product, for instance in the form of a **data carrier 711** carrying the computer program code 710 for performing the embodiments herein when being loaded into the wireless device 120,122. One such carrier may be in the form of a CD ROM disc. It is however feasible with other data carriers such as a memory stick. The computer program code may furthermore be provided as pure program code on a server and downloaded to the wireless device 120,122. These embodiments are not according to the invention as defined in the claims and are present for illustration purposes only.

The wireless device 120,122 may further comprise a **memory 709** comprising one or more memory units. The memory comprises instructions executable by the processor in the wireless device 120.

The memory is arranged to be used to store e.g. data, configurations, and applications to perform the methods herein when being executed in the wireless device 120,122.

Some embodiments of the wireless device 120,122 may comprise:
a radio circuitry configured to determine/receive first and second sets of parameters according to the determined by a processing unit, and to transmit resume request;
a storage, configured to store first and second sets of parameters;
the processing unit configured to determine a security token based on first and second sets of parameters.

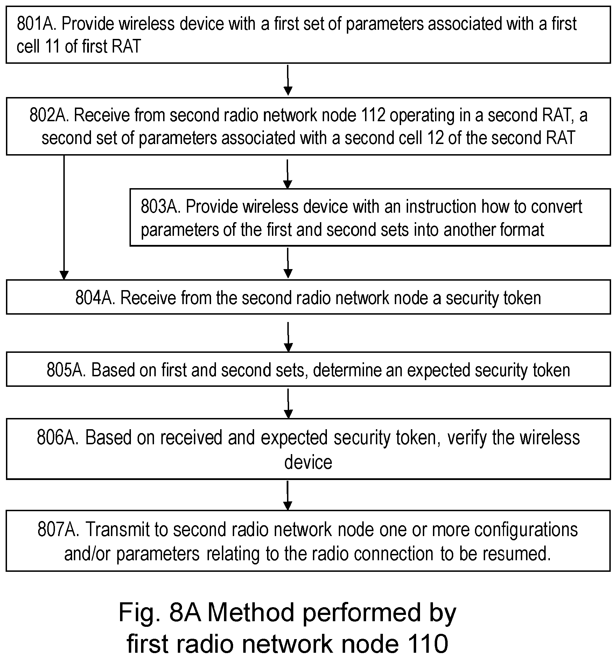

Example embodiments of a flowchart depicting embodiments of **a method performed by the first radio network node 110** for assisting a wireless device 120,122 in resuming a radio connection in a wireless communications network 100 is depicted in **Figure 8A** and will be described more in detail in the following. As previously mentioned the wireless communications network 100 comprises a first RAT and a second RAT being different from the first RAT. The wireless device 120 operates in a first cell 11 served by the first radio network node 110 operating in the first RAT. The method may comprise one or more of the following actions which actions may be taken in any suitable order. Further, it should be understood that one or more actions may be optional and that actions may be combined.

In **Action 801A,** the first radio network node 110 provides the wireless device 120,122 with a first set of parameters associated with a first cell 11 of the first RAT. The first set of parameters may comprise the C-RNTI or the I-RNTI identifying the wireless devices and the PCI identifying the first cell 11.

In **Action 802A,** the first radio network node 110 receives from the second radio network node 112 operating in the second RAT, a second set of parameters associated with a second cell 12 of the second RAT. The second set of parameters may comprise the Cell ID or the PCI identifying the second cell 12.

In **Action 803A,** the first radio network node 110 receives from the second radio network node 112 a security token. The security token is received by the second radio network node 112 in a resume request message from the wireless device 120 when a conection with the first radio network node 120 has been suspended.

In **Action 804A,** the first radio network node 110 determines an expected security token based on the received first and second sets of parameters.

In some embodiments, the first radio network node 110 determines an updated version of one or more parameters of the first set of parameters or an updated version of one or more parameters of the second set of parameters. In such embodiments, the first radio network node 110 determines the security token based on at least one out of the first set of parameters and the updated version of the one or more parameters of the first set of parameters, and based on at least one out of the second set of parameters and the updated version of the one or more parameters of the second set of parameters.

In some first exemplifying embodiments, the first radio network node 110 determines the updated version of the one or more parameters of the first set of parameters by converting the one or more parameters of the first set of parameters to a format corresponding to the format of the one or more parameters of the second RAT by performing one or more out of:
mapping, recalculating or truncating the one or more parameters of the first set of parameters to a shortened bit string when the first RAT is 5G New Radio, NR, technology and the second RAT is Long Term Evolution, LTE, technology, and
mapping, recalculating, or padding the one or more parameters of the first set of parameters to an extended bit string when the first RAT is LTE and the second RAT is NR; and

Further, in some first exemplifying embodiment, the first radio network node 110 determines the security token by using the converted one or more parameters of the first set of parameters in one or more variables defined in the second RAT as input in calculation of the security token for the second RAT.

In some second exemplifying embodiments, the first radio network node 110 determines updated version of the one or more parameters of the second set of parameters by converting the one or more parameters of the second set of parameters to a format corresponding to the format of the one or more parameters of the first set of parameters by performing one or more out of:
mapping, recalculating or truncating the one or more parameters of the second set of parameters to a shortened bit string when the first RAT is LTE technology and the second RAT is NR technology, and
mapping, recalculating, or padding the one or more parameters of the second set of parameters to an extended bit string when the first RAT is NR and the second RAT is LTE.

Further, in some second exemplifying embodiments, the radio network node 110 determines the security token by using the converted one or more parameters of the second set of parameters in one or more variables defined in the first RAT as input in calculation of the security token for the first RAT.

In some third exemplifying embodiments, the first radio network node 110 creates a new variable comprising the one or more parameters of the first set of parameters in the format of the first RAT and comprising the one or more parameters of the second set of parameters in the format of the second RAT.

In some fourth exemplifying embodiments, the new variable is an extension of an existing variable.

Further, in some third and fourth embodiments, the first radio network node 110 determines the security token using the new variable as input in calculation of the security token for the second RAT.

In some fifth exemplifying embodiments, the first radio network node 110 determines the updated version of the one or more parameters of the first set of parameters or the updated version of the one or more parameters of the second set of parameters by extending definition of existing variables to use one or more values in the second RAT format in place of the one or more parameters of the first set of parameters.

In **Action 805A,** the first radio network node 110 verifies an identity of the wireless device 120,122 based on the received security token and the determined expected security token.

In **Action 806A,** e.g. when the wireless device 120 is verified as valid, the first radio network node 110 transmits to the second radio network node 112 one or more configurations and/or parameters relating to the radio connection to be resumed.

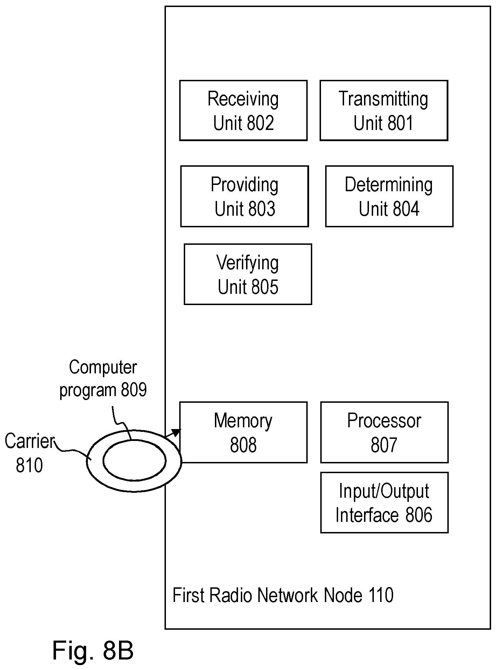

To perform the method actions e.g. for for assisting a wireless device 120,122 in resuming a radio connection in a wireless communications network 100, the first radio network node 110 may comprise the arrangement depicted in **Figure 8B****.** The first radio network node 110 may e.g. comprise a **transmitting unit 801, a receiving unit 802, a providing unit 803, a determining unit 804,** and **a verifying unit 805.** The first radio network node 110 is configured to perform, by means of the one or more units, one or more of the actions performed by the first radio network node 110 and described herein.

The first radio network node 110 is configured to transmit, e.g. by means of the transmitting unit 801, a signal, message or information to one or more nodes operating in the communications network 100. The transmitting unit 801 may be implemented by or arranged in communication with **a processor 807** of the first radio network node 110. The processor 807 will be described in more detail below.

The first radio network node 110 is configured to transmit to the second radio network node 112 one or more configurations and/or parameters relating to the radio connection to be resumed when the wireless device 120 is verified as valid. In other words, the first radio network node 110 is configured to transmit the one or more configurations and/or parameters, such as UE contexts, to the second radio network node 112 when a security token determined by the first radio network node 110 and a security token received from the second radio network node 112 verify the wireless device 120 as valid.

The first radio network node 110 is configured to receive, e.g. by means of the receiving unit 802, a signal, message or information from one or more nodes operating in the communications network 100. The receiving unit 802 may be implemented by or arranged in communication with the processor 807 of the first radio network node 110.

The first radio network node 110 is configured to receive, from the second radio network node 112 operating in the second RAT, a second set of parameters associated with a second cell 12 of the second RAT.

Further, the first radio network node 110 is configured to receive from the second radio network node 112 a security token.

The first radio network node 110 may be configured to provide, e.g. by means of the providing unit 803, the wireless device 120,122 with a first set of parameters associated with a first cell 11 of the first RAT. The providing unit 803 may be implemented by or arranged in communication with the processor 807 of the first radio network node 110.

The first radio network node 110 is configured to determine, e.g. by means of the determining unit 804, an expected security token based on the received first and second sets of parameters. The determining unit 804 may be implemented by or arranged in communication with the processor 807 of the first radio network node 110.

As described herein, the first radio network node 110 is configured to determine the expected security token in the same way as the wireless device 120 determines the security token.

In some embodiments, the first radio network node 110 is configured to determine an updated version of one or more parameters of the first set of parameters or an updated version of one or more parameters of the second set of parameters. In such embodiments, the first radio network node 110 is configured to determine the security token based on at least one out of the first set of parameters and the updated version of the one or more parameters of the first set of parameters, and based on at least one out of the second set of parameters and the updated version of the one or more parameters of the second set of parameters.

In some first exemplifying embodiments, the first radio network node 110 is configured to determine the updated version of the one or more parameters of the first set of parameters by converting the one or more parameters of the first set of parameters to a format corresponding to the format of the one or more parameters of the second RAT by being configured to perform one or more out of:
mapping, recalculating or truncating the one or more parameters of the first set of parameters to a shortened bit string when the first RAT is 5G New Radio, NR, technology and the second RAT is Long Term Evolution, LTE, technology, and
mapping, recalculating, or padding the one or more parameters of the first set of parameters to an extended bit string when the first RAT is LTE and the second RAT is NR; and

Further, in some first exemplifying embodiment, the first radio network node 110 is configured to determine the security token by using the converted one or more parameters of the first set of parameters in one or more variables defined in the second RAT as input in calculation of the security token for the second RAT.

In some second exemplifying embodiments, the first radio network node 110 is configured to determine updated version of the one or more parameters of the second set of parameters by converting the one or more parameters of the second set of parameters to a format corresponding to the format of the one or more parameters of the first set of parameters by being configured to perform one or more out of:
mapping, recalculating or truncating the one or more parameters of the second set of parameters to a shortened bit string when the first RAT is LTE technology and the second RAT is NR technology, and
mapping, recalculating, or padding the one or more parameters of the second set of parameters to an extended bit string when the first RAT is NR and the second RAT is LTE.

Further, in some second exemplifying embodiments, the radio network node 110 is configured to determine the security token by using the converted one or more parameters of the second set of parameters in one or more variables defined in the first RAT as input in calculation of the security token for the first RAT.

In some third exemplifying embodiments, the first radio network node 110 is configured to create a new variable comprising the one or more parameters of the first set of parameters in the format of the first RAT and comprising the one or more parameters of the second set of parameters in the format of the second RAT.

In some fourth exemplifying embodiments, the new variable is an extension of an existing variable.

Further, in some third and fourth embodiments, the first radio network node 110 is configured to determine the security token using the new variable as input in calculation of the security token for the second RAT.

In some fifth exemplifying embodiments, the first radio network node 110 is configured to determine the updated version of the one or more parameters of the first set of parameters or the updated version of the one or more parameters of the second set of parameters by extending definition of existing variables to use one or more values in the second RAT format in place of the one or more parameters of the first set of parameters.

The first radio network node 110 may be configured to verify, e.g. by means of the verifying unit 805, an identity of the wireless device 120. The verifying unit 805 may be implemented by or arranged in communication with the processor 807 of the first radio network node 110.

The first radio network node 110 may be configured to verify the identity of the wireless device 120,122 based on the received security token and the determined expected security token.

Those skilled in the art will also appreciate that the units in the first radio network node 110 described above may refer to a combination of analog and digital circuits, and/or one or more processors configured with software and/or firmware, e.g. stored in the network node 110 that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a System-on-a-Chip (SoC).

The radio network node 110 may comprise **an input and output interface 806** configured to communicate with one or more out of the wireless device 120, 122, the second radio network node 112, the network node 130, and the location server 132. The input and output interface may comprise a wireless receiver (not shown) and a wireless transmitter (not shown).

The embodiments herein may be implemented through a respective processor or one or more processors, such as the **processor 807** of a processing circuitry in network node 110 depicted in Figure 8B, together with respective computer program code for performing functions and actions of the embodiments herein. The program code mentioned above may also be provided as a computer program product, for instance in the form of a data carrier carrying computer program code for performing the embodiments herein when being loaded into the network node 110. One such carrier may be in the form of a CD ROM disc. It is however feasible with other data carriers such as a memory stick. The computer program code may furthermore be provided as pure program code on a server and downloaded to the network node 110. These embodiments are not according to the invention as defined in the claims and are present for illustration purposes only.

The network node 110 may further comprise a **memory 808** comprising one or more memory units. The memory comprises instructions executable by the processor in the network node 110.

The memory is arranged to be used to store e.g. data, configurations, and applications to perform the methods herein when being executed in the network node 110. For example, the memory may comprise the buffer having the buffer size referred to herein.

Some embodiments of the first radio network node 110 may comprise:
a communication circuitry configured to provide wireless device with first set of parameters, possibly also with an instruction how to update parameters, receive a security token from second radio network node, and to transmit configurations
a storage configured to store set of parameters and security tokens,
a processing unit configured to determine an expected security token and
a radio circuitry configured to transmit configurations to second radio network node.

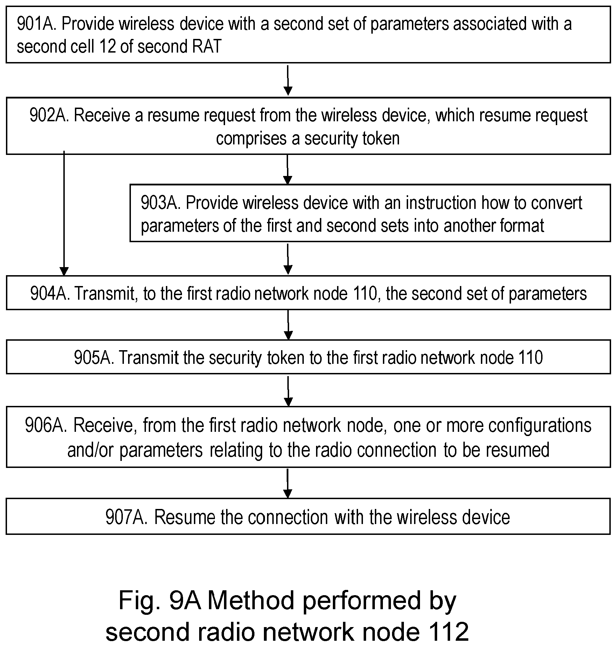

Example embodiments of a flowchart depicting embodiments of **a method performed by the second radio network node 112** for assisting a wireless device 120,122 in resuming a radio connection in a wireless communications network 100 is depicted in **Figure 9A** and will be described more in detail in the following. As previously mentioned the wireless communications network 100 comprises a first RAT and a second RAT. The wireless device 120 operates in a first cell 11 served by the first radio network node 110 operating in the first RAT The method may comprise one or more of the following actions which actions may be taken in any suitable order. Further, it should be understood that one or more actions may be optional and that actions may be combined.

In **Action 901A**, the second radio network node 112 provides the wireless device 120 with a second set of parameters associated with a second cell 12 of the second RAT. The second cell 12 is served by the second radio network node 112 operating in the second RAT.

In **Action 902A,** the second radio network node 112 receives a resume request from the wireless device 120, which resume request comprises a security token.

In **Action 903A,** the second radio network node 112 may transmit, to the wireless device 120,122 an instruction how to convert parameters of the first and second sets of parameters into another format.

In **Action 904A**, the second radio network node 112 transmits, to the first radio network node 110, the second set of parameters.

In **Action 905A,** the second radio network node 112 transmits the received security token to the first radio network node 110.

These parameters, e.g. the second set of parameters and/or the received security token, are transmitted to the first node in a message requesting the configurations and/or parameters mentioned in step 806A above. For example, the second radio network node 112 may transmit the received security token to the first radio network node 110, in a message requesting the parameters and/or configurations in Action 806A above, which parameters and/or configurations are to be used when resume the connection with the wireless device 120.

In **Action 906A,** the second radio network node 112 receives, from the first radio network node 110, one or more configurations and/or parameters relating to the radio connection to be resumed.

In Action **907A,** the second radio network node 112 resumes the connection with the wireless device 120.

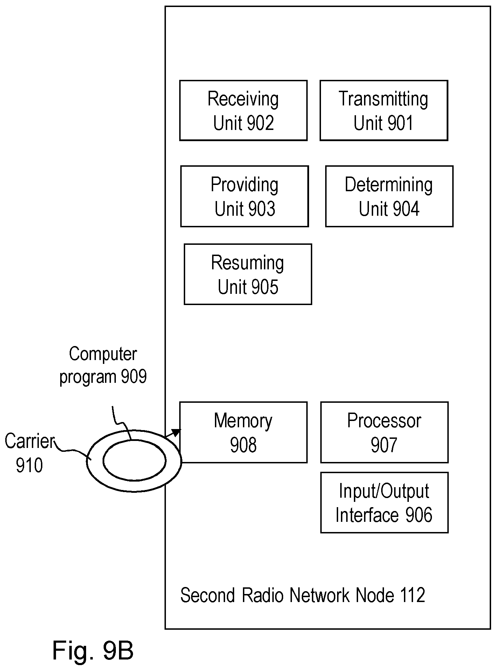

To perform the method actions e.g. for for assisting a wireless device 120,122 in resuming a radio connection in a wireless communications network 100, the second radio network node 112 may comprise the arrangement depicted in **Figure 9B****.** The second radio network node 112 may e.g. comprise a **transmitting unit 901, a receiving unit 902, a providing unit 903, a determining unit 904,** and **a resuming unit** 905. The second radio network node 112 is configured to perform, by means of the one or more units, one or more of the actions performed by the second radio network node 112 and described herein

Those skilled in the art will also appreciate that the units in the second radio network node 112 described above may refer to a combination of analog and digital circuits, and/or one or more processors configured with software and/or firmware, e.g. stored in the network node 112 that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a System-on-a-Chip (SoC).

The second radio network node 112 may comprise **an input and output interface 906** configured to communicate with one or more out of the wireless device 120, 122, the first radio network node 110, the network node 130, and the location server 132. The input and output interface may comprise a wireless receiver (not shown) and a wireless transmitter (not shown).

The embodiments herein may be implemented through a respective processor or one or more processors, such as the **processor 907** of a processing circuitry in network node 112 depicted in Figure 9B, together with respective computer program code for performing functions and actions of the embodiments herein. The program code mentioned above may also be provided as a computer program product, for instance in the form of a data carrier carrying computer program code for performing the embodiments herein when being loaded into the network node 112. One such carrier may be in the form of a CD ROM disc. It is however feasible with other data carriers such as a memory stick. The computer program code may furthermore be provided as pure program code on a server and downloaded to the network node 112.

The network node 112 may further comprise a **memory 908** comprising one or more memory units. The memory comprises instructions executable by the processor in the network node 112.

The memory is arranged to be used to store e.g. data, configurations, and applications to perform the methods herein when being executed in the network node 112. For example, the memory may comprise the buffer having the buffer size referred to herein.

Some embodiments of the second radio network node 112 may comprise:
a communication circuitry configured to provide the wireless device with second set of parameters, possibly also with an instruction how to update parameters, receive a security token from wireless device and to transmit the security token to the first radio network node, and to receive one or more configurations and/or parameters to resume a connection with the wireless device.
a storage configured to store set of parameters and security tokens,
a processing unit and
a radio circuitry configured to receive configurations from the first radio network node and to resume radio connection with the wireless device.

In some embodiments, a respective **computer program 809, 909** comprises instructions, which when executed by the respective at least one processor, cause the at least one processor of the network node 110,112 to perform one or more of the actions described herein.

In some embodiments, a respective **computer program 710** comprises instructions, which when executed by the respective at least one processor, cause the at least one processor of the wireless device 120,122 to perform the actions described herein.

In some embodiments, a respective **carrier 711, 810, 910** comprises the respective computer program 710, 809, 909, wherein the carrier is one of an electronic signal, an optical signal, an electromagnetic signal, a magnetic signal, an electric signal, a radio signal, a microwave signal, or a computer-readable storage medium.

### Below a more detailed description will follow.

Embodiments disclosed herein may be separated into different parts which will be described in more detail below.

### 2.1 Introduction

The following alternative sub-mechanisms are proposed, mainly concerning the way the input parameters are determined. Thus, the following sections relates to the determination of the input parameters used in calculating the security token.

It should be understood that a reference to the UE in this disclosure is a reference to a wireless device 120,122, a reference to a first cell or a source cell is a reference to the first cell 11 served by the first radio network node 110, and a reference to a second cell or a target cell is a reference to the second cell 12 served by the second radio network node 112. Thus, the first radio network node 110 may also be referred to as a source radio network node or just a source network node, and the second radio network node as a target radio network node or just a target network node. Furthermore, a reference to a source eNB or source gNB is a reference to the first radio network node 110 and a reference to a target eNB or target gNB is a reference to the second radio network node 112.

### Some first exemplifying embodiments.

In this case the UE, e.g. the wireless device 120,122, converts source related parameters associated to a first RAT, e.g. the first set of parameters described above, to equivalent or mapped input parameters for the token calculation on the second RAT, before resuming the RRC connection. In other words, the wireless device 120 converts the one or more parameters of the first set of parameters to a format corresponding to the format of the one or more parameters of the second set of parameters. As previously described, the conversion may be performed by performing one or more out of mapping, re-calculating, truncating or padding of the one or more parameters of the first set of parameters as described above. This may be implemented in the specifications by describing, e.g. in field descriptions, the adaptation in terms of a UE variable in the second RAT for the case when the UE has been suspended in another first RAT, e.g. updating the description of parameters in the UE variable VarResumeMAC-Input or Short MAC-I or similar UE variable of the second RAT. In this case, the parameters like the C-RNTI and Physical Cell ID (PCI) are taken from the source RAT and stored along with the Cell identity of the target RAT into the UE variable to calculate the security token, i.e., a Resume MAC-I. To use the source PCI in the target RAT variable, the method proposes some embodiments wherein the UE uses either padded (if target RAT is NR) or truncated (if target RAT is LTE) input parameters with different number of bits in different RATs so that the same equation and/or function per RAT for the security token calculation may be used. Padding may be performed with a predefined sequence of 0's and/or 1's in order to extend the bit string of parameters of the first set of parameters, while truncation may involve removing some bits, e.g. one or more Most Significant Bits (MSB) or Least Significant Bits (LSB), from the information element and thereby shorten the bit string of parameters of the first set of parameters. However it should be understood that other mapping or re-calculation of the one or more parameters of the first set of parameters may be performed in order to obtain a bit string of the first set of parameters that matches the bit string of corresponding parameters of the other RAT. Thereby, the same equation and/or function per RAT for the security token calculation may be used. The calculated security token, e.g. the short MAC-I, is then transmitted in the RRC Resume Request message to the second radio network node 112. Corresponding procedures are performed in the network node, e.g. in the first radio network node 110, to calculate the Resume XMAC-I used to verify the received Resume MAC-I and thereby also to verify the wireless device 120.

An advantage with some first exemplifying embodiments is that there is no need to truncate input parameters like the Cell ID parameter which makes the Cell ID unique, thereby avoiding the risk that different target cells would generate the same security token, e.g. the same Short MAC-I.

Another advantage is that one would not need to design an additional MAC-I calculation having source inputs with different number of bits and consequently having to implement this additional function in the UE and in the network for the case the UE suspends in one RAT that is not the target RAT.

### Some second exemplifying embodiments.

In some second embodiments, the source coding for the input parameter is used for calculating the security token, e.g. the Resume MAC-I. In this case the UE converts target related parameters associated to a second RAT to equivalent or mapped input parameters for the token calculation of the second RAT i.e. to be used in the VarResumeMAC-Input (or similar parameter) of the first RAT. In other words, the wireless device 120 converts the one or more parameters of the second set of parameters to a format corresponding to the format of the one or more parameters of the first set of parameters. As previously described, the conversion may be performed by performing one or more out of mapping, re-calculating, truncating or padding of the one or more parameters of the first set of parameters as described above. As previously described, the conversion may be performed by performing one or more out of mapping, re-calculating, truncating or padding of the one or more parameters of the second set of parameters as described above. More concretely, the parameter Cell Identity which is the target cell ID is used along with the C-RNTI and Physical Cell ID (PCI) of the source RAT into the parameter, e.g. into the VarShortResumeMAC-Input, VarShortINACTIVE-MAC-I, or VarResumeMAC-Input, or similar parameter, to calculate the Resume MAC-I, e.g. the shortResumeMAC-I or ResumeMAC-I. To use the Cell ID in the source RAT parameters, padding (LTE to NR) or truncation (NR to LTE) may be used. Padding may be performed with a predefined sequence of 0's and/or 1's, or calculating a sequence of 0's and 1's based on information known to both the UE and the network (e.g. the rest of the Cell ID, the Resume causes, the I-RNTI, a constant value, etc.) in order to extend the bit string of parameters of the second set of parameters, while truncation may involve removing some bits, e.g. MSB or LSB, from the information element and thereby shorten the bit string of parameters of the second set of parameters. However it should be understood that other mapping or re-calculation of the one or more parameters of the first set of parameters may be performed in order to obtain a bit string of the first set of parameters that matches the bit string of corresponding parameters of the other RAT. Thereby, the same equation and/or function per RAT for the security token calculation may be used. For example, the truncation may also be performed by calculating a bit string with the shorter length using at least the full length of the parameter, e.g. Cell ID of the target cell, as input. Other parameters used as input to calculate the shorter value may be e.g. a constant, Resume cause, the I-RNTI. The short MAC-I, i.e. the security token, is then transmitted in the RRC Resume Request message e.g. to the second radio network node 112. Part of that solution may comprise the introduction of an additional input parameter, sort of an inter-RAT discriminator so that the resume MAC-I computed based on padded or truncated parameters will not be the same as another intra-RAT version of that Resume MAC-I with same values, just as coincidence. Corresponding procedures are performed in the network node calculating the Resume XMAC-I used to verify the received Resume MAC-I.

An advantage with some second exemplifying embodiments is that the calculation of the security token, e.g. the Resume MAC-I or similar checksum, is done using the source format, which most likely limit the impact on the source node, i.e. on the first radio network node 110, being the node in the network which verifies the security token, i.e. the Resume MAC-I, provided by the UE, i.e. the wireless device 120.

### Some third exemplifying embodiments.

In some embodiments one or more new input variables are created in both RATs, e.g. in both LTE and NR, which may take the parameters C-RNTI and PCI from the source RAT and Cell ID of the target RAT and use this to calculate a security token, e.g. a MAC-I, in the target RAT. This variable may either be defined in the specifications of the source RAT (solution 3.1) or in the specifications of the target RAT (solution 3.2).

As previously described, the wireless device 120 may create a new variable comprising one or more parameters of the first set of parameters in the format of the first RAT and comprising one or more parameters of the second set of parameters in the format of the second RAT. Further, the wireless device 120 may use the new variable as input in calculation of the security token for the second RAT.

Advantage with some third exemplifying embodiments is that no information is lost (truncated) in the security token calculation, e.g. the Resume MAC-I calculation, which reduces the (already small) risk of the same Resume MAC-I being generated for a UE attempting to Resume in more than one cell.

### Some fourth exemplifying embodiments.

In some embodiments, one or more new input variables are created in only one of the RATs (i.e. only in LTE or only in NR) or in both RATs. This new IE may be an extension of an existing IE, using a CHOICE structure to be used for both inter-RAT suspend/resume as well as intra-RAT suspend/resume. In solution 4.1 both the VarShortINACTIVE-MAC-Input or similar in LTE and VarResumeMAC-Input or similar in NR are updated or introduced. These variables are used whenever the target RAT matches the specification, i.e. the VarShortINACTIVE-MAC-Input is used if target RAT is LTE regardless of whether the source RAT is LTE or NR and the VarResumeMAC-Input is used if the target RAT is NR regardless of whether the source RAT is LTE or NR. In solution 4.2, only the variable VarShortINACTIVE-MAC-Input or similar in LTE is updated and is used for suspend from LTE and resume to LTE, suspend from LTE and resume to NR, or suspend from NR and resume to LTE. In case of suspend from NR and resume to NR, the variables defined in the NR specification is used, e.g. the VarResumeMAC-Input, or similar. In solution 4.3, only the variable VarResumeMAC-Input or similar in NR is updated and is used for suspend from NR and resume to NR, suspend from LTE and resume to NR, or suspend from NR and resume to LTE. In case of suspend from LTE and resume to LTE, the variable VarSHortINACTIVE-MAC-Input or similar is used.

An advantage with some fourth exemplifying embodiments is that no information is lost, e.g. truncated, in the security token calculation, i.e. the Short MAC-I calculation, which reduces the (already small) risk of the same Short MAC-I being generate for a UE attempting to Resume in more than one cell.

### Some fifth exemplifying embodiments.

In some embodiments, the existing variables are updated to use dummy variables in place of the source parameters, e.g. in place of one or more of parameters of the first set of parameters. For instance, the PCI may use a value outside the range of the defined identities compared to normal intra-RAT suspend/Resume, e.g. if the UE suspend in LTE and resume in NR, the PCI may be set to e.g. 1023 (maximum PCI is 1007, but 10 bit coding allows values up to 1023) and if UE is suspended in NR and resume in LTE, the PCI may be set to e.g. 511 (maximum PCI is 503 but 8 bi coding allows value up to 512). As described above, the wireless device 120 may extend definition of existing variables to use one or more values in the second RAT format in place of the one or more parameters of the first set of parameters.

An advantage with some fifth exemplifying embodiments is that no new messages need to be introduced.

In the previous description, the term Cell Identity refers to any type of cell identifier associated to the target cell, typically broadcasted by system information, e.g., PCI, cell global identity, etc.

In this disclosure, the first RAT may either be LTE or NR. Also, the second RAT may either be LTE or NR. However, this does not preclude the application of embodiments disclosed herein between other RATs employing similar procedures to authenticate the UEs.

The method also comprises mechanisms in a source network node, e.g. the first adio network node 110, associated to the first RAT, and in a target network node, e.g. the second radio network node 112, associated to the second RAT, the method comprises one or more out of:
- The target network node of the second RAT, e.g. the second radio network node 112, upon receiving a resume request from the UE and identifying that request as an inter-RAT resume procedure (e.g. by the identifier that contains network related information), triggering an inter-RAT fetching of the UE AS context by sending some kind of context request message to a source network node of the first RAT and including in that request message target cell parameters such as a target identity of that second RAT (and possibly other parameters e.g. for replay attack avoidance and/or protocol discriminator) where the UE is trying to resume where the parameter(s) in target (e.g. a cell identity) has possibly a different number of bits compared to the parameter in the first RAT).
- The source network node of the first RAT, e.g. the first radio network node 110, receiving the context fetching request message including one or multiple inter-RAT target cell parameter(s) as described above and, using these parameters and other source parameters (from the AS UE context associated to that UE, such as the source C-RNTI and the source PCI), computing the Resume MAC-I so the UE may be verified as a valid UE. The way the Resume MAC-I is computed, using source parameters of a first RAT and also target parameters of the second RAT follows the same rule the UE follows i.e. according to any of the described sub-methods in the embodiments described herein. Then, if the UE is verified, the source network node provides the UE AS context to the target network node of the second RAT;
- The target network node of the second RAT, upon receiving a message with the AS context for that UE, may decide to Resume, Reject, Setup a new RRC Connection or Release the connection (2-step procedure Resume Request followed by Release, with or without suspend indication).

### 2.2 Disclaimers

A scenario that embodiments disclosed herein describe is the one where the UE in an RRC_CONNECTED state in one RAT, i.e. a source RAT, is suspended, i.e. moved to an RRC_INACTIVE state, and upon performing cell reselection or cell selection to another RAT, i.e. a target RAT, remains in the RRC_INACTIVE state. When the UE tries to resume, it needs to handle the fact that the security token, e.g. the Resume MAC-I, in the target RAT has different inputs in order to compute the security token as compared to the inputs used to compute the security token in the source RAT. This scenario comprises the case where the UE tries to resume and enters the RRC_CONNECTED state in the target RAT being different from the source RAT, but it also comprises a scenario where the UE resumes due to a RAN Area Update, i.e. the UE does not enter the RRC_CONNECTED state but receives an RRC Release with suspend configuration, remaining in the RRC_INACTIVE state. The RAN Area Update may sometimes be referred to as a RAN Notification Area Update (RNA Update).

However, the methods described herein are applicable to any other scenario where there are differences between the input parameters and overall procedure handling between the source RAT (where the UE is suspended, i.e., moved to the RRC_INACTIVE state) and the target RAT (i.e. where the UE tries to resume). For example, this may be the case if the source RAT and the target RAT have different software version, e.g. in case one has been upgraded but not the other, if the source RAT and the target RAT are from different releases, etc.

Also, in most cases the inter-RAT mobility between the LTE and the NR is described. However, it should be understood that the source and target RATs may be any RATs where the handling of security token calculation and/or input parameters for the calculation differ.

Also, herein the cases where two RATs, i.e. the source RAT and the target RAT, are connected to the same core network are described. In particular, embodiments herein relate to NR and LTE connected to a 5GC. However, the embodiments described herein may work in any other context even if the RATs are not connected to the same core network CN, as long as context fetching and security algorithm harmonization are supported across different CNs.

It is also important to note that some embodiments describes the adaptation method using as examples the existing input parameters for the token calculation as described in TS 36.331 and TS 38.331. However, the embodiments disclosed are applicable to any parameters possibly introduced in the future in either of the RATs or even both e.g. new parameters like protocol discriminator and/or parameters for replay attack avoidance like radio specific parameters, or even parameters computed as a function of any of these existing parameters.

Embodiments herein are described in scenarios involving inter-RAT suspend and resume between E-UTRA and NR. However, if any other RAT would interwork (e.g. 801.11, Bluetooth, or any future RAT) with either E-UTRA or NR, and require the calculation of a security token, it should be understood that the embodiments described herein may be used to adapt the input parameters of different RATs.

Whenever in this document the terms NR messages, parameters, security token, procedures or similar are mentioned, they referred to those specified in the NR specifications, specifically the 3GPP NR RRC specification TS 38.331.

Likewise, whenever the terms LTE messages, parameters, security tokens, procedures or similar are mentioned, they refer to those specified in the E-UTRA (LTE) specifications, specifically the 3GPP E-UTRA RRC specification TS 36.331.

In the detailed description below it is shown how to calculate the security token, e.g. the ShortResumeMAC-I, and the ResumeMAC-I when resuming in another RAT. The ShortResumeMAC-I is used as an example of the E-UTRA Resume MAC-I and the ResumeMAC-I is used as an example of the NR Resume MAC-I, or more generally the security token used in the other RAT.

When a UE resumes its connection from an RRC_INACTIVE state in either LTE or NR, the UE must include a 16 bit security token, e.g. the ShortResumeMAC-I in LTE and ResumeMAC-I in NR, in the message.

Please note that in some embodiments, it is assumed that as in LTE and NR, the output number of the bits of the MAC-I is the same. However, the function may be applied to the case the number of bits in the source RAT and the number of bits in the target RAT are different too.

To derive the security token, the UE ,e.g. the wireless device 120, and the network, e.g. the first wireless device 110, uses the parameters in the VarShortResumeMAC-Input or VarShortINACTIVE-MAC-Input in LTE and the VarResumeMAC-I in NR.

### 2.3 Resume MAC-I for RRC Resume in LTE and NR

In LTE and NR, a secure checksum or hash or authentication token is used to verify the UE context in case of RRC Resume. This checksum is called ResumeMAC-I, ShortResumeMAC-I, or similarly. In this disclosure the Resume MAC-I, short MAC-I, and ShortResumeMAC-I is also referred to as the security token, and the terms may be used interchangeably. Below is a description how it is calculated using the integrity protection algorithm and key that the UE has been configured for RRC integrity protection.

### 2.3.1 ResumeMAC-I in NR

In TS 38.331 section 5.3.13.3, the ResumeMAC-I, i.e. the security token, is calculated as:
1> set the resumeMAC-I to the 16 least significant bits of the MAC-I calculated:
2> over the ASN.1 encoded as per section 8 (i.e., a multiple of 8 bits) VarResumeMAC-Input;
2> with the KRRCint key and the previously configured integrity protection algorithm; and
2> with all input bits for COUNT, BEARER and DIRECTION set to binary ones;

Where VarResumeMAC-Input is defined as:

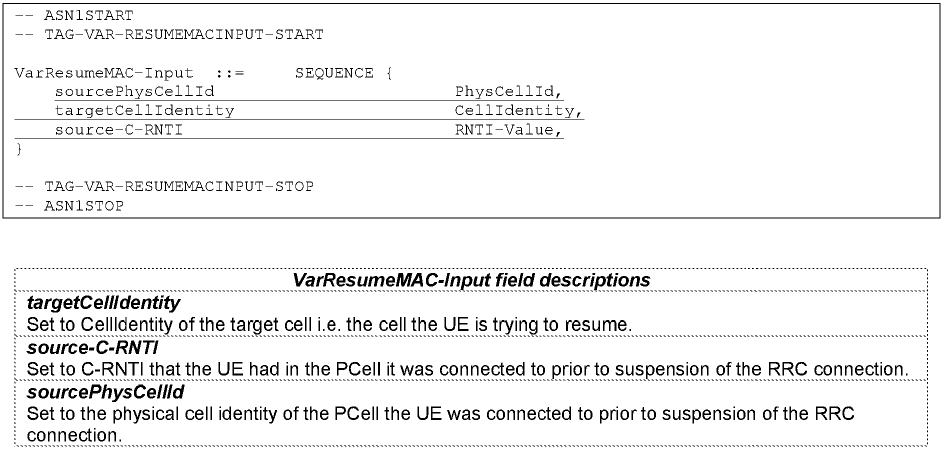

Note-1: Resume MAC-I in NR was recently updated in RAN2#103 and will not include the resumeDiscriminator as input to the calculation of the security token. Instead, a new parameter may be introduced by SA3 as a protocol discriminator, possibly with more bits, e.g. derived based on something else like the resume cause. That is still to be decided. The removal of the resumeDiscriminator was described by SA3 in S3-182500 and communicated to RAN2 in R2-1813339.
Note-2: There is also an ongoing discussion in SA3 to introduce yet another input parameter for the calculation of the security token in Resume to replay attack mitigation / prevention. That may be a C-RNTI of the target cell (like the temporary C-RNTI) or other radio related parameters of the target cell such as something derived from RACH configuration.
Note-3: Although these two new aspects added in Note-1 and Note-2 are discussed for NR, the same solution is expected to be adopted for LTE connected to 5GC, which is quite related to some embodiments.

### ShortResumeMAC-I in LTE

In LTE/EPC (TS 36.331 section 5.3.3.3a), the ShortResumeMAC-I, i.e. the security token, is calculated as:
1> set the shortResumeMAC-I to the 16 least significant bits of the MAC-I calculated:
2> over the ASN.1 encoded as per section 8 (i.e., a multiple of 8 bits) VarShortResumeMAC-Input (or VarShortResumeMAC-Input-NB in NB-IoT); with the K_{RRCint} key and the previously configured integrity protection algorithm; and
2> with all input bits for COUNT, BEARER and DIRECTION set to binary ones;

Where VarShortResumeMAC-Input is defined as:

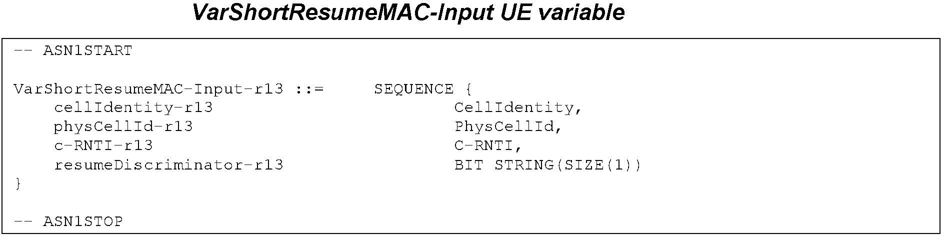

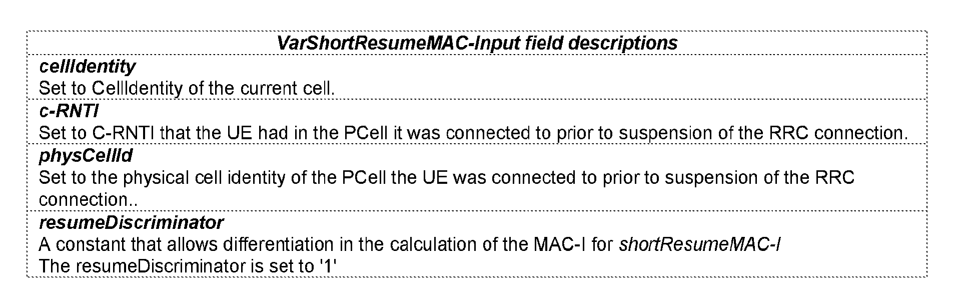

During RAN2#103, it was agreed that the input parameters used for calculating the ShortResumeMAC-l from the RRC_lNACTlVE state would not include the resume discriminator.

The new IE is defined in the running CR for LTE/5GC (R2-1811645) is defined as: VarShortINACTIVE-MAC-Input

The UE variable VarShortINACTIVE-MAC-Input specifies the input used to generate the shortResume-MAC-l during RRC Connection Resume procedure for RRC_INACTIVE.

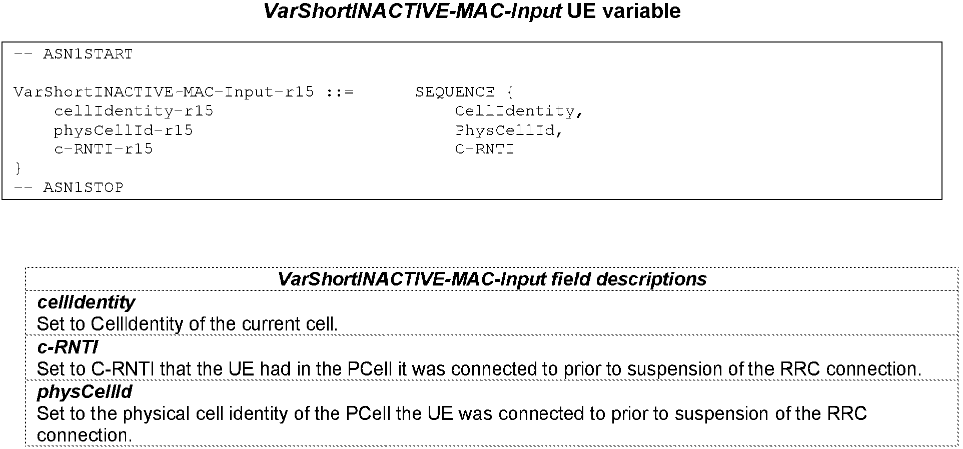

However, the procedures have not yet been updated, but may e.g. be:
1> set the shortResumeMAC-l to the 16 least significant bits of the MAC-I calculated:
2> over the ASN.1 encoded as per section 8 (i.e., a multiple of 8 bits) VarShortResumeMAC-lnput (or VarShortResumeMAC-lnput-NB in NB-loT, or VarShortINACTIVE-MAC-l from RRC INACTIVE);
2> with the KRRCint key and the previously configured integrity protection algorithm; and
with all input bits for COUNT, BEARER and DIRECTION set to binary ones;

### 2.4 Input parameters for calculation of security token in RRC Resume

The calculations of the security token to be included in the RRC Resume message use three different parameters: Physical cell ID (PCI) of the source cell, C-RNTI (Cell-Random Network Temporary Identity) of the source cell, and the Cell identity (CID) of the target cell. The following sections describe how these parameters are specified in LTE and NR.

In addition, the calculations of the security token rely on an integrity protection algorithm, which uses the parameters described as input. Since the LTE and the NR have separate configurations of the algorithms, the usage of the algorithms needs to be coordinated. In LTE the UE may be configured with the E-UTRA Integrity Protection Algorithms (EIA) EIA0-EIA3, while in NR the UE may be configured with the NR Integrity protection Algorithms (NIA) NIA0-NIA3. Currently, in Rel-15, the NR algorithms NIA0-NIA3 are identical to the corresponding E-UTRA algorithms EIA0-EIA3, however, the specifications allow introduction of separate algorithms in NR and/or LTE which may differ in future releases. If the UE was configured with an integrity protection algorithm in LTE which has an equivalent, e.g. identical, algorithm supported in NR, i.e. currently EIA0-EIA3, the UE may e.g. select the corresponding NR algorithm to calculate the MAC-I and vice versa in the other direction.

If the UE is configured with an integrity protection algorithm in the first RAT, which is not supported in the second RAT the UE could
- In one embodiment, abort the inter-RAT RRC Resume procedure, delete its AS context, transition to the RRC_IDLE state and perform a Tracking Area Update.
- In another embodiment, the UE selects a predefined integrity protection algorithm which both the first and the second RAT support (e.g. eia0/nia0, or eia3/nia3, or any of the other algorithms which are identical in LTE and NR).

### 2.4.1 PhysCellld

To calculate the short MAC-I during RRC resume, the physical cell identity of the source cell is required. Both the LTE specification (TS 36.331) and the NR specification (TS 38.331), define the LTE and NR PCIs as below.

The PCI in LTE is defined as (TS 36.331 v15.2.0, 2018-06):
- PhysCellld (LTE)

The IE PhysCellld is used to indicate the physical layer identity of the cell, as defined in TS 36.211 [21].

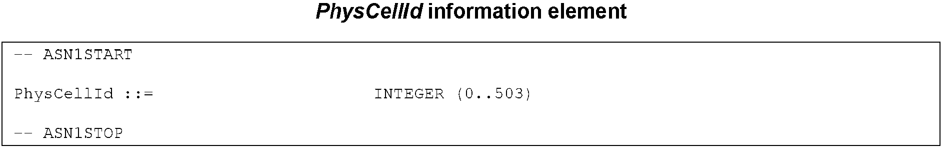

While the PCI in NR is defined as:
- PhysCellld (NR)

The PhysCellld identifies the physical cell identity (PCI).

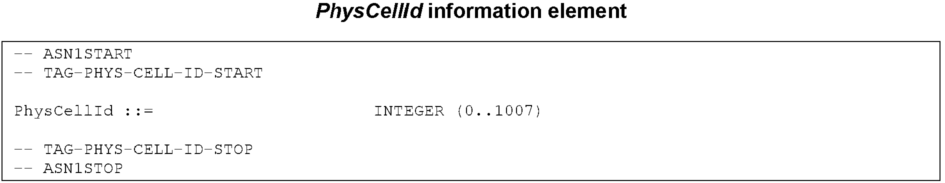

Notably, the size of the PCI differs in LTE and NR, where the LTE PCI is coded as 9 bits and the NR PCI is coded as 10 bits.

In addition, LTE also defines the NR PCI as:
- PhysCellIdNR

The IE PhysCellIdNR indicates the physical layer identity (PCI) of an NR cell.

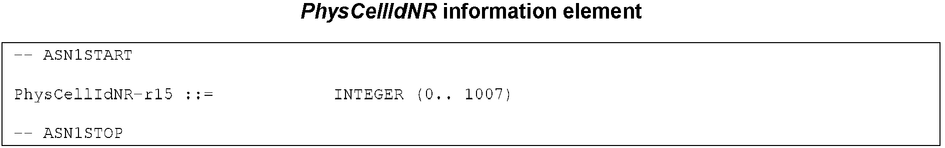

And NR defines the LTE PCI as:
- EUTRA-PhysCellld

The IE EUTRA-PhysCellld is used to indicate the physical layer identity of the cell, as defined in TS 36.211 [21].

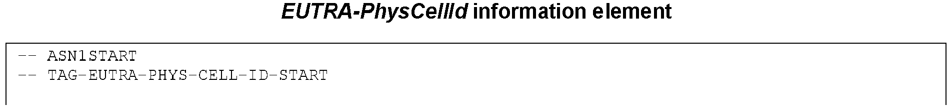

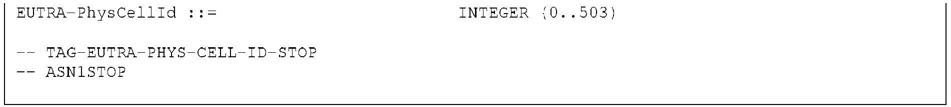

### 2.4.2 C-RNTI

Both the LTE and NR VarShortResumeMAC-Input, VarShortINACTIVE-MAC-Input, and VarResumeMAC-Input contain the source C-RNTI, to tie the calculations of the Resume MAC-I to the source cell.

The C-RNTI in LTE is defined as (TS 36.331 v15.2.0, 2018-06):

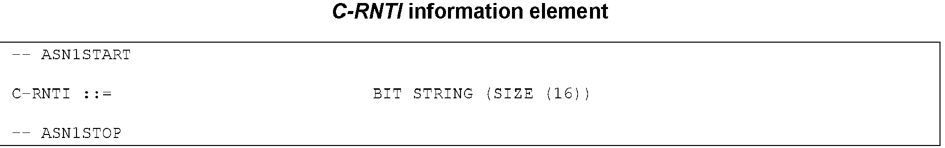

While the C-RNTI in NR is defined as RNTI-Value:

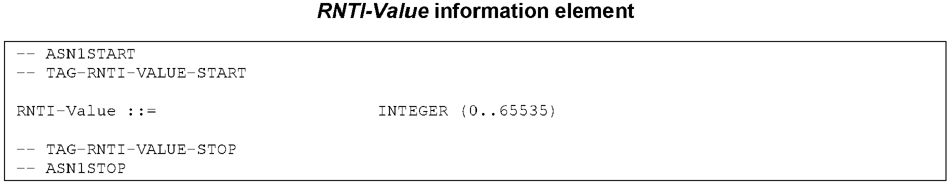

As may be noted, both the LTE and NR C-RNTI are equal in length (16 bit, the integers 0 to 65535 are coded as 16 bits as 65536 is written with 16 digits in binary form, i.e. log2(65536)=16).

Even though the LTE C-RNTI and NR C-RNTI have the same length, they are specified in separate specifications and cannot be used interchangeably.

### 2.4.3 Cell Identity

To calculate the short MAC-I during RRC resume, the cell identity of the target cell is needed. However, only the cell identity belonging to the same RAT is defined in LTE and NR.

The Cell Identity is defined in LTE as:
- Cellldentity

The IE Cellldentity is used to unambiguously identify a cell within a PLMN.

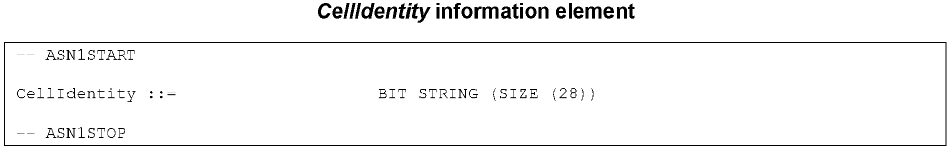

While the Cell Identity is defined in NR as:
- Cellldentity (NR)

The IE Cellldentity is used to unambiguously identify a cell within a PLMN.

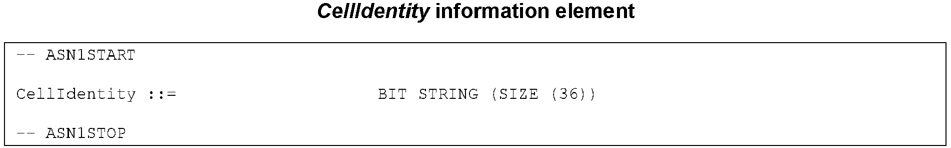

As may be noted, both the LTE and NR cell identity are defined as bit strings, however with different lengths. In LTE the Cell identity is 28 bits, and in NR the cell identity is 36 bits.

### 2.5 Some first exemplifying embodiments: Use input parameter format of the target system and convert source system parameters

In some embodiments, the definitions of the LTE VarShortResumeMAC-Input, VarShortINACTIVE-MAC-Input (or similar parameter) used when the target RAT is LTE and the NR VarResumeMAC-Input (or similar parameter) used when the target RAT is NR are extended or modified to allow parameters from another RAT.

In either direction of the inter-RAT RRC Resume procedure, the problem lies in using parameters from the source RAT in procedures of the target RAT, namely the PCI and the C-RNTI.

### 2.5.1 Suspend from LTE and resume to NR: Calculate and use NR ResumeMAC-I using LTE PCI and C-RNTI and NR Cell identity as input

If the UE, e.g. the wireless device 120, is suspended in LTE and resumes the connection in NR, the UE and network, e.g. the first and/or second radio network nodes 110, 112, would need to calculate the NR ResumeMAC-I, e.g. the security token, using the NR VarResumeMAC-Input. The VarResumeMAC-Input contain the source PCI, the source RNTI and the target Cell identity. The target Cell identity is obtained from the SystemlnformationBlockType1 (SIB1) which is broadcast by the target cell, e.g. the second cell 12.

However, the source PCI and the source RNTI were obtained in another RAT, i.e. in LTE, and have different characteristics compared to corresponding parameters in NR.

For the parameter C-RNTI, the VarResumeMAC-Input may directly convert the source LTE C-RNTI as it consists of the same number of bits as the NR C-RNTI.

To employ the LTE PCI in the calculations of the NR ResumeMAC-I, the length of the parameter must be adjusted. The simplest way to do this is to add a dummy value, e.g. a single leading '0', to the LTE PCI and use this modified value in the NR VarResumeMAC-Input, e.g. to be used as input in the calculation of the security token. Naturally any other method to increase the length of the LTE PCI with one bit is equally applicable, e.g. a single trailing '0' or '1' or adding a bit at any other place in the bit string. In other words, the bit string may be extended in any other suitable way, e.g. by mapping, recalculating, or padding as previously described. This added bit may also be calculated based on e.g. the content of the bits in the LTE PCI.

If the UE was configured with an integrity protection algorithm in LTE which is not supported in NR, e.g. by a hypothetical future EIA4, different from any algorithm in NR, the UE may either:
- Abort the resume procedure and fallback to RRC Setup, or
- Use a predefined fallback algorithm which is supported in both LTE and NR, e.g. any of the algorithms NIA0-NIA3.

The calculation of the ResumeMAC-I, i.e. the security token, is performed by both the UE, i.e. the wireless device 120, and the network, i.e. the first and/or second radio network node 110,112. The network node performing the calculation of the ResumeMAC-I may either be the target node, i.e. the second radio network node 112, which receives the RRCResumeRequest message or the source node, i.e. the first radio network node 110, which suspended the UE and stores the UE context, or another network entity.

Since the calculation of the ResumeMAC-I utilizes the security keys and the integrity protection algorithms stored in the UE context, one solution would be that the source node, i.e. the first radio network node 110, calculates the ResumeMAC-I, i.e. the security token, when it receives a context relocation request message (e.g. the RETRIEVE UE CONTEXT REQUEST message as defined in XNAP TS 38.423 v.15.0.0). This message would contain both the ResumeMAC-I, i.e. the security token, calculated by the UE, i.e. the wireless device 120, as well as the NR Cell Identity.

### RETRIEVE UE CONTEXT REQUEST

A retrieve UE context request message is sent by the new NG-RAN node, i.e. the second radio network node 112, to request the old NG-RAN node, i.e. the first radio network node 110, to transfer the UE Context to the new NG-RAN.

Direction: new NG-RAN node -> old NG-RAN node.

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3.1 | | YES | iqnore |
| New NG-RAN node UE XnAP ID reference | M | | NG-RAN node UE XnAP ID 9.2.3.16 | Allocated at the new NG-RAN node | YES | reject |
| UE Context ID | M | | 9.2.3.40 | | YES | reject |
| Integrity protection | M | | BIT STRING (SIZE (16)) | *ShortMAC-I* either contained in the *RRCConnection ResumeRequest* message as defined in TS 38.331 [10]) or in the *RRCConnection ResumeRequest* message as defined in TS 36.331 [14]) | YES | reject |
| New Cell Identifier | M | | NG-RAN Cell Identity 9.2.2.9 | The Cell Identifier of the cell where the RRC connection has been requested to be resumed or to be reestablished. | YES | reject |

The source eNB, i.e. the first radio network node 110, already knows the source PCI and C-RNTI from the UE context. However, since the source PCI is shorter than the parameter required in the VarResumeMAC-Input, the source PCI must be padded with e.g. one binary '0'. When the source eNB has calculated the ResumeMAC-I, it compares the value with the received ResumeMAC-I value which the UE calculated.

An alternative solution is that the source eNB, i.e. the first radio network node 110, provides the security algorithms, the source PCI and source C-RNTI to the target gNB, i.e. the second radio network node 112, when the UE, i.e. the wireless device 120, has sent the RRCConnectionResumeRequest. The target gNB, i.e. the second radio network node 112, then calculates the ResumeMAC-I in the same way as the UE calculated the ResumeMAC-I did by padding the LTE PCI, using the LTE C-RNTI and the NR Cell Identity, which it then compares with the ResumeMAC-I the UE calculated and transmitted to the network. By comparing the security token, i.e. the ResumeMAC-I, calculated by the second radio network node 110, and the security token, i.e. the ResumeMAC-I, calculated by the wireless device 120, the second radio network node 110 is able to verify the wireless device 120 as valid.

### 2.5.1.1 Updates of TS 38.331

The procedures of section 5.3.13.3 in TS 38.331 may be extended (changes highlighted by underlining) to e.g.:
TS 38.331 section 5.3.13.3 Actions related to transmission of RRCResumeRequest message

The UE shall set the contents of RRCResumeRequest or RRCResumeRequest1 message as follows:
1 > if the previously configured integrity protection algorithms are not available to configure in the target system:
2> inform upper layers about the failure to resume the RRC connection and the procedure ends;
1> if field useFullResumelD is signalled in SIB1:
2> select RRCResumeRequest1 as the message to use;
2> set the resumeIdentity to the stored fulll-RNTI value;
1> else:
2> select *RRCResumeRequest* as the message to use;
2> set the *shortResumeldentity* to the stored *shortl-RNTI* value;
1>set the *resumeCause* in accordance with the information received from upper layers or from AS layer;
1 >set the *resumeMAC-I* to the 16 least significant bits of the MAC-I calculated:
2> over the ASN.1 encoded as per section 8 (i.e., a multiple of 8 bits) *VarResumeMAC-Input;*
2>with the K_{RRCint} key and the previously configured integrity protection algorithm; and
2>with all input bits for COUNT, BEARER and DIRECTION set to binary ones;

### NOTE: If the Source RAT was E-UTRA, use the previous E-UTRA K_{RRCint} key as NR K_{RRCint} key and use integrity protection algorithm matching the previously configured E-UTRA integrity protection algorithm.

### UE variables

### - VarResumeMAC-Input

The UE variable *VarResumeMAC-Input* specifies the input used to generate the *resumeMAC-I* during RRC Connection Resume procedure.

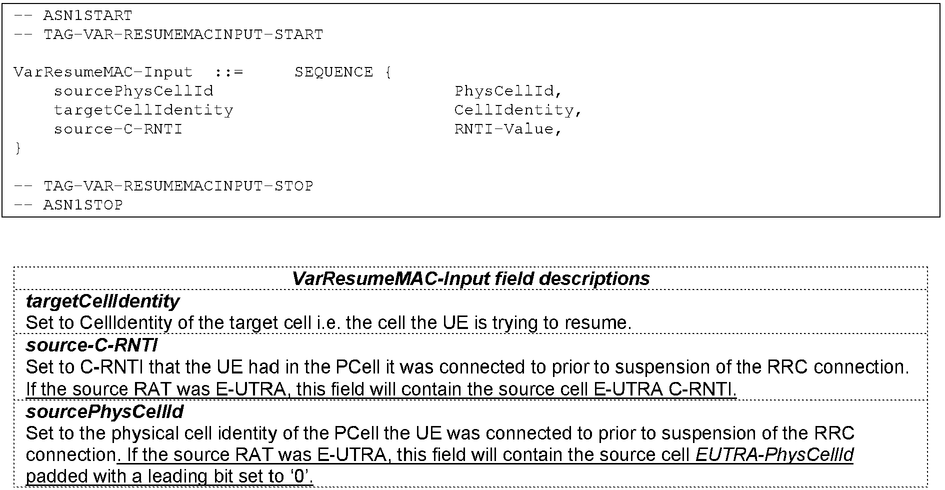

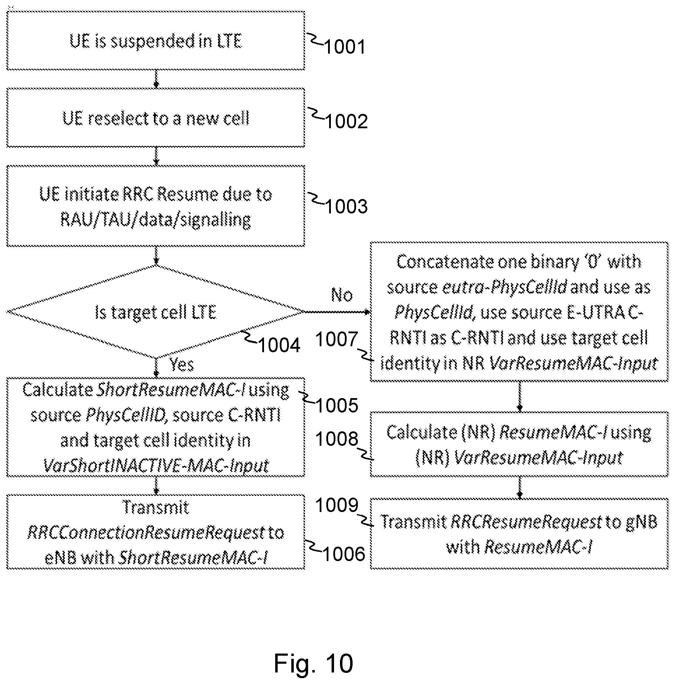

**Figure 10** schematically illustrates how a UE, e.g. the wireless device 120, decides how to calculate the security checksum, i.e. the security token, during an inter-RAT or an intra-RAT suspend and resume procedure from LTE to NR. The diagram depicts one embodiment and should not be considered limiting to alternative solutions. In **Action 1001,** the wireless device 120 in LTE is suspended and in **Action 1002,** the wireless device 120 reselects to a new cell. In **Action 1003** the wireless device 120 initiates an RRC resume procedure due to RAU, TAU, data, and/or signaling. In **Action 1004,** the wireless device 120 checks whether or not the target cell, i.e. the second cell 12, belongs to the same RAT as the source cell, i.e. the first cell 11. In other words, and in case the source cell is an LTE cell, the wireless device 120 checks whether or not the target cell is also an LTE cell.

In an intra-RAT procedure, i.e. when then the target cell is also an LTE cell, the wireless device 120 performs Actions 1005 and 1006. In **Actions 1005,** the wireless device 120 calculates the security token, e.g. the ShortResumeMAC-I, using the source PhysCellID, the source C-RNTI and the target cell identity comprised in varShortINACTIVE-MAC-Input. In **Action 1006,** the wireless device 120 transmits an RRCConnectionResumeRequest to the network node, e.g. to the first radio network node 110 and/or to the second radio network node 112. The RRCConnectionResumeRequest comprises the calculated security token.

In an inter-RAT procedure, i.e. when then the target cell is not in the same RAT as the source cell, e.g. when the source cell is an LTE cell and the target cell is a NR cell, the wireless device 120 performs Actions 1007, 1008, and 1009. In **Action 1007,** the wireless device 120 concatenates one binary '0' with the source E-UTRA-PhysCeIIID and uses that as the PhysCellID, uses source E-UTRA C-NRTI, and uses target cell identity in NR VarResumeMAC-Input. In **Action 1008,** the wireless device 120 calculates the security token in NR, e.g. the NR ResumeMAC-I, using the NR VarResumeMAC-Input. Thus, the wireless device 120 calculates the security token using NR format and procedures. In **Action 1009,** the wireless device 120 transmits an RRCResumeRequest to the network node, e.g. to the second radio network node 112. The RRCResumeRequest comprises the calculated security token.

### 2.5.2 Suspend/resume from NR to LTE: Calculate and use ShortResumeMAC-I in LTE using NR PCI and C-RNTI and LTE Cell Identity as input

If the UE, e.g. the wireless device 120, is suspended in the first RAT being NR and resumes the connection in the second RAT being LTE, the UE and network would need to calculate the LTE *shortResumeMAC-I* using the LTE *VarShortINACTIVE-MAC-Input* or the LTE *VarShortResumeMAC-Input* (or similar variable). The *VarShortINACTIVE-MAC-Input* and the *VarShortResumeMAC-Input* both contain source PCI, source C-RNTI and target Cell identity. The *VarShortResumeMAC-I* also contain a constant *ResumeDiscriminator* consisting of a single binary '1'. The target Cell identity is obtained from the *SystemlnformationBlockType1 (SIB1)* which is broadcast by the target cell.

However, the source PCI and source C-RNTI were obtained in another RAT, i.e. NR, and have different characteristics compared to corresponding parameters in LTE.

For the source C-RNTI, the UE stores the NR C-RNTI of the last serving cell, and since the LTE and NR C-RNTI have equal length, the LTE *VarShortINACTIVE-MAC-Input* or the LTE *VarShortResumeMAC-Input* may directly convert the NR C-RNTI as input.

To employ the NR PCI in the calculations of the LTE *shortResumeMAC-I,* i.e. the security token in LTE, the length of the parameter must be adjusted. The simplest way to do this is to truncate the value to either the 9 least significant bits (LSB) or the 9 most significant bits (MSB) and use this truncated value in the LTE *VarShortINACTIVE-MAC-Input* or the LTE *VarShortResumeMAC-Input.* However, any other mapping of the 10 bit NR PCI to 9 bits to be used in the LTE PCI parameter would be equally possible.

If the UE, i.e. the wireless device 120, was configured with an integrity protection algorithm in NR which is not supported in LTE, e.g. a hypothetical future NIA4, different from any algorithm in LTE, the UE may either:
- Abort the resume procedure and fallback to RRC Setup
- Use a predefined fallback algorithm which is supported in both LTE and NR (e.g. any of the algorithms EIA0-EIA3)

The calculation of the security token, e.g. the *ShortResumeMAC-I*, is performed by both the UE, i.e. the wireless device 120, and the network, i.e. the first and/or the second radio network node 110,112. Thus, the network node performing the calculation of the *ShortResumeMAC-I* may either be the target node (gNB), i.e. the second radio network node 112, which receives the *RRCResumeRequest* message or the source node (eNB), i.e. the first radio network node 110, which suspended the UE and stores the UE context, or another network entity.

Since the calculation of the *ShortResumeMAC-I* utilizes the security keys and the integrity protection algorithms stored in the UE context, one solution would be that the source node (gNB), i.e. the first radio network node 110, calculates the *ShortResumeMAC-I*, when it receives a context relocation request message, e.g. the RETRIEVE UE CONTEXT REQUEST message as defined in XNAP TS 38.423. The context relocation request message may be received from the second radio network node 112. This message would contain both the *ShortResumeMAC*-I calculated by the UE, as well as the target LTE Cell Identity. Since the source node (gNB), i.e. the first radio network node 110, already knows the PCI and C-RNTI of the UE from the UE context, it may calculate the *ShortResumeMAC-I* using the format of the target cell. Since the source PCI is longer than what fits in the target *VarShortResumeMAC-Input,* the PCI must be truncated. When the source gNB, i.e. the first radio network node 110, has calculated the *ShortResumeMAC-I* it compares it with the *ShortResumeMAC-I* it has received from the UE to verify the UE identity.

### 2.5.2.1. Updates of TS 36.331

The updates in this section are equally applicable if the parameter *VarShortResumeMAC-Input* or the *VarShortINACTIVE-MAC-Input* are modified to enable inter-RAT resume. Here the examples are given for the *VarShortINACTIVE-MAC-Input.* The text below relating to the updates is shown as underlined.

The procedures of section 5.3.3.3a in TS 36.331 may be extended to e.g.:
1 > if the previously configured integrity protection algorithms are not available to configure in the target system:
2> inform upper layers about the failure to resume the RRC connection and the procedure ends;
1>set the *shortResumeMAC-I* to the 16 least significant bits of the MAC-I calculated:
2> over the ASN.1 encoded as per section 8 (i.e., a multiple of 8 bits) *VarShortResumeMAC-Input* (or *VarShortResumeMAC-Input-NB* in NB-loT or *VarShortINACTIVE-MAC-Input* in RRC INACTIVE):
2> with the K_{RRCint} key and the previously configured integrity protection algorithm; and
2> with all input bits for COUNT, BEARER and DIRECTION set to binary ones;

### NOTE: If the Source RAT was NR, use the previous NR K_{RRCint} key as E-UTRA K_{RRCint} key and use integrity protection algorithm matching the previously configured NR integrity protection algorithm.

Where *VarShortINACTIVE-MAC-Input* is defined as:

### UE variables

### - VarShortINACTIVE-MAC-Input

The UE variable *VarShortINACTIVE-MAC-Input* specifies the input used to generate the *shortResumeMAC-I* during RRC Connection Resume procedure

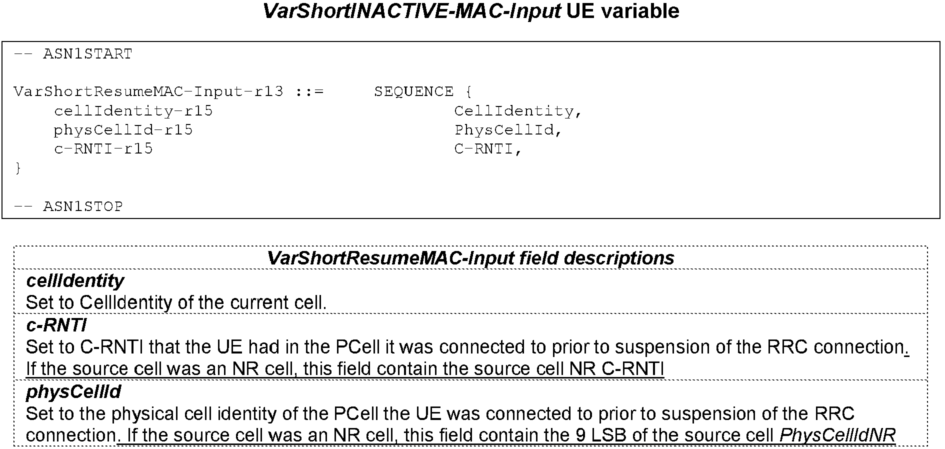

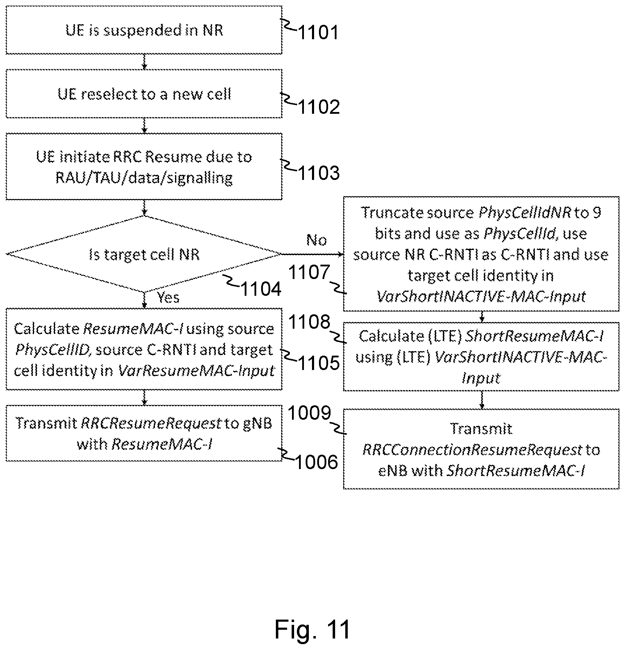

**Figure 11** schematically illustrates how a UE, i.e. the wireless device 120, decides how to calculate the security token, e.g. the security checksum during inter-RAT or intra-RAT suspend/resume from NR to LTE. The diagram depicts one embodiment and should not be considered limiting to alternative solutions.

In **Action 1101,** the wireless device 120 in NR is suspended and in **Action 1102,** the wireless device 120 reselects to a new cell. In **Action 1103** the wireless device 120 initiates an RRC resume procedure due to RAU, TAU, data, and/or signaling. In **Action 1104,** the wireless device 120 checks whether or not the target cell, i.e. the second cell 12, belongs to the same RAT as the source cell, i.e. the first cell 11. In other words, since the source cell is a NR cell, the wireless device 120 checks whether or not the target cell is also an NR cell.

In an intra-RAT procedure, i.e. when then the target cell is also a NR cell, the wireless device 120 performs Actions 1105 and 1106. In **Action 1105,** the wireless device 120 calculates the security token, e.g. the ResumeMAC-I, using the source PhysCellID, the source C-RNTI and the target cell identity comprised in VarresumeMAC-Input. In **Action 1106,** the wireless device 120 transmits an RRCResumeRequest to the network node, e.g. to the first radio network node 110 and/or to the second radio network node 112. The RRCResumeRequest comprises the calculated security token.

In an inter-RAT procedure, i.e. when then the target cell is not in the same RAT as the source cell, e.g. when the source cell is a NR cell and the target cell is an LTE cell, the wireless device 120 performs Actions 1107, 1108, and 1109. In **Action 1107,** the wireless device 120 truncates the source PhysCellIdNR to 9 bits and uses it as PhysCellld. Further, the wireless device 120t uses source NR C-RNTI as C-RNTI and target cell identity in VarShortINACTIVE-MAC-Input. In **Action 1108,** the wireless device 120 calculates the security token in LTE, e.g. the LTE ShortResumeMAC-I, using the LTE VarShortINACTIVE-MAC-Input. Thus, the wireless device 120 calculates the security token using LTE format and procedures. In **Action 1109,** the wireless device 120 transmits an RRCConnectionResumeRequest to the network node, e.g. to the second radio network node 112. The RRCConnectionResumeRequest comprises the calculated security token.

### 2.6 Some second embodiments: Use input parameter format of the source system and convert target system parameters

In some embodiments, the source RAT parameters/variable (e.g. LTE *VarShortResumeMAC-Input*, *VarShortINACTIVE-MAC-Input*, *or NR VarResumeMAC-Input,)* are used as input to the calculations of the source RAT security token, e.g. the LTE *shortResumeMAC-I* or NR *ResumeMAC-I* (or similar). These parameters/variables are extended (or modified) to allow parameters from target RAT, e.g. from the first RAT. In this disclosure, the source RAT parameters are also referred to as the first set of parameters, and the target RAT parameters are referred to as the second set of parameters.

In either direction of the inter-RAT RRC Resume procedure, the problem lies in using parameters from the target RAT in fields/procedures of the source RAT, namely the Cell Identity.

In LTE the (target) Cell Identity is currently 28 bits while in NR it is currently 36 bits.

When the network calculates the integrity checksum, i.e. the security token, it is done in the source node (eNB or gNB), i.e. the first radio network node 110, when it receives e.g. a context relocation request message (e.g. the RETRIEVE UE CONTEXT REQUEST message as defined in XNAP TS 38.423). This message would contain both the *ResumeMAC-I* calculated by the UE, as well as the target Cell Identity. The source node, i.e. the first radio network node 110, then pads or truncates the target cell identity to match the required size of the source variable.

In case of suspend/resume from NR to LTE, the target CellIdentity is e.g. padded from 28 bits to 36 bits, with 8 binary 0's in the beginning. Thus, the bit string is extended.

If the suspend/resume is from LTE to NR, the target Cellldentity is e.g. truncated to the 28 LSB. Thus, the bit string is shortened.

Since the source node, i.e. the first radio network node 110, calculates the integrity checksum, i.e. the security token, with the source format of the variables, the source integrity protection algorithms may be used.

### 2.6.1 Suspend/resume from LTE to NR: Calculate and use LTE VarShortResumeMAC-Input or LTE VarShortINACTIVE-MAC-Input using LTE PCI and C-RNTI and NR Cell identity as input to calculate NR ResumeMAC-I

If the UE, i.e. the wireless device 120, is suspended in LTE and resumes the connection in NR, the UE and network would calculate the security token for the second RAT, i.e. the (NR) *ResumeMAC-I* (or similar) using the (LTE) *VarShortResumeMAC-Input* or *VarShortINACTIVE-MAC-Input* (or similar), i.e. even though the UE resumes in NR, it calculates the integrity checksum using the LTE variables. The *VarShortResumeMAC-Input* and the *VarShortINACTIVE-MAC-Input*, contain source PCI, source RNTI and target Cell identity while the *VarShortResumeMAC-Input* also contain a constant *ResumeDiscriminator* consisting of a single binary '1'. The target Cell identity is obtained by the UE from the *SystemlnformationBlockType1 (SIB1)* which is broadcast by the target cell, i.e. the second cell 12.

Since the UE and network calculate the NR *ResumeMAC-I* using the source RAT format (i.e. LTE) of the input variables, the source PCI and source RNTI are already in the correct format. However, the target Cell Identity will be 36 bits, whereas the *VarShortResumeMAC-I* and *VarShortINACTIVE-MAC-Input* requires a Cell Identity of 28 bits.

To use the target NR Cell Identity as cell identity in the *VarShortResumeMAC-Input* or in the *VarShortINACTIVE-MAC-Input*, the UE and network may truncate the NR Cell Identity to e.g. the 28 least significant bits (LSB). Naturally, any other predefined truncation or other mapping of the NR cell identity would work as well. Thus, the bit string is may be shortened by truncation or mapping, or by recalculation as previously described.

Since the UE calculates the integrity checksum using variables input from the source system, the source integrity protection algorithms are also used. If the target system supports the same integrity protection algorithms, the UE may also use the corresponding NR integrity protection algorithm.

### 2.6.1.1. Updates of TS 38.331

The procedures of section 5.3.13.3 in TS 38.331 may be extended so that if the source cell is an NR cell, the *resumeMAC-I* is calculated over the *VarResumeMAC-Input* or *VarShortINACTIVE-MAC-Input* but if the source cell is an LTE cell, the UE calculates the *resumeMAC-I* over the *VarShortResumeMAC-Input or VarShortINACTIVE-MAC-Input* as defined in TS 36.331 e.g.:
Note: the procedures described here assume that it is the *VarShortINACTIVE-MAC-Input* IE which is used, but the solution would work equally well if it was the *VarShortResumeMAC-Input* IE which was modified and used in the calculations of the security token.

TS 38.331 5.3.13.3 Actions related to transmission of *RRCResumeRequest* message

The UE shall set the contents of *RRCResumeRequest* or *RRCResumeRequest1* message as follows:
1> if field *useFullResumeID* is signalled in *SIB1:*
2> select *RRCResumeRequest1* as the message to use;
2> set the *resumeldentity* to the stored *fulll-RNTI* value;
1> else:
2> select *RRCResumeRequest* as the message to use;
2> set the *shortResumeldentity* to the stored *shortl-RNTI* value;
1> set the *resumeCause* in accordance with the information received from upper layers or from AS layer;
1> if the source cell is an NR cell:
2> set the *resumeMAC-I* to the 16 least significant bits of the MAC-I calculated:
3> over the ASN.1 encoded as per section 8 (i.e., a multiple of 8 bits) *VarResumeMAC-Input;*
3> with the K_{RRCint} key and the previously configured integrity protection algorithm; and
3> with all input bits for COUNT, BEARER and DIRECTION set to binary ones;
1> else (source cell is an LTE cell):
2> set the *resumeMAC-I*to the 16 least significant bits of the MAC-I calculated:
3> truncate the target *cellIdentity* to the 28 LSB and use as input to *VarShortINACTIVEMAC-Input* as defined in TS 36.331;
3> over the ASN.1 encoded as per section 8 (i.e., a multiple of 8 bits) *VarShortINACTIVEMAC-Input* as defined in TS 36.331;
3> with the K_{RRCint} key and the previously configured integrity protection algorithm: and
3> with all input bits for COUNT, BEARER and DIRECTION set to binary ones;

### 2.6.1.2. Updates of TS 36.331

The VarShortINACTIVE-MAC-Input must be updated to allow a truncated NR cellldentity to be used as cellldentity. (The corresponding required modifications to the IE *VarShortResumeMAC-Input* would be the same).

### UE variables

### - VarShortINACTIVE-MAC-Input

The UE variable *VarShortINACTIVE-MAC-Input* specifies the input used to generate the *shortResumeMAC-I* during RRC Connection Resume procedure. In case of inter-RAT RRC Resume from E-UTRA to NR, the *VarShortINACTIVE-MAC-Input* is used to generate the *resumeMAC-I* as specified in TS 38.331.

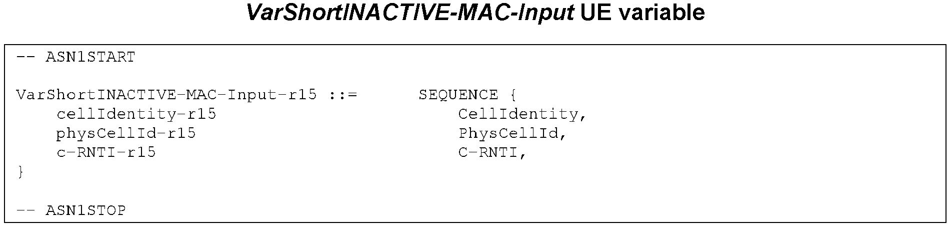

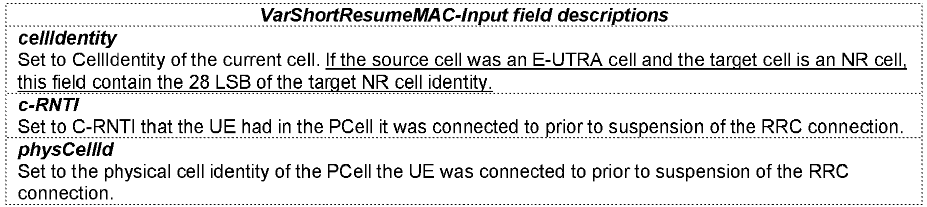

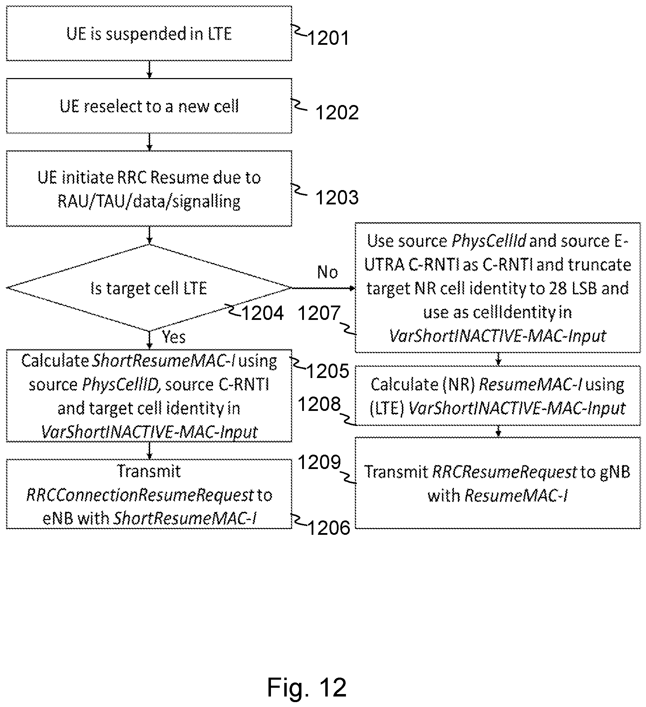

**Figure 12** schematically illustrates Suspend in LTE and Resume in LTE or NR. Calculate the inter-RAT integrity checksum using LTE format and NR procedures.

In **Action 1201,** the wireless device 120 in LTE is suspended and in **Action 1202,** the wireless device 120 reselects to a new cell. In **Action 1203** the wireless device 120 initiates an RRC resume procedure due to RAU, TAU, data, and/or signaling. In **Action 1204,** the wireless device 120 checks whether or not the target cell, i.e. the second cell 12, belongs to the same RAT as the source cell, i.e. the first cell 11. In other words, since the source cell is an LTE cell, the wireless device 120 checks whether or not the target cell is also an LTE cell.

In an intra-RAT procedure, i.e. when then the target cell is also an LTE cell, the wireless device 120 performs Actions 1205 and 1206. In **Action 1205,** the wireless device 120 calculates the security token, e.g. the ShortResumeMAC-I, using the source PhysCellID, the source C-RNTI and the target cell identity comprised in VarShortINACTIVE-MAC-Input. In **Action 1206,** the wireless device 120 transmits an RRCConnectionResumeRequest to the network node, e.g. to the first radio network node 110 and/or to the second radio network node 112. The RRCConnectionResumeRequest comprises the calculated security token.

In an inter-RAT procedure, i.e. when then the target cell is not in the same RAT as the source cell, e.g. when the source cell is an LTE cell and the target cell is a NR cell, the wireless device 120 performs Actions 1207, 1208, and 1209. In **Action 1207,** the wireless device 120 uses source PhysCellld and source E-UTRA C-RNTI as C-RNTI and truncates target NR Cell identity to e.g. 28 LSB, and use it as cell Identity in VarShortINACTIVE-MAC-Input. In **Action 1208,** the wireless device 120 calculates the security token in NR, e.g. the NR ResumeMAC-I, using the LTE VarShortINACTIVE-MAC-Input. Thus, the wireless device 120 calculates the security token using LTE format and NR procedures. In **Action 1209,** the wireless device 120 transmits an RRCResumeRequest to the network node, e.g. to the second radio network node 112. The RRCResumeRequest comprises the calculated security token.

### 2.6.2 Suspend/resume from NR to LTE: Calculate and use NR VarResumeMAC-Input using NR PCI and C-RNTI and LTE Cell identity as input to calculate LTE

### ShortResumeMAC-I

If the UE is suspended in NR and resumes the connection in LTE, the UE and network would calculate the LTE *ShortResumeMAC-I* (or similar) using the (NR) *VarResumeMAC-Input* (or similar). The NR *VarResumeMAC-Input* contain source PCI, source C-RNTI and target Cell identity'. The target Cell identity is obtained from the *SystemlnformationBlockType1 (SIB1)* which is broadcast by the target cell.

Since the UE and network calculate the LTE *ShortResumeMAC-I* using the source RAT format (i.e. NR) of the input variables, the source PCI and source RNTI are already in the correct format. However, the target Cell Identity will be 28 bits, whereas the *VarResumeMAC-Input* requires a Cell Identity of 36 bits.

To use the target LTE Cell Identity as cell identity in the *VarResumeMAC-Input*, the UE and network may e.g. concatenate the LTE Cell Identity with 8 leading binary '0's. Naturally, any other predefined 8 bit constant may be added to the 28 bit LTE cell identity. Alternatively, the added bits may be calculated based on some parameter (e.g. the 28 bit LTE cell identity).

Since the UE calculates the integrity checksum using inputs from the source system, the source integrity protection algorithms are also used. If the target system supports the same integrity protection algorithms, the UE may also use the corresponding LTE integrity protection algorithm.

### 2.6.2.1. Updates of TS 36.331

The procedures of section 5.3.3.3a in TS 36.331 may be extended to e.g.:
1> if the source cell is an LTE cell:
2> set the *shortResumeMAC-I* to the 16 least significant bits of the MAC-I calculated:
3> over the ASN.1 encoded as per section 8 (i.e., a multiple of 8 bits) *VarShortResumeMAC-Input* (or *VarShortResumeMAC-Input-NB* in NB-IoT, or *VarShortINACTIVE-MAC-Input* in RRC_INACTIVE);
3> with the K_{RRCint} key and the previously configured integrity protection algorithm; and
3> with all input bits for COUNT, BEARER and DIRECTION set to binary ones;
1> else:
2> set the *shortResumeMAC-I* to the 16 least significant bits of the MAC-I calculated:
3> prepend the target *cellIdenty* with 8 binary '0's and use as input to *targetCellIdentity* in the *VarResumeMAC-Input* as defined in TS 38.331;
3> over the ASN.1 encoded as per section 8 (i.e., a multiple of 8 bits) *VarResumeMAC-Input* as defined in TS 38.331;
3> with the K_{RRCint} key and the previously configured integrity protection algorithm; and
3> with all input bits for COUNT, BEARER and DIRECTION set to binary ones;

### 2.6.2.2. Updates of TS 38.331

The definition of *VarResumeMAC-*Input need to be updated to allow using a padded LTE *CellIdentity* as *targetCellIdentity* in NR.

### - VarResumeMAC-Input

The UE variable *VarResumeMAC-Input* specifies the input used to generate the *resumeMAC-I* during RRC Connection Resume procedure.

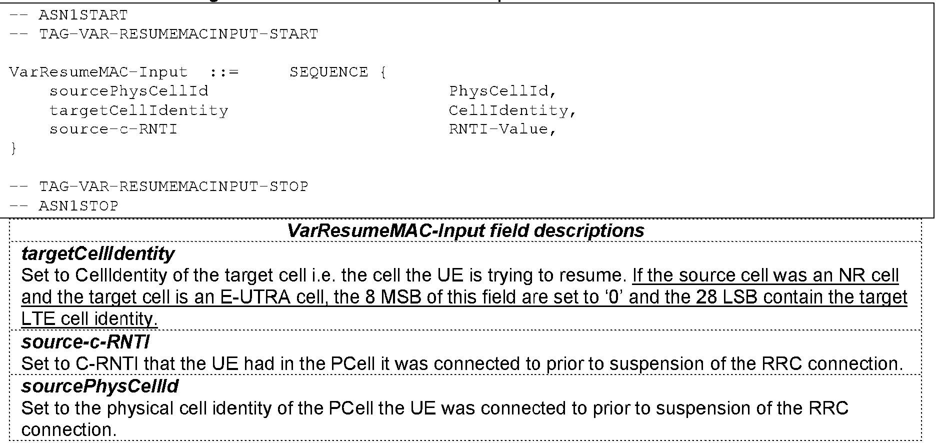

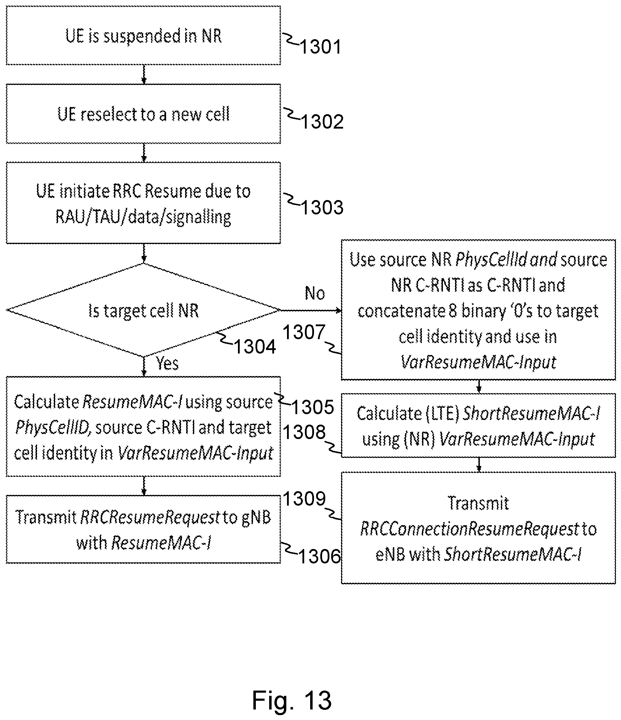

**Figure 13** schematically illustrates actions of wireless device 120 performing a suspend procedure in NR and a resume procedure in NR or LTE. The wireless device 120 calculates the security token, e.g. the inter-RAT integrity checksum, using NR format and LTE procedures.

In **Action 1301**, the wireless device 120 in NR is suspended and in **Action 1302**, the wireless device 120 reselects to a new cell. In **Action 1303** the wireless device 120 initiates an RRC resume procedure due to RAU, TAU, data, and/or signaling. In **Action 1304**, the wireless device 120 checks whether or not the target cell, i.e. the second cell 12, belongs to the same RAT as the source cell, i.e. the first cell 11. In other words, since the source cell is a NR cell, the wireless device 120 checks whether or not the target cell is also an NR cell.

In an intra-RAT procedure, i.e. when then the target cell is also a NR cell, the wireless device 120 performs Actions 1305 and 1306. In **Action 1305**, the wireless device 120 calculates the security token, e.g. the ResumeMAC-I, using the source PhysCellID, the source C-RNTI and the target cell identity comprised in VarResumeMAC-Input. In **Action 1306**, the wireless device 120 transmits an RRCResumeRequest to the network node, e.g. to the first radio network node 110 and/or to the second radio network node 112. The RRCConnectionResumeRequest comprises the calculated security token.

In an inter-RAT procedure, i.e. when then the target cell is not in the same RAT as the source cell, e.g. when the source cell is a NR cell and the target cell is an LTE cell, the wireless device 120 performs Actions 1307, 1308, and 1309. In **Action 1307**, the wireless device 120 uses NR PhysCellld, and uses source NR C-RNTI as C-RNTI in VarResumeMAC-Input. Further, the wireless device 120 concatenates 8 binary 0' to target cell identity and use it in VarResumeMAC-Input. In **Action 1308**, the wireless device 120 calculates the security token in LTE, e.g. the LTE ShortResumeMAC-I, using the NR VarResumeMAC-Input. Thus, the wireless device 120 calculates the security token using NR format and LTE procedures. In **Action 1309**, the wireless device 120 transmits an RRCConnectionResumeRequest to the network node, e.g. to the second radio network node 112. The RRCConnectionResumeRequest comprises the calculated security token.

### 2.7 Some third embodiments: Create new IE and update procedures for RRC Resume

In some embodiments, the LTE and NR specifications are extended to introduce new IEs used to calculate the security token, e.g. the *ShortResumeMAC-I* and the *ResumeMAC-I*, and update the procedures accordingly. In all of these embodiments, the same principle as in some first and second embodiments may be applied, i.e. the procedures and ASN.1 definition are defined in the target RAT specification (as in some first embodiments), or the procedures are defined in the target RAT specification and the ASN.1 definition is defined in the source RAT specification (as in some second embodiments).

### 2.7.1. Solution 3.1: Define new IE (e.g. VarInterRAT-ResumeMAC-Input) in target RAT and define procedures to calculate security token in target RAT

### 2.7.1.1. Suspend/resume from LTE to NR:

If the UE is suspended in LTE and resumes in NR, the UE and network may calculate the Resume MAC-I using the source C-RNTI and source PCI (i.e. LTE) along with the target Cell identity (i.e. NR) in a newly defined IE.

The embodiments described here use the IE name *VarInterRAT-ResumeMAC-Input* as an example, but the solution would work equally well with another parameter name.

### 2.7.1.1.1. Updates of TS 38.331

### - VarInterRAT-ResumeMAC-Input

The UE variable *VarInterRAT-ResumeMAC-Input* specifies the input used to generate the *resumeMAC-I* during inter-RAT RRC Connection Resume procedure when the UE was suspended in E-UTRA.

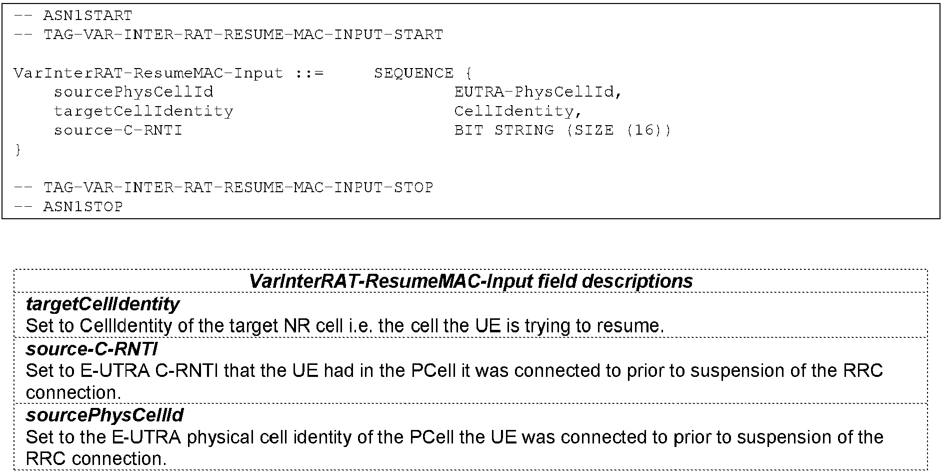

The procedures in TS 38.331 may be updated to e.g.:

TS 38.331 5.3.13.3 Actions related to transmission of *RRCResumeRequest* message

The UE shall set the contents of *RRCResumeRequest* or *RRCResumeRequest1* message as follows:
1> if field *useFullResumeID* is signalled in *SIB1*:
2> select *RRCResumeRequest1* as the message to use;
2> set the *resumeldentity* to the stored *fullI-RNTI* value;
1> else:
2> select *RRCResumeRequest* as the message to use;
2> set the *shortResumeIdentity* to the stored *shortI-RNTI* value;
1> set the *resumeCause* in accordance with the information received from upper layers or from AS layer;
1> if the source cell was an NR cell:
2> set the *resumeMAC-I* to the 16 least significant bits of the MAC-I calculated:
3> over the ASN.1 encoded as per section 8 (i.e., a multiple of 8 bits) *VarResumeMAC-Input;*
3> with the K_{RRCint} key and the previously configured integrity protection algorithm; and
3> with all input bits for COUNT, BEARER and DIRECTION set to binary ones;
1> else (if the source cell was an LTE cell):
2> if the previously configured integrity protection algorithms are not available to configure in the target system:
3> inform upper layers about the failure to resume the RRC connection and the procedure ends;
2> set the *resumeMAC-I* to the 16 least significant bits of the MAC-I calculated:
3> over the ASN.1 encoded as per section 8 (i.e., a multiple of 8 bits) *VarInterRAT-ResumeMAC-Input:*
3> with the previously configured E-UTRA K_{RRCint} key and the NR integrity protection algorithms corresponding to the previously configured integrity protection algorithm; and
3> with all input bits for COUNT, BEARER and DIRECTION set to binary ones;

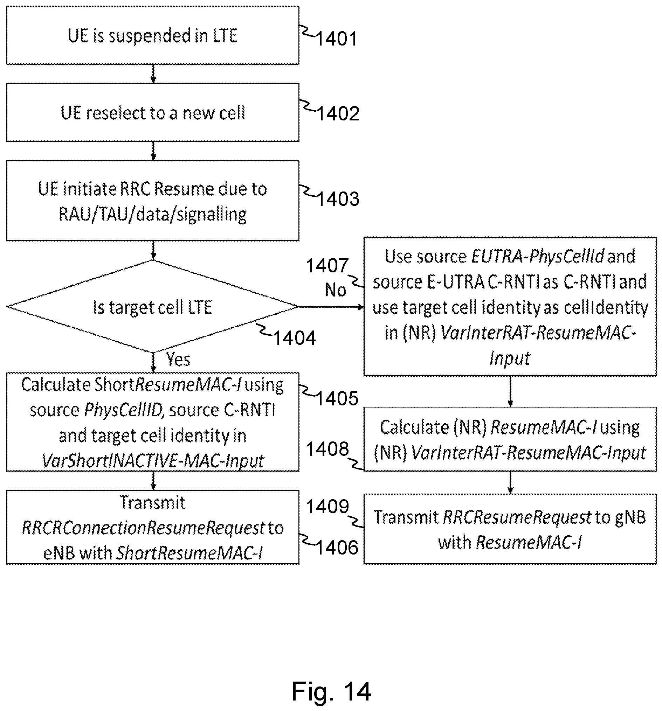

**Figure 14** is a schematic example diagram of how the procedure may be done. In Figure 14 actions performed by the wireless device 120 when being suspended in LTE and resuming in LTE or NR are shown. In this example, the security token, e.g. the inter-RAT integrity checksum, is calculated using a new IE defined in NR format and using NR procedures.

In **Action 1401,** the wireless device 120 in LTE is suspended and in **Action 1402,** the wireless device 120 reselects to a new cell. In **Action 1403** the wireless device 120 initiates an RRC resume procedure due to RAU, TAU, data, and/or signaling. In **Action 1404,** the wireless device 120 checks whether or not the target cell, i.e. the second cell 12, belongs to the same RAT as the source cell, i.e. the first cell 11. In other words, since the source cell is an LTE cell, the wireless device 120 checks whether or not the target cell is also an LTE cell.

In an intra-RAT procedure, i.e. when then the target cell is also an LTE cell, the wireless device 120 performs Actions 1405 and 1406. In **Action 1405,** the wireless device 120 calculates the security token, e.g. the ShortResumeMAC-I, using the source PhysCellID, the source C-RNTI and the target cell identity comprised in VarShortINACTIVE-MAC-Input. In **Action 1406,** the wireless device 120 transmits an RRCConnectionResumeRequest to the network node, e.g. to the first radio network node 110 and/or to the second radio network node 112. The RRCConnectionResumeRequest comprises the calculated security token.

In an inter-RAT procedure, i.e. when then the target cell is not in the same RAT as the source cell, e.g. when the source cell is an LTE cell and the target cell is a NR cell, the wireless device 120 performs Actions 1407, 1408, and 1409. In **Action 1407,** the wireless device 120 uses EUTRA-Physcellld and source E-UTRA C-RNTI as C-RNTI and use target cell identity as cellldentity in NR VarInterRAT-Resume-MAC-Input. In **Action 1408,** the wireless device 120 calculates the security token in NR, e.g. the NR VarInterRAT-Resume-MAC-I, using the NR VarInterRAT-Resume-MAC-Input. Thus, the wireless device 120 calculates the security token using NR format and NR procedures. In **Action 1409,** the wireless device 120 transmits an RRCResumeRequest to the network node, e.g. to the second radio network node 112. The RRCResumeRequest comprises the calculated security token.

### 2.7.1.2. Suspend/resume from NR to LTE

If the UE is suspended in NR and resumes in LTE, the UE and network may calculate the Resume MAC-I using the source C-RNTI and source PCI along with the target Cell identity.

### 2.7.1.2.1 Updates of TS 36.331

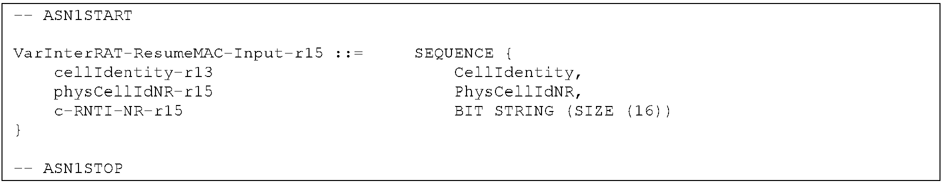

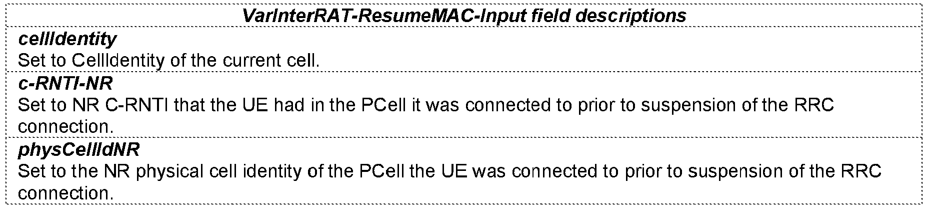

The procedures of section 5.3.3.3a in TS 36.331 may be extended to e.g. (changes highlighted):
1> if the previously configured integrity protection algorithms are not available to configure in the target system:
2> inform upper layers about the failure to resume the RRC connection and the procedure ends;
1> if the RRC connection was suspended in E-UTRA:
2> set the *shortResumeMAC-I* to the 16 least significant bits of the MAC-I calculated:
3> over the ASN. 1 encoded as per section 8 (i.e., a multiple of 8 bits) *VarShortResumeMAC-Input* (or *VarShortResumeMAC-Input-NB* in NB-IoT, or *VarShortINACTIVE-MAC-Input* in RRC INACTIVE);
3> with the K_{RRCint} key and the previously configured integrity protection algorithm; and
3> with all input bits for COUNT, BEARER and DIRECTION set to binary ones; 1> else:
2> if the previously configured integrity protection algorithms are not available to configure in the target system:
3> inform upper layers about the failure to resume the RRC connection and the procedure ends;
2> set the *shortResumeMAC-I* to the 16 least significant bits of the MAC-I calculated:
3> over the ASN. 1 encoded as per section 8 (i.e., a multiple of 8 bits) *VarInterRAT-ResumeMAC-Input*;
3> with the previously configured NR K_{RRCint} key and the E-UTRA integrity protection algorithms corresponding to the previously configured integrity protection algorithm; and
3> with all input bits for COUNT, BEARER and DIRECTION set to binary ones;

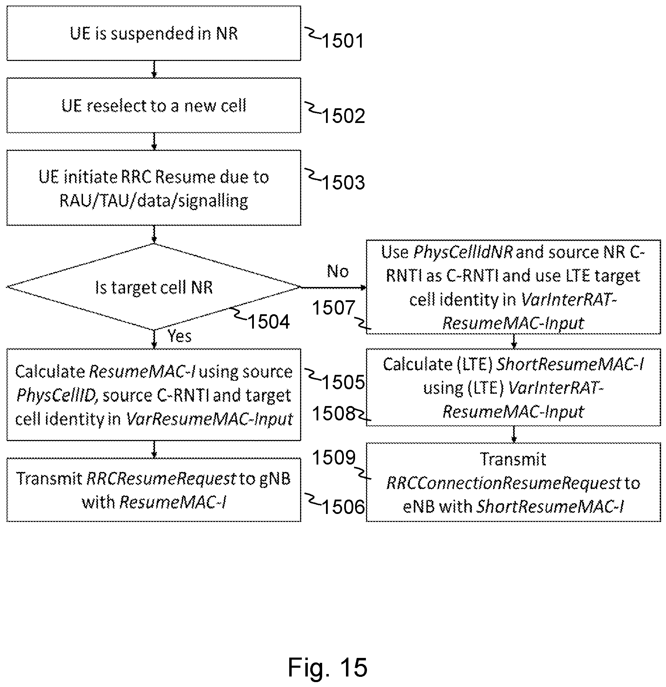

**Figure 15** is a schematic example diagram of how the procedure may be done. In Figure 15 actions performed by the wireless device 120 when being suspended in NR and resuming in NR or LTE are shown. In this example, the security token, e.g. the inter-RAT integrity checksum, is calculated using a new IE defined in LTE format and using LTE procedures.

In **Action 1501,** the wireless device 120 in NR is suspended and in **Action 1502,** the wireless device 120 reselects to a new cell. In **Action 1503** the wireless device 120 initiates an RRC resume procedure due to RAU, TAU, data, and/or signaling. In **Action 1504,** the wireless device 120 checks whether or not the target cell, i.e. the second cell 12, belongs to the same RAT as the source cell, i.e. the first cell 11. In other words, since the source cell is a NR cell, the wireless device 120 checks whether or not the target cell is also a NR cell.

In an intra-RAT procedure, i.e. when then the target cell is also a NR cell, the wireless device 120 performs Actions 1505 and 1506. In **Action 1505,** the wireless device 120 calculates the security token, e.g. the ResumeMAC-I, using the source PhysCellID, the source C-RNTI and the target cell identity in the VarResumeMAC-Input. In **Action 1506,** the wireless device 120 transmits an RRCResumeRequest to the network node, e.g. to the first radio network node 110 and/or to the second radio network node 112. The RRCResumeRequest comprises the calculated security token.

In an inter-RAT procedure, i.e. when then the target cell is not in the same RAT as the source cell, e.g. when the source cell is a NR cell and the target cell is an LTE cell, the wireless device 120 performs Actions 1507, 1508, and 1509. In **Action 1507,** the wireless device 120 uses PhyscellIdNR and source NR C-RNTI as C-RNTI and use LTE target cell identity in VarInterRAT-ResumeMAC-Input. In **Action 1508,** the wireless device 120 calculates the security token in LTE, e.g. the LTE ShortResumeMAC-I, using the LTE VarInterRATResumeMAC-Input. Thus, the wireless device 120 calculates the security token using LTE format and LTE procedures. In **Action 1509,** the wireless device 120 transmits an RRCConnectionResumeRequest to the network node, e.g. to the second radio network node 112. The RRCResumeRequest comprises the calculated security token.

### 2.7.2. Solution 3.2: Define new IE (e.g. VarInterRAT-ResumeMAC-Input) in source RAT and define procedures to calculate security token in target RAT

### 2.7.2.1. Suspend/resume from LTE to NR:

If the UE is suspended in LTE and resumes in NR, the UE and network may calculate the Resume MAC-I using the source (LTE) C-RNTI and source (LTE) PCI along with the target (NR) Cell identity in a newly defined IE. The IE would be defined in LTE, but the procedures would be defined in NR.

Note: the parameter names are suffixed with an "-rxx" to indicate which release of the specification they are introduced. Whatever the suffix may be, this will not change the solutions described in this disclosure.

### 2.7.2.1.1. Updates of TS 36.331

### - VarInterRAT-ResumeMAC-Input

The UE variable *VarInterRAT-ResumeMAC-Input* specifies the input used to generate the *resumeMAC-I* in NR during inter-RAT RRC Connection Resume procedure when the UE was suspended in E-UTRA and resume in NR.

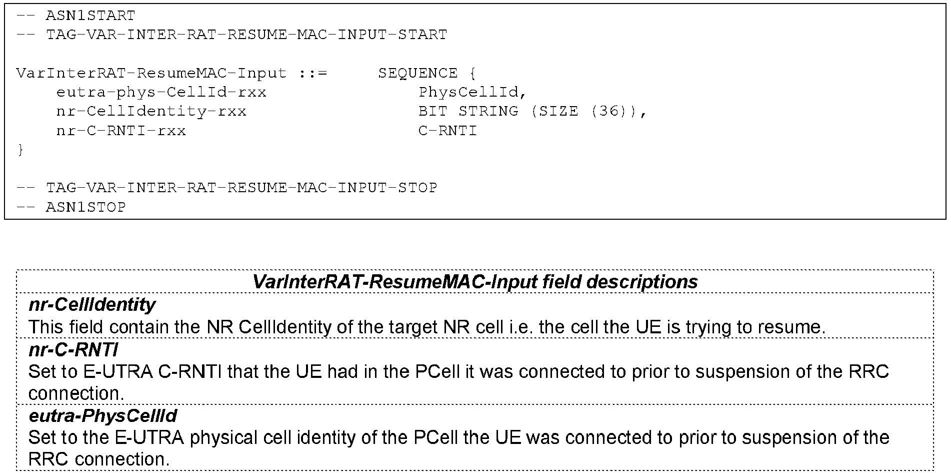

### 2.7.2.1.2. Updates of TS 38.331

The procedures in TS 38.331 may be updated to e.g.:

### TS 38.331 5.3.13.3 Actions related to transmission of RRCResumeRequest message

The UE shall set the contents of RRCResumeRequest or RRCResumeRequest1 message as follows:
1> if field useFullResumelD is signalled in SIB1:
2> select RRCResumeRequest1 as the message to use;
2> set the resumeIdentity to the stored fulll-RNTI value;
1> else:
2> select RRCResumeRequest as the message to use;
1> if the source cell was an NR cell:
2> set the resumeMAC-I to the 16 least significant bits of the MAC-I calculated:
3> over the ASN.1 encoded as per section 8 (i.e., a multiple of 8 bits) VarResumeMAC-Input;
3> with the K_{RRCint} key and the previously configured integrity protection algorithm; and
3> with all input bits for COUNT, BEARER and DIRECTION set to binary ones;
1> else (if the source cell was an LTE cell):
2> set the *resumeMAC-I* to the 16 least significant bits of the MAC-I calculated:
3> over the ASN.1 encoded as per section 8 (i.e., a multiple of 8 bits) VarlnterRAT-ResumeMAC-lnput as defined in TS 36.331;
3> with the previously configured E-UTRA K_{RRCint} key and the NR integrity protection algorithms corresponding to the previously configured integrity protection algorithm; and
3> with all input bits for COUNT, BEARER and DIRECTION set to binary ones;

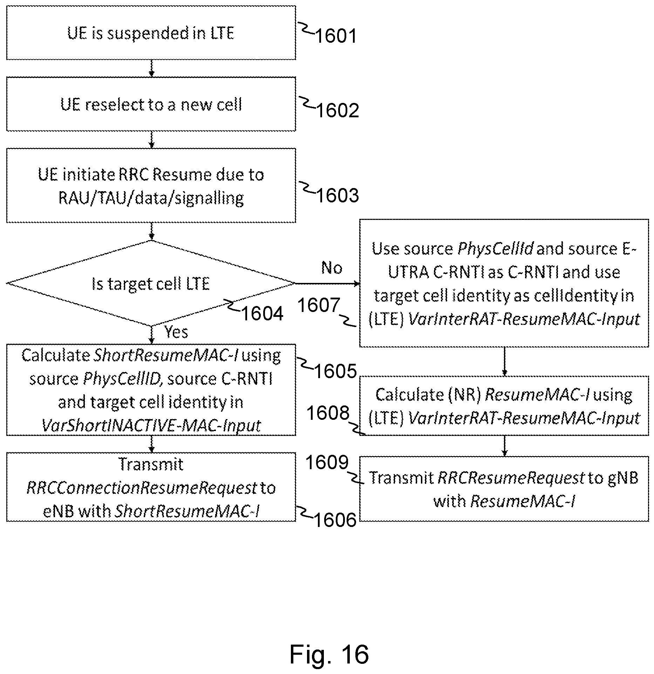

**Figure 16** schematically illustrates Suspend in LTE and Resume in LTE or NR. Calculate the inter-RAT integrity checksum using a new IE defined in LTE format and use NR procedures. Thus, in Figure 16 actions performed by the wireless device 120 when being suspended in LTE and resuming in LTE or NR are shown. In this example, the security token, e.g. the inter-RAT integrity checksum, is calculated using a new IE defined in LTE format and using NR procedures.

In **Action 1601,** the wireless device 120 in LTE is suspended and in **Action 1602,** the wireless device 120 reselects to a new cell. In **Action 1603** the wireless device 120 initiates an RRC resume procedure due to RAU, TAU, data, and/or signaling. In **Action 1604,** the wireless device 120 checks whether or not the target cell, i.e. the second cell 12, belongs to the same RAT as the source cell, i.e. the first cell 11. In other words, since the source cell is an LTE cell, the wireless device 120 checks whether or not the target cell is also an LTE cell.

In an intra-RAT procedure, i.e. when then the target cell is also an LTE cell, the wireless device 120 performs Actions 1605 and 1606. In **Action 1605**, the wireless device 120 calculates the security token, e.g. the ShortResumeMAC-I, using the source PhysCellID, the source C-RNTI and the target cell identity in VarShortINACTIVE-MAC-Input. In **Action 1606**, the wireless device 120 transmits an RRCConnectionResumeRequest to the network node, e.g. to the first radio network node 110 and/or to the second radio network node 112. The RRCConnectionResumeRequest comprises the calculated security token.

In an inter-RAT procedure, i.e. when then the target cell is not in the same RAT as the source cell, e.g. when the source cell is an LTE cell and the target cell is a NR cell, the wireless device 120 performs Actions 1607, 1608, and 1609. In **Action 1607**, the wireless device 120 uses PhysCellld, uses source E-UTRA C-RNTI as C-RNTI and uses target cell identity as cellldentity in LTE VarInterRAT-ResumeMAC-Input. In **Action 1608**, the wireless device 120 calculates the security token in NR, e.g. the NR VarInterRAT-ResumeMAC-I, using the LTE VarInterRAT-ResumeMAC-Input. Thus, the wireless device 120 calculates the security token using LTE format and NR procedures. In **Action 1609**, the wireless device 120 transmits an RRCResumeRequest to the network node, e.g. to the second radio network node 112. The RRCResumeRequest comprises the calculated security token.

### 2.7.2.2. Suspend/resume from NR to LTE

If the UE is suspended in NR and resumes in LTE, the UE and network may calculate the Resume MAC-I using the source (NR) C-RNTI and source (NR) PCI along with the target (LTE) Cell identity. in a newly defined IE. The IE would be defined in NR, but the procedures would be defined in LTE.

### 2.7.2.2.1 Updates of TS 38.331

### - VarinterRAT-ResumeMAC-Input

The UE variable VarInterRAT-ResumeMAC-Input specifies the input used to generate the resumeMAC-I during inter-RAT RRC Connection Resume procedure when the UE was suspended in NR and resume in E-UTRA.

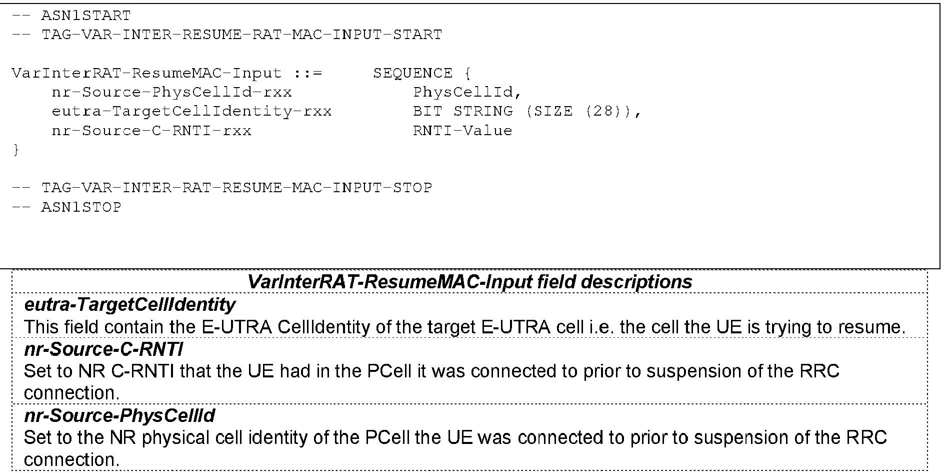

### 2.7.2.2.1. Updates of TS 36.33

The procedures of section 5.3.3.3a in TS 36.331 may be extended to e.g. (changes highlighted):
1> if the RRC connection was suspended in E-UTRA:
2> set the *shortResumeMAC-I* to the 16 least significant bits of the MAC-I calculated:
3> over the ASN.1 encoded as per section 8 (i.e., a multiple of 8 bits) *VarShortResumeMAC-Input* (or *VarShortResumeMAC-Input-NB* in NB-loT, or *VarShortINACTIVE-MAC-Input* in RRC INACTIVE):
3> with the K_{RRCint} key and the previously configured integrity protection algorithm; and
3> with all input bits for COUNT, BEARER and DIRECTION set to binary ones;
1> else:
2> set the *shortResumeMAC-I* to the 16 least significant bits of the MAC-I calculated:
3> over the ASN.1 encoded as per section 8 (i.e., a multiple of 8 bits) *VarInterRAT-ResumeMAC-Input* as defined in TS 38.331;
3> with the previously configured NR K_{RRCint} key and the E-UTRA integrity protection algorithms corresponding to the previously configured integrity protection algorithm; and
3> with all input bits for COUNT, BEARER and DIRECTION set to binary ones;

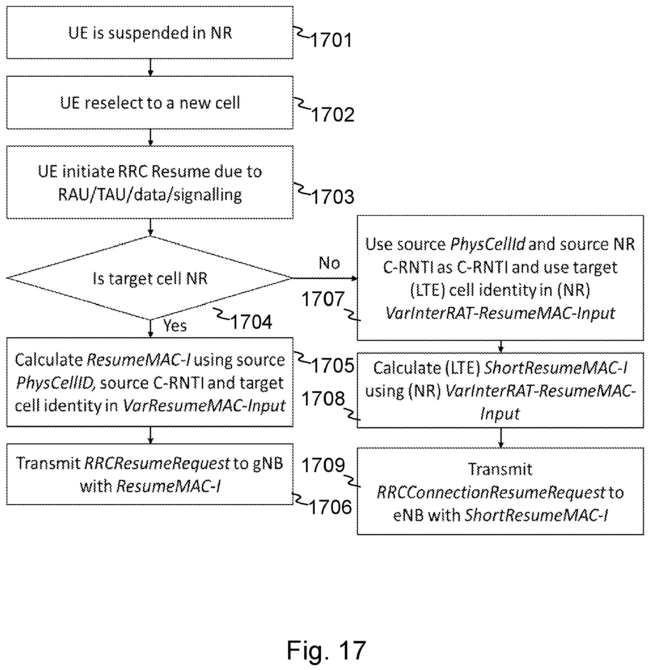

**Figure 17** schematically illustrates Suspend in NR and Resume in NR or LTE. Calculate the inter-RAT integrity checksum using a new IE defined in NR format and use LTE procedures. Thus, in Figure 17 actions performed by the wireless device 120 when being suspended in NR and resuming in NR or LTE are shown. In this example, the security token, e.g. the inter-RAT integrity checksum, is calculated using a new IE defined in NR format and using LTE procedures.

In **Action 1701,** the wireless device 120 in NR is suspended and in **Action 1702,** the wireless device 120 reselects to a new cell. In **Action 1703** the wireless device 120 initiates an RRC resume procedure due to RAU, TAU, data, and/or signaling. In **Action 1704,** the wireless device 120 checks whether or not the target cell, i.e. the second cell 12, belongs to the same RAT as the source cell, i.e. the first cell 11. In other words, since the source cell is an NR cell, the wireless device 120 checks whether or not the target cell is also a NR cell.

In an intra-RAT procedure, i.e. when then the target cell is also a NR cell, the wireless device 120 performs Actions 1705 and 1706. In **Action 1705,** the wireless device 120 calculates the security token, e.g. the ResumeMAC-I, using the source PhysCellID, the source C-RNTI and the target cell identity in VarResumeMAC-Input. In **Action 1706,** the wireless device 120 transmits an RRCResumeRequest to the network node, e.g. to the first radio network node 110 and/or to the second radio network node 112. The RRCResumeRequest comprises the calculated security token.

In an inter-RAT procedure, i.e. when then the target cell is not in the same RAT as the source cell, e.g. when the source cell is a NR cell and the target cell is an LTE cell, the wireless device 120 performs Actions 1707, 1708, and 1709. In **Action 1707,** the wireless device 120 uses source Physcellld, uses source NR C-RNTI as C-RNTI and uses target (LTE) cell identity in NR VarInterRAT-ResumeMAC-Input. In **Action 1708,** the wireless device 120 calculates the security token in LTE, e.g. the ShortResume-MAC-I, using the NR VarInterRAT-ResumeMAC-Input. Thus, the wireless device 120 calculates the security token using NR format and LTE procedures. In **Action 1709,** the wireless device 120 transmits an RRCConnectionResumeRequest to the network node, e.g. to the second radio network node 112. The RRCConnectionResumeRequest comprises the calculated security token.

### 2.8 Some fourth embodiments. Update current definition of variables to include both intra-RAT and inter-RAT parameters and define procedures in target RAT

2.8.1. Solution 4.1: Update definition of VarShortINACTIVE-MAC-Input in LTE and VarResumeMAC-Input in NR to also include inter-RAT parameters and define procedures in the target RAT,

Another solution to the problem is to introduce a new parameters (or extend the recently introduced *VarShortINACTIVE-MAC-Input* in LTE and extend the *VarResumeMAC-Input* in NR) to include both LTE and NR variables, and used in both intra-RAT and inter-RAT suspend/resume. This variable may for instance be defined using a choice structure, where depending on the type of source and target RAT, the appropriate choice were made.

### 2.8.1.1. Suspend/resume from NR to LTE

If the UE is suspended in NR and resumes in LTE, the UE and network would use the variables and procedures in the target RAT (i.e. LTE).

### 2.8.1.1.1. Updates to 36.331

The updated IE may be defined in LTE only as e.g.:

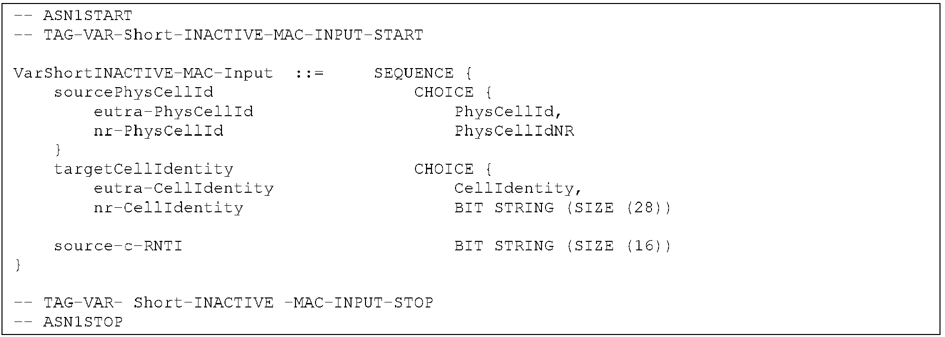

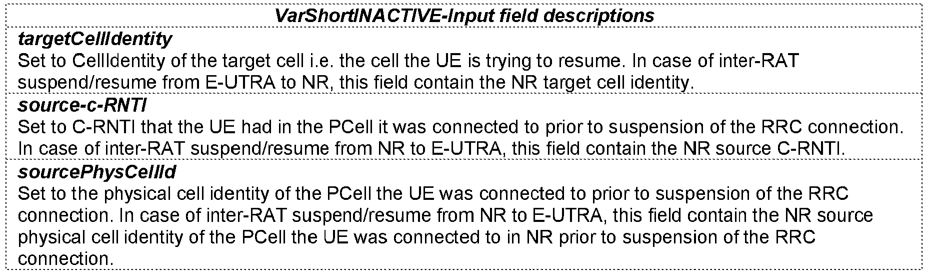

And the procedures may be updated as:

The procedures of section 5.3.3.3a in TS 36.331 may be extended to e.g.:
1> if the previously configured integrity protection algorithms are not available to configure in the target system:
2> inform upper layers about the failure to resume the RRC connection and the procedure ends;
1> set the *shortResumeMAC-I* to the 16 least significant bits of the MAC-I calculated:
2> over the ASN.1 encoded as per section 8 (i.e., a multiple of 8 bits) *VarShortResumeMAC-Input* (or *VarShortResumeMAC-Input-NB* in NB-IoT or *VarShortINACTlVE-MAC-Input* in RRC INACTIVE);
2> with the K_{RRCint} key and the previously configured integrity protection algorithm; and
2> with all input bits for COUNT, BEARER and DIRECTION set to binary ones;

### NOTE: If the Source RAT was NR, use the previous NR K_{RRCint} key as E-UTRA K_{RRCint} key and use integrity protection algorithm matching the previously configured NR integrity protection algorithm.

As the *VarShortINACTIVE-MAC-Input* would be applicable both for resume from E-UTRA or NR, the same procedures apply.

### 5.8.1.2. Suspend/resume from LTE to NR

If the UE is suspended in LTE and resumes in NR, the UE would use the variables and procedures of the target RAT (i.e. NR). This may either be an extension of the existing *VarResumeMAC-Input*, or a new parameter

### 2.8.1.2.1. Updates to 38.331

The updates to 38.331 may be:

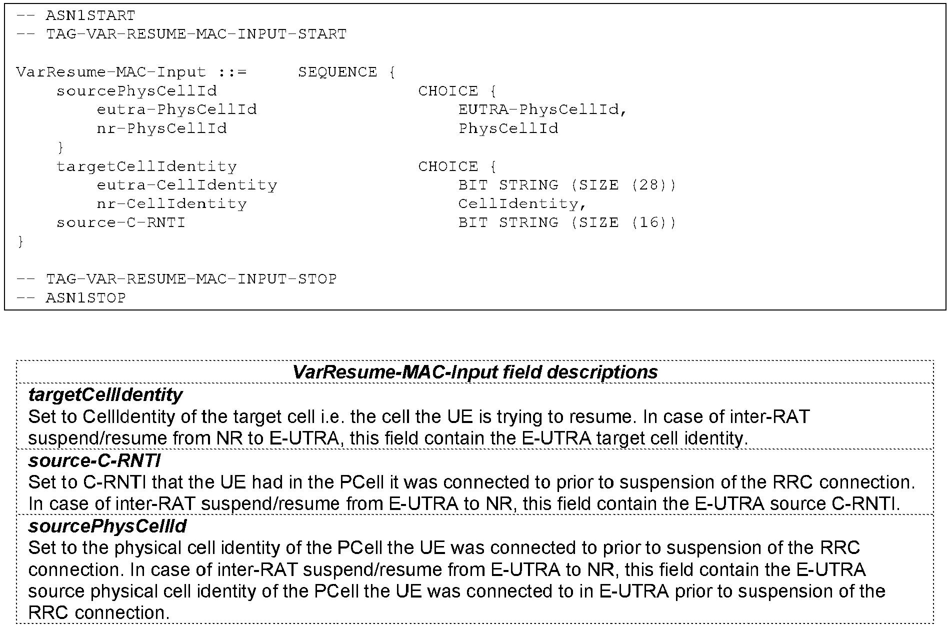

As the procedures already calculate the *ResumeMAC-I* based on the *VarResumeMAC-Input,* there would in this solution not need any updates to the procedures:

### 2.8.2. Solution 4.2: Update only definition of VarShortINACTIVE-MAC-Input in LTE to also include inter-RAT parameters and define procedures in the target RAT,

Another solution to the problem is to introduce a new IE (or extend the recently introduced *VarShortINACTIVE-MAC-Input)* in only LTE specification (as described in solution 4.1) which to be used for calculating the security token for resume in either direction of inter-RAT RRC suspend/resume.

If the UE is suspended in LTE and resumes in NR, the UE and network may calculate the Resume MAC-I using the source C-RNTI and source PCI along with the target Cell identity. However, if the IE *VarShortINACTIVE-MAC-Input* is extended to also include inter-RAT suspend/resume, the same IE would be used both in intra-LTE and inter-RAT suspend/resume.

If the UE is suspended in NR and resumes in LTE, the UE and network may calculate the *ShortResumeMAC-I* using the source C-RNTI and source PCI along with the target Cell Identity in the *VarShortINACTIVE-MAC-Input* (or similar) in LTE.

### 2.8.2.1.1. Updates to 36.331

The new IE may be defined in LTE only as e.g.:

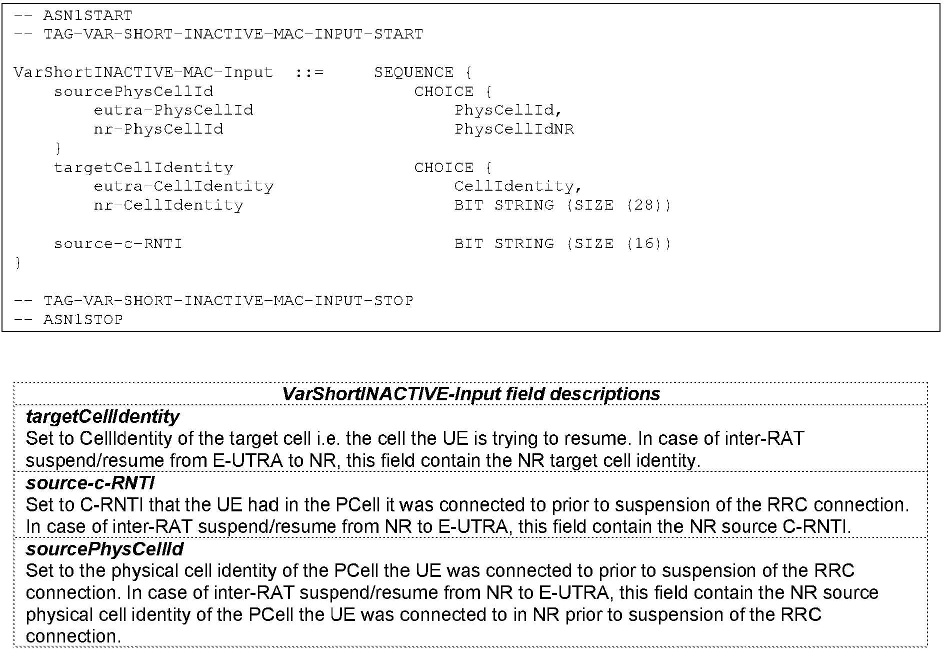

And the procedures may be updated as:

The procedures of section 5.3.3.3a in TS 36.331 may be extended to e.g.:
1> if the previously configured integrity protection algorithms are not available to configure in the target system:
2> inform upper layers about the failure to resume the RRC connection and the procedure ends;
1> set the *shortResumeMAC-I* to the 16 least significant bits of the MAC-I calculated:
2> over the ASN.1 encoded as per section 8 (i.e., a multiple of 8 bits) *VarShortResumeMAC-Input* (or *VarShortResumeMAC-Input-NB* in NB-IoT or *VarShortINACTIVE-MAC-Input* in RRC INACTIVE);
2>with the K_{RRCint} key and the previously configured integrity protection algorithm; and
2>with all input bits for COUNT, BEARER and DIRECTION set to binary ones;

### NOTE: If the Source RAT was NR, use the previous NR K_{RRCint} key as E-UTRA K_{RRCint} key and use integrity protection algorithm matching the previously configured NR integrity protection algorithm.

As the *VarShortINACTIVE-MAC-Input* would be applicable both for resume from E-UTRA or NR, the same procedures apply.

### 2.8.2.1.2. Updates to 38.331

The corresponding updates to 38.331 would be:

2.3.13.3 Actions related to transmission of *RRCResumeRequest* message The UE shall set the contents of *RRCResumeRequest* or *RRCResumeRequest1* message as follows:
1> if field *useFullResumeID* is signalled in *SIB1:*
2> select *RRCResumeRequest1* as the message to use;
2> set the *resumeldentity* to the stored *fulll-RNTI* value;
1> else:
2> select *RRCResumeRequest* as the message to use;
2> set the *shortResumeldentity* to the stored *shortl-RNTI* value;
1> set the *resumeCause* in accordance with the information received from upper layers or from AS layer;
1> if the source cell was an NR cell:
2> set the *resumeMAC-I* to the 16 least significant bits of the MAC-I calculated:
3> over the ASN.1 encoded as per section 8 (i.e., a multiple of 8 bits) *VarResumeMAC-Input;*
3> with the K_{RRCint} key and the previously configured integrity protection algorithm; and
3> with all input bits for COUNT, BEARER and DIRECTION set to binary ones;
1> else (if the source cell was an LTE cell):
2> if the previously configured integrity protection algorithms are not available to configure in the target system:
3> inform upper layers about the failure to resume the RRC connection and the procedure ends;
2> set the *resumeMAC-I* to the 16 least significant bits of the MAC-I calculated:
3> over the ASN.1 encoded as per section 8 (i.e., a multiple of 8 bits) *VarShortINACTIVE-MAC-Input* as defined in TS 36.331;
3> with the previously configured E-UTRA K_{RRCint} key and the NR integrity protection algorithms corresponding to the previously configured integrity protection algorithm; and
3> with all input bits for COUNT, BEARER and DIRECTION set to binary ones;

### 2.8.3. Solution 4.3: Update definition of VarResumeMAC-Input in NR to also include inter-RAT parameters and define procedures in the target RAT,

Another solution to the problem is to introduce a new IE (or extend the *VarResumeMAC-Input)* in only NR specification which to be used for calculating the security token for resume in either direction of inter-RAT RRC suspend/resume. This message may for instance be defined using a choice structure, where depending on the type of source and target RAT, the appropriate choice was made.

If the UE is suspended in NR and resumes in LTE, the UE and network may calculate the Resume MAC-I using the source C-RNTI and source PCI along with the target Cell identity. However, if the IE *VarResumeMAC-Input* is extended to also include inter-RAT suspend/resume, the same IE would be used both in intra-LTE and inter-RAT suspend/resume.

If the UE is suspended in LTE and resumes in NR, the UE and network may calculate the *ResumeMAC-I* using the source C-RNTI and source PCI along with the target Cell Identity in the *VarResumeMAC-Input* (or similar) in NR.

### 2.8.3.1.1. Updates to 38.331

The new IE may be defined in NR only as e.g.:

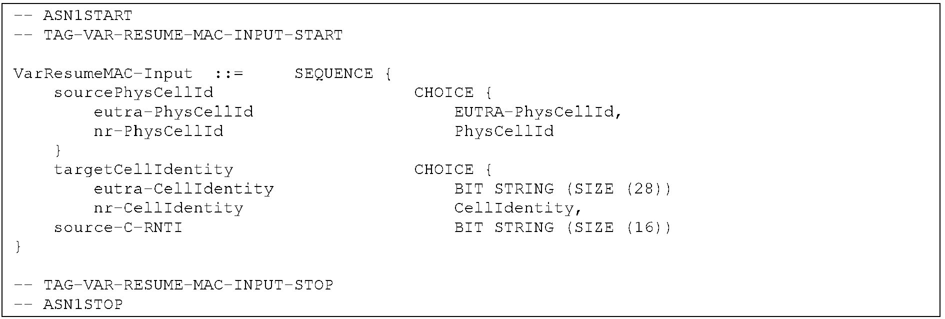

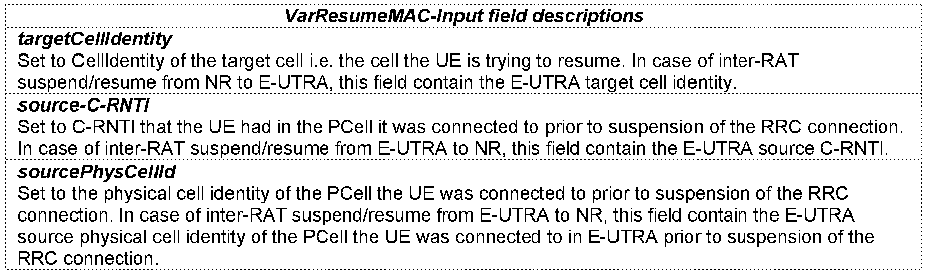

As the procedures already calculate the *ResumeMAC-I* based on the *VarResumeMAC-Input,* there would in this solution not need any updates to the procedures:
Section 5.3.13.3 in TS 38.331 Actions related to transmission of *RRCResumeRequest* message

The UE shall set the contents of *RRCResumeRequest* or *RRCResumeRequest1* message as follows:
1> if field *useFullResumeID* is signalled in *SIB1:*
2> select *RRCResumeRequest1* as the message to use;
2> set the *resumeldentity* to the stored *fulll-RNTI* value;
1> else:
2> select *RRCResumeRequest* as the message to use;
2> set the *shortResumeldentity* to the stored *shortl-RNTI* value;
1> set the *resumeCause* in accordance with the information received from upper layers or from AS layer;
1 > set the *resumeMAC-I* to the 16 least significant bits of the MAC-I calculated:
2> over the ASN.1 encoded as per section 8 (i.e., a multiple of 8 bits) *VarResumeMAC-Input;*
2>with the K_{RRCint} key and the previously configured integrity protection algorithm; and
2>with all input bits for COUNT, BEARER and DIRECTION set to binary ones;

### 2.8.3.1.1. Updates to 36.331

The procedures of section 5.3.3.3a in TS 36.331 may be extended to e.g.:
1> if the previously configured integrity protection algorithms are not available to configure in the target system:
2> inform upper layers about the failure to resume the RRC connection and the procedure ends;
1> if source cell is an LTE cell:
2> set the *shortResumeMAC-I* to the 16 least significant bits of the MAC-I calculated:
3> over the ASN.1 encoded as per section 8 (i.e., a multiple of 8 bits) *VarShortResumeMAC-Input* (or *VarShortResumeMAC-Input-NB* in NB-loT or *VarShortINACTIVE-MAC-Input* in RRC INACTIVE);
3> with the K_{RRCint} key and the previously configured integrity protection algorithm; and
3> with all input bits for COUNT, BEARER and DIRECTION set to binary ones;

### NOTE: If the Source RAT was NR, use the previous NR K_{RRCint} key as E-UTRA K_{RRCint} key and use integrity protection algorithm matching the previously configured NR integrity protection algorithm.

1> else:
2> set the *shortResumeMAC-I* to the 16 least significant bits of the MAC-I calculated:
3> over the ASN.1 encoded as per section 8 (i.e., a multiple of 8 bits) *VarResumeMAC-Input* as defined in TS 38.331;
3> with the K_{RRCint} key and the previously configured integrity protection algorithm; and
3> with all input bits for COUNT, BEARER and DIRECTION set to binary ones;

### 2.9. Some fifth embodiments: Use input parameter format of the target system and use dummy values in place of source system parameters

In some embodiments, the definitions of the LTE *VarShortResumeMAC-Input*, *VarShortINACTIVE-MAC-Input* (or similar parameter) is used when target is LTE and the NR *VarResumeMAC-Input* (or similar parameter) used when the target is NR. For the variables requiring parameters from the source RAT (e.g. the source C-RNTI and source PCI). The UE and network uses a constant dummy value in the format of the target RAT (e.g. a bit string of 0's).

Some fifth embodiments may be combined with e.g. some first embodiment, where e.g. the source C-RNTI is used in the target RAT, and only the source PCI is replaced with dummy values, or the other way around, where the source PCI is adopted to the target Rat format (using e.g. padding or truncation), while the source C-RNTI is replaced with dummy values.

### 2.9.1. Suspend/resume from LTE to NR: Calculate and use NR ResumeMAC-I using dummy values for source PCI and C-RNTI and NR Cell identity as input

If the UE is suspended in LTE and resumes the connection in NR, the UE and network would need to calculate the NR *ResumeMAC-I* using the NR *VarResumeMAC-Input*. The *VarResumeMAC-Input* contain source PCI, source RNTI and target Cell identity. The target Cell identity is obtained from the *SystemlnformationBlockType1 (SIB1)* which is broadcast by the target cell.

However, the source PCI and source RNTI were obtained in another RAT (i.e. LTE) and have different characteristics compared to corresponding parameters in NR.

For the parameter C-RNTI, the *VarResumeMAC-Input* uses a constant bit string (e.g. 16 bits set to 0) as input.

Similarly for the PCI, the *VarResumeMAC-Input* uses a constant bit string (e.g. 10 bits set to 0) as input

### 2.9.1.1. Updates of TS 38.331

The procedures of section 5.3.13.3 in TS 38.331 may be extended to e.g.:

TS 38.331 5.3.13.3 Actions related to transmission of *RRCResumeRequest* message The UE shall set the contents of *RRCResumeRequestor RRCResumeRequest1* message as follows:
1> if the previously configured integrity protection algorithms are not available to configure in the target system:
2> inform upper layers about the failure to resume the RRC connection and the procedure ends;
1> if field *useFullResumeID* is signalled in *SIB1:*
2> select *RRCResumeRequest1* as the message to use;
2> set the *resumeldentity* to the stored *fulll-RNTI* value;
1> else:
2> select *RRCResumeRequest* as the message to use;
2> set the *shortResumeldentity* to the stored *shortl-RNTI* value;
1> set the *resumeCause* in accordance with the information received from upper layers or from AS layer;
1 > set the *resumeMAC-I* to the 16 least significant bits of the MAC-I calculated:
2> over the ASN.1 encoded as per section 8 (i.e., a multiple of 8 bits) *VarResumeMAC-Input;*
2>with the K_{RRCint} key and the previously configured integrity protection algorithm; and
2>with all input bits for COUNT, BEARER and DIRECTION set to binary ones;

### NOTE: If the Source RAT was E-UTRA, use the previous E-UTRA K_{RRCint} key as NR K_{RRCint} key and use integrity protection algorithm matching the previously configured E-UTRA integrity protection algorithm.

### UE variables

### - VarResumeMAC-Input

The UE variable *VarResumeMAC-Input* specifies the input used to generate the *resumeMAC-I* during RRC Connection Resume procedure.

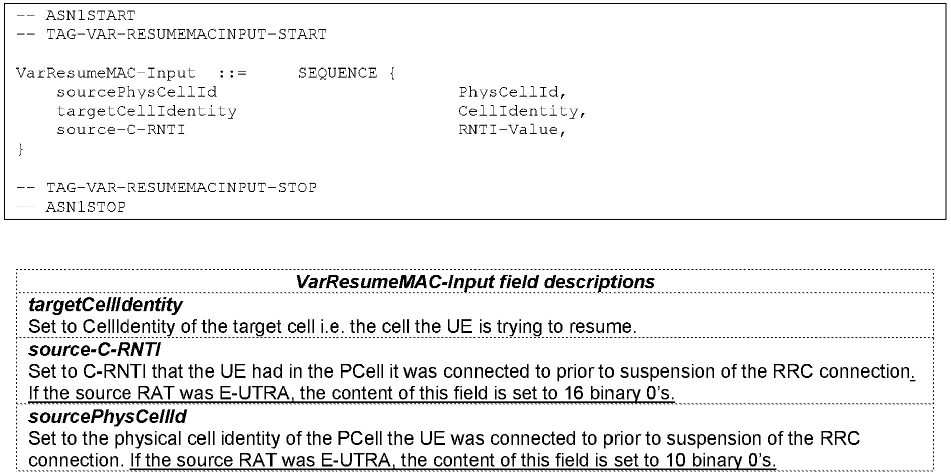

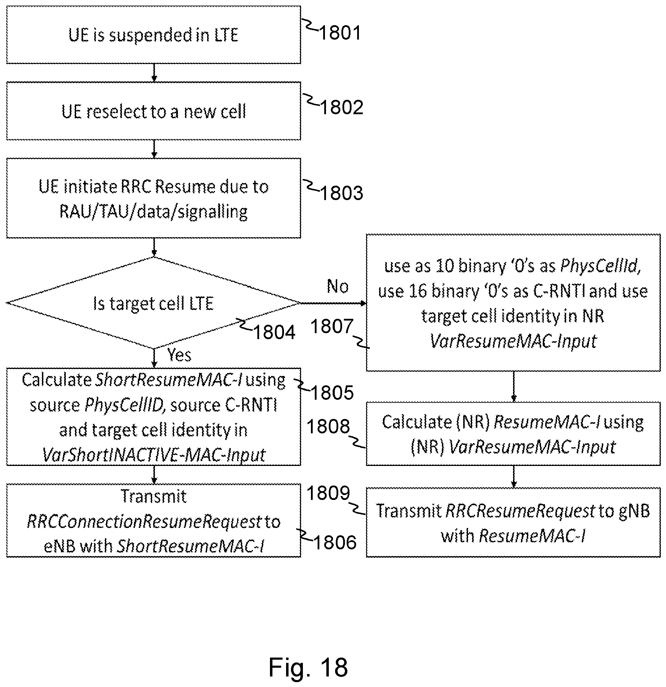

**Figure 18** is a schematic example diagram for how a UE decides how to calculate the security checksum during inter-RAT or intra-RAT suspend/resume from NR to LTE. The diagram depicts one embodiment and should not be considered limiting to alternative solutions. Thus, in Figure 18 actions performed by the wireless device 120 when being suspended in NR and resuming in NR or LTE are shown. In this example, the security token, e.g. the inter-RAT integrity checksum, is calculated using dummy values for the source parameters in case of an inter-RAT suspend and resume procedure.

In **Action 1801,** the wireless device 120 in LTE is suspended and in **Action 1802,** the wireless device 120 reselects to a new cell. In **Action 1803** the wireless device 120 initiates an RRC resume procedure due to RAU, TAU, data, and/or signaling. In **Action 1804,** the wireless device 120 checks whether or not the target cell, i.e. the second cell 12, belongs to the same RAT as the source cell, i.e. the first cell 11. In other words, since the source cell is an LTE cell, the wireless device 120 checks whether or not the target cell is also an LTE cell.

In an intra-RAT procedure, i.e. when then the target cell is also an LTE cell, the wireless device 120 performs Actions 1805 and 1806. In **Action 1805,** the wireless device 120 calculates the security token, e.g. the ShortResumeMAC-I, using the source PhysCellID, the source C-RNTI and the target cell identity comprised in VarShortINACTIVE-MAC-Input. In **Action 1806,** the wireless device 120 transmits an RRCConnectionResumeRequest to the network node, e.g. to the first radio network node 110 and/or to the second radio network node 112. The RRCConnectionResumeRequest comprises the calculated security token.

In an inter-RAT procedure, i.e. when then the target cell is not in the same RAT as the source cell, e.g. when the source cell is an LTE cell and the target cell is a NR cell, the wireless device 120 performs Actions 1807, 1808, and 1809. In **Action 1807,** the wireless device 120 uses 10 binary '0's as Physcellld, uses 16 binary '0's as C-RNTI and uses target cell identity in NR VarResumeMAC-Input. In **Action 1808,** the wireless device 120 calculates the security token in NR, e.g. the NR ResumeMAC-I, using the NR VarResumeMAC-Input. Thus, the wireless device 120 calculates the security token using NR format and NR procedures. In **Action 1809,** the wireless device 120 transmits an RRCResumeRequest to the network node, e.g. to the second radio network node 112. The RRCResumeRequest comprises the calculated security token.

### 2.9.2. Suspend/resume from NR to LTE: Calculate and use ShortResumeMAC-I in LTE using dummy values for source PCI and C-RNTI and LTE Cell Identity as input

If the UE is suspended in NR and resumes the connection in LTE, the UE and network would need to calculate the LTE *shortResumeMAC-I* using the LTE *VarShortINACTIVE-MAC-Input* or the LTE *VarShortResumeMAC-Input.* The *VarShortINACTIVE-MAC-Input* and the *VarShortResumeMAC-Input* both contain source PCI, source C-RNTI and target Cell identity while the *VarShortResumeMAC-Input* also contain a constant *ResumeDiscriminator* consisting of a single binary '1'. The target Cell identity is obtained from the *SystemlnformationBlockType1 (SIB1)* which is broadcast by the target cell.

However, the source PCI and source RNTI were obtained in another RAT (i.e. NR) and have different characteristics compared to corresponding parameters in LTE.

For the parameter C-RNTI, the *VarShortINACTIVE-MAC-Input* uses a constant bit string (e.g. 16 bits set to '0') as input.

Similarly for the PCI, the *VarShortINACTIVE-MAC-Input* uses a constant bit string (e.g. 9 bits set to '0') as input.

If the UE was configured with an integrity protection algorithm in NR which is not supported in LTE (e.g. a hypothetical future NIA4, different from any algorithm in LTE), the UE may either:
- Abort the resume procedure and fallback to RRC Setup
- Use a predefined fallback algorithm which is supported in both LTE and NR (e.g. any of the algorithms EIA0-EIA3)

### 2.9.2.1 Updates of TS 36.331

The updates in this section are equally applicable if the parameter *VarShortResumeMAC-Input* or the *VarShortINACTIVE-MAC-Input* are modified to enable inter-RAT resume. Here the examples are given for the *VarShortINACTIVE-MAC-Input.*

The procedures of section 5.3.3.3a in TS 36.331 may be extended to e.g.:
1> if the previously configured integrity protection algorithms are not available to configure in the target system:
2> inform upper layers about the failure to resume the RRC connection and the procedure ends;
1 > set the *shortResumeMAC-I* to the 16 least significant bits of the MAC-I calculated:
2> over the ASN.1 encoded as per section 8 (i.e., a multiple of 8 bits) *VarShortResumeMAC-Input* (or *VarShortResumeMAC-Input-NB* in NB-IoT or *VarShortINACTIVE-MAC-Input* in RRC INACTIVE);
2>with the K_{RRCint} key and the previously configured integrity protection algorithm; and
2>with all input bits for COUNT, BEARER and DIRECTION set to binary ones;

### NOTE: If the Source RAT was NR, use the previous NR K_{RRCint} key as E-UTRA K_{RRCint} key and use integrity protection algorithm matching the previously configured NR integrity protection algorithm.

Where *VarShortINACTIVE-MAC-Input* is defined as:

### UE variables

### - VarShortINACTIVE-MAC-Input

The UE variable *VarShortINACTIVE-MAC-Input* specifies the input used to generate the *shortResumeMAC-I* during RRC Connection Resume procedure.

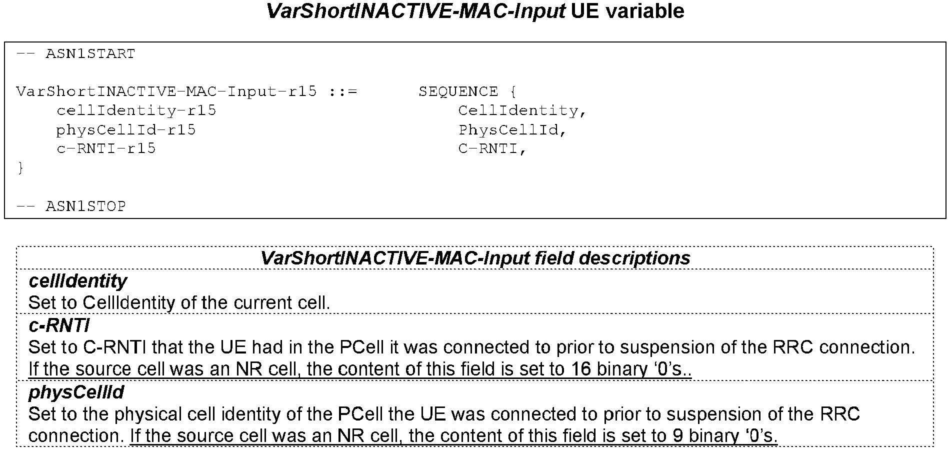

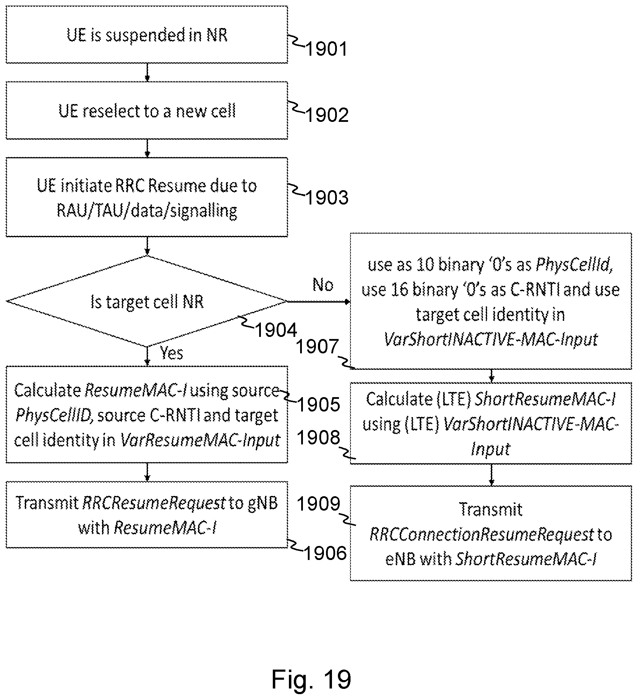

**Figure 19** is a schematic example diagram for how a UE decides how to calculate the security checksum during inter-RAT or intra-RAT suspend/resume from NR to LTE. The diagram depicts one embodiment and should not be considered limiting to alternative solutions. Thus, in Figure 19 actions performed by the wireless device 120 when being suspended in NR and resuming in NR or LTE are shown. In this example, the security token, e.g. the inter-RAT integrity checksum, is calculated using dummy values for the source parameters in case of an inter RAT suspend and resume procedure.

In **Action 1901,** the wireless device 120 in NR is suspended and in **Action 1902,** the wireless device 120 reselects to a new cell. In **Action 1903** the wireless device 120 initiates an RRC resume procedure due to RAU, TAU, data, and/or signaling. In **Action 1904,** the wireless device 120 checks whether or not the target cell, i.e. the second cell 12, belongs to the same RAT as the source cell, i.e. the first cell 11. In other words, since the source cell is a NR cell, the wireless device 120 checks whether or not the target cell is also a NR cell.

In an intra-RAT procedure, i.e. when then the target cell is also a NR cell, the wireless device 120 performs Actions 1905 and 1906. In **Action 1905,** the wireless device 120 calculates the security token, e.g. the ResumeMAC-I, using the source PhysCellID, the source C-RNTI and the target cell identity in VarResumeMAC-Input. In **Action 1906,** the wireless device 120 transmits an RRCResumeRequest to the network node, e.g. to the first radio network node 110 and/or to the second radio network node 112. The RRCResumeRequest comprises the calculated security token.

In an inter-RAT procedure, i.e. when then the target cell is not in the same RAT as the source cell, e.g. when the source cell is a NR cell and the target cell is an LTE cell, the wireless device 120 performs Actions 1907, 1908, and 1909. In **Action 1907,** the wireless device 120 uses 10 binary '0's as PhysCellld, uses 16 binary '0's as C-RNTI and uses target cell identity LTE VarShortINACTIVE-MAC-Input. In **Action 1908,** the wireless device 120 calculates the security token in LTE, e.g. the LTE ShortResumeMAC-I, using the LTE VarShortINACTIVE-MAC-Input. Thus, the wireless device 120 calculates the security token using LTE format and LTE procedures. In **Action 1909,** the wireless device 120 transmits an RRCConnectionResumeRequest to the network node, e.g. to the second radio network node 112. The RRCConnectionResumeRequest comprises the calculated security token.

### 52.10 Some sixth embodiments: Instruct UE, i.e. the wireless device 120, how to map source format and target format to calculate ShortResumeMAC-I, i.e. the security token.

Since there is an ambiguity for the UE how to adapt source parameters, i.e. the first set of parameters, to the target format (similar to some first embodiment) or adapt target parameters, i.e. the second set of parameters, to the source format (similar to some second embodiment), the UE may be explicitly instructed how to perform the mapping.

### 2.10.1. Broadcast inter-RAT parameters used for calculating the security token ShortResumeMAC-l during RRC Resume

When the UE is suspended in one RAT and resumes in another, the UE need to calculate the *ShortResumeMAC-I* based on the source C-RNTI, source PCI, and target Cell ID. Instead of mixing parameters from two different RATs, each RAT broadcasts a new set of parameters, only used during inter-RAT procedures, e.g. inter-RAT RRC resume.

### 2.10.1.1. Broadcast inter-RAT cell ID

In some embodiments, the broadcasted information is extended to transmit, not only the cell ID in SystemInformationBlockType1 (SIB1):

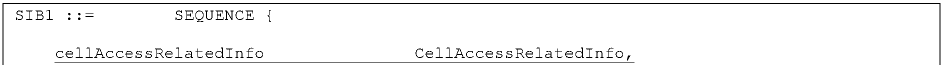

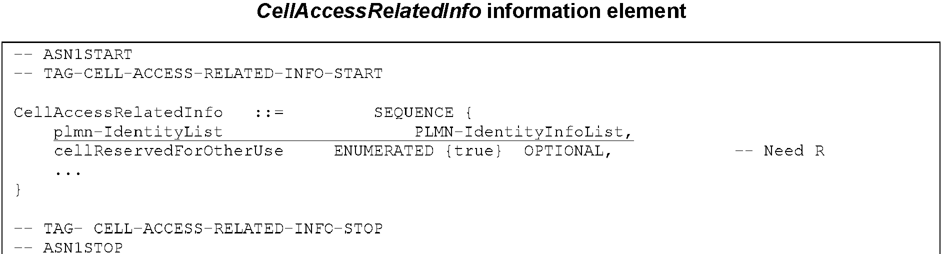

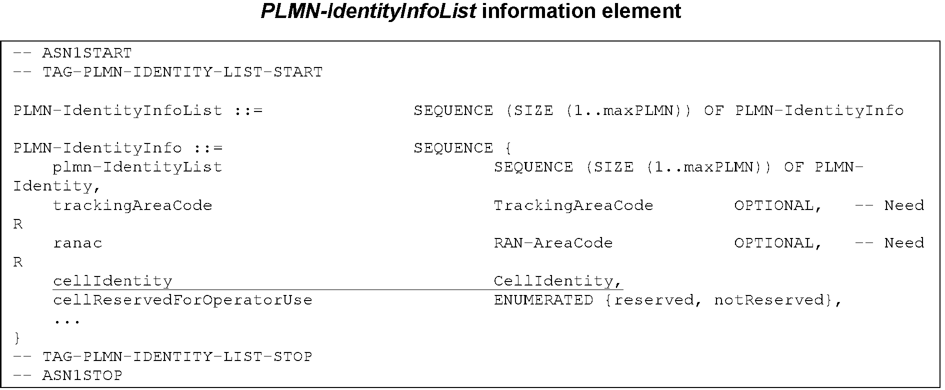

But also transmit an inter-RAT cell ID. This inter-RAT cell ID may be placed e.g. as an extension in the PLMN-IdentitylnfoList in 38.331:

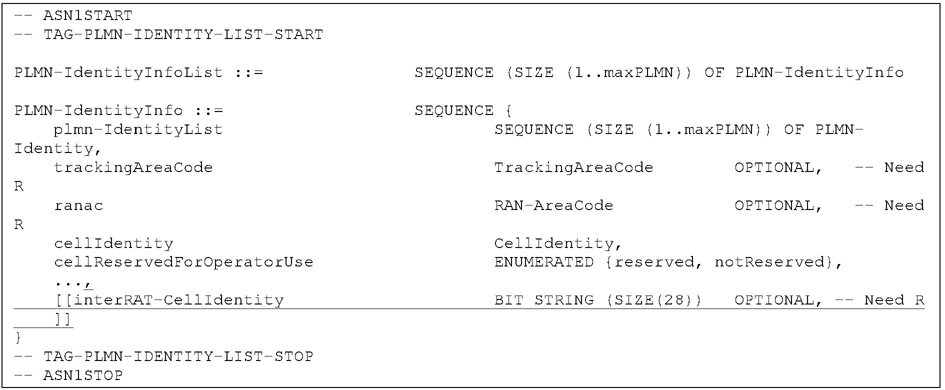

Alternatively, the inter-RAT cell identity may be broadcasted in one of the other System Information Blocks (SIB), e.g. SIB5 which is used for inter-RAT cell reselection and information.

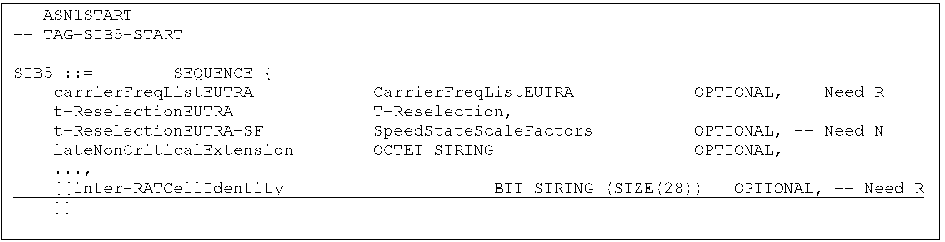

The corresponding changes to LTE specifications in 36.331 may be e.g.:

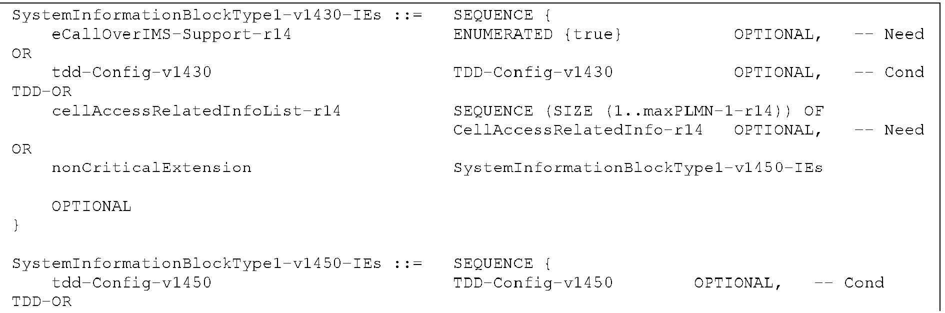

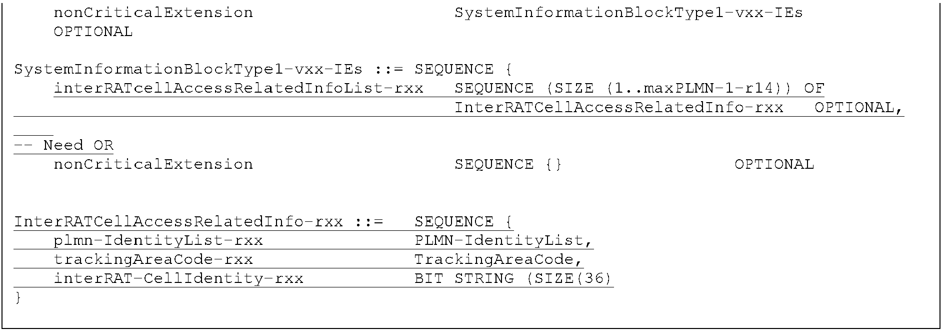

Thus, when a UE, i.e. the wireless device 120, is suspended in a first RAT being NR and attempts to resume in a second RAT being LTE, it uses the 36 bit *interRAT-CellIdentity* in the calculations of the ShortResumeMAC-I, using the NR *VarResumeMAC-Input* defined in TS 38.331. Since the source C-RNTI, source PCI and target inter-RAT cell identity are all in the correct format, the UE may directly derive the MAC-I. The UE then truncates the MAC-I to the 16 LSB and uses it as the *ShortResumeMAC-I* when resuming in LTE.

Similarly, if the UE, i.e. the wireless device 120, is suspended in a first RAT being LTE and resumes in a second RAT being NR, it uses the 28 bit *interRAT-CellIdentity* broadcasted by the target NR cell in the calculations of the *ResumeMAC-I*, using the LTE *VarShortResumeMAC-Input* defined in TS 36.331. Since the source C-RNTI, source PCI and target inter-RAT cell identity are all in the correct format, the UE may directly derive the MAC-I and then truncate it to the LSB and use it as the *ResumeMAC-I* when resuming in NR.

In a sub-embodiment, the source RAT, i.e. the first RAT, provides the UE with instructions how to convert the target cell ID to the source format. For instance, if the UE is suspended in LTE and resumes in NR, the source LTE may provide a bit string which should be used in a calculation along with the source cell identity to obtain a bit string in the format of the target RAT. For instance, the source RAT may provide a bit string of 8 bits which should be appended to the source cell id. This bit string may also have a different length and used in any other predefined calculation, e.g. addition, multiplication, or use any other function to map the source Cell ID to the target RAT format.

If the UE is suspended in NR and resumes in LTE, the source RAT may provide the UE with an indication how to convert the source cell ID to the target format, e.g. provide a bit string which should be subtracted from the source Cell ID or indicating which bits should be removed from the source cell ID.

### 2.10.1.2. Signal or broadcast inter-RAT PCI and/or C-RNTI

In some embodiments, the network, e.g. the first and/or the second radio network node 110,112, provides the UE with both intra-RAT and inter-RAT PCI to be used when resuming the connection in the same RAT or a different RAT.

Since the UE calculates the PCI based on the Primary Synchronization Signal (PSS) and Secondary Synchronization Signal (SSS) as defined in TS 36.211 and 38.211 in order to broadcast two sets of PCIs in both LTE and NR, the PSS and SSS would need to be extended with additional synchronization signals.

An alternative solution is to provide the UE with a source inter-RAT PCI during RRC release to RRC_INACTIVE. In this way, the NR PCI and LTE PCI will remain independent, but each LTE cell will also be assigned an NR inter-RAT PCI and every NR cell will be provided with an LTE inter-RAT PCI. Similarly, the UE may be provided with two sets of C-RNTI, one to be used during intra-RAT RRC resume and the other to be used during inter-RAT resume.

In a subembodiment, the UE is only provided with a single C-RNTI, but the UE stores the value as two separate C-RNTIs, one for inter-RAT and one for intra-RAT Resume

The extensions to 36.331 may be e.g.

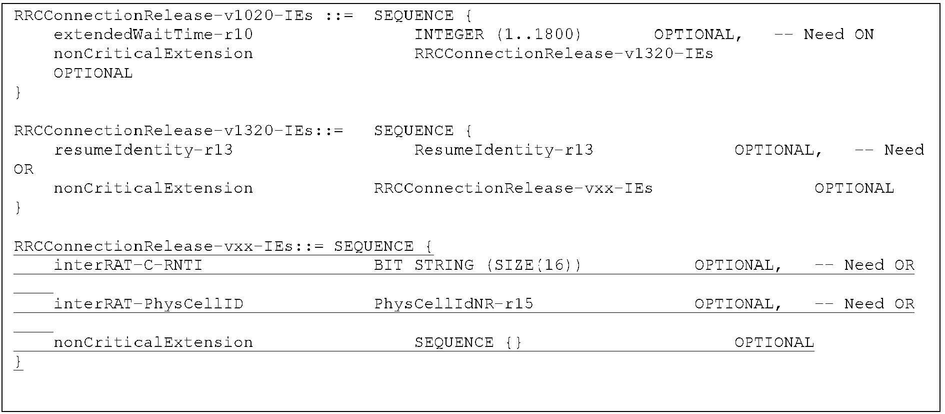

And the extension to TS 38.331 may be e.g.:

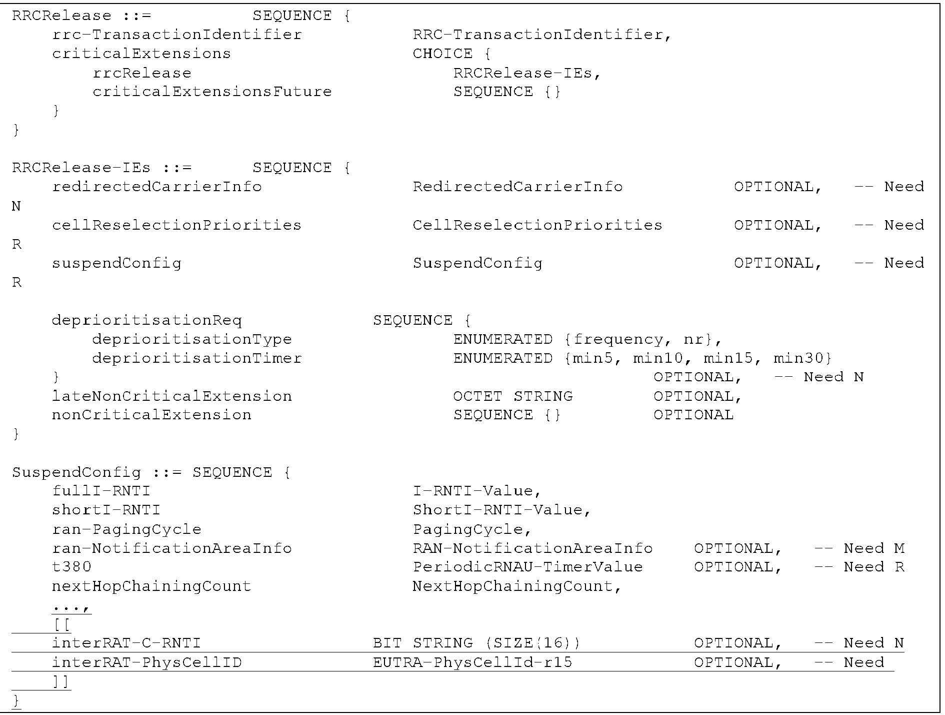

Since the UE would be provided with the C-RNTI and the PCI in the target RAT format, the UE may directly use the source C-RNTI and PCI in the calculation of the target MAC-I using the procedure of the target RAT.

For instance, if the UE is suspended in LTE and resumes in NR, the UE would use the *interRAT-C-RNTI* and *interRAT-PhysCellID* it received in LTE in the NR *VarResumeMAC-Input* (or similar) to calculate the *ResumeMAC-I* to be used in the RRCResumeRequest message.

Similarly, if the UE is suspended in NR and resumes in LTE; the UE would use the *interRAT-C-RNTI* and the *interRAT-PhysCellID* it received in NR in the LTE *VarShortResumeMAC-Input* or *VarShortINACTIVE-MAC-Input* (or similar) to calculate the *ShortResumeMAC-I* to be used in the *RRCConnectionResumeRequest* message.

In a subembodiment, the network, e.g. the first and/or second radio network node 110,112, only instructs the UE how to convert the source parameter to the target parameter using a smaller signaling. For instance, in case of suspend/resume from LTE to NR (where the source PCI is 9 bits but the target expects 10 bits), the source may signal a single bit used to append to the source PCI. Alternatively, the source may signal a bit string used in a calculation along with the source PCI to create the extended PCI in the target format.

If the UE suspends in NR and resumes in LTE, the source may e.g. indicate to the UE which bit the UE should omit, i.e. since the source PCI is 10 bits, the source may include an integer from 1 to 10 (i.e. a bit string containing 4 bits) to indicate which bit is excluded. The provided bit string may also be used in a calculation to obtain the shorter PCI in the target format.

### Further Extensions and Variations

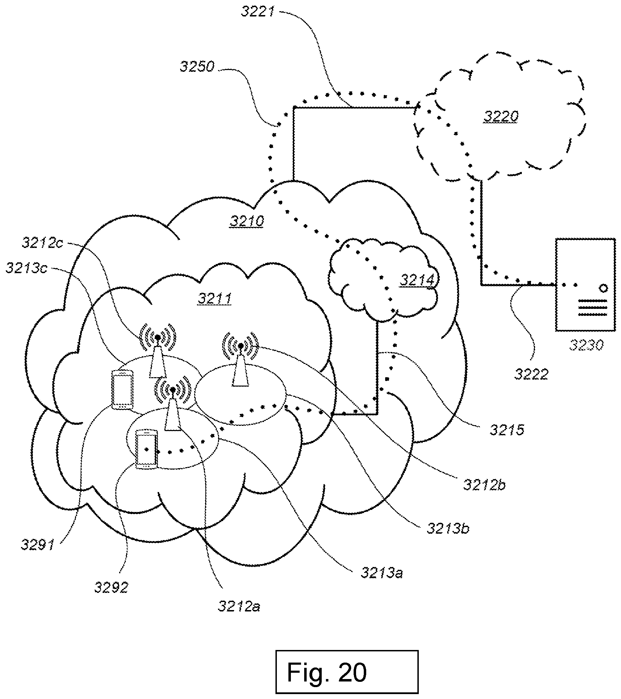

With reference to **Figure 20**, in accordance with an embodiment, a communication system includes a telecommunication network 3210 such as the wireless communications network 100, e.g. a WLAN, such as a 3GPP-type cellular network, which comprises an access network 3211, such as a radio access network, and a core network 3214. The access network 3211 comprises a plurality of base stations 3212a, 3212b, 3212c, such as the network node 110, 112, 130, access nodes, AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) e.g. the wireless device 120 such as a Non-AP STA 3291 located in coverage area 3213c is configured to wirelessly connect to, or be paged by, the corresponding base station 3212c. A second UE 3292 e.g. the wireless device 122 such as a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 20 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

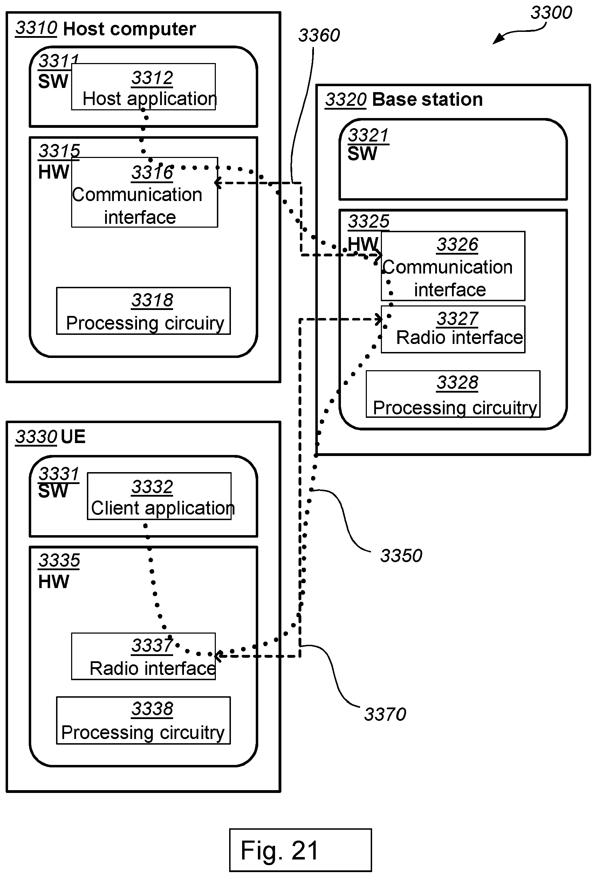

Example implementations, in accordance with an embodiment, of the UE, base station and host computer discussed in the preceding paragraphs will now be described with reference to Figure 21. In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Figure 21) served by the base station 3320. The communication interface 3326 may be configured to facilitate a connection 3360 to the host computer 3310. The connection 3360 may be direct or it may pass through a core network (not shown in Figure 21) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Figure 21 may be identical to the host computer 3230, one of the base stations 3212a, 3212b, 3212c and one of the UEs 3291, 3292 of Figure 20, respectively. This is to say, the inner workings of these entities may be as shown in Figure 21 and independently, the surrounding network topology may be that of Figure 20.

In Figure 21, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the pSIM scheduling allowing more positioning assistance data to be broadcasted.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

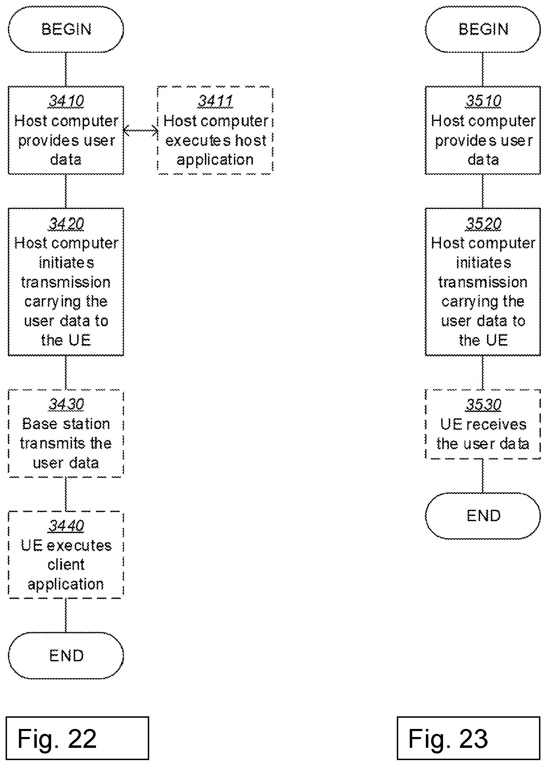

Figures 20 and 21 and the corresponding text are about a downstream aspect of the radio-related invention, while figures 22 and 23 and the corresponding text discuss an upstream aspect.

FIGURE 22 is a flowchart illustrating a method implemented in a communication system, in accordance with one embodiment. The communication system includes a host computer, a base station such as a AP STA, and a UE such as a Non-AP STA which may be those described with reference to Figures 20 and 21. For simplicity of the present disclosure, only drawing references to Figure 20 will be included in this section. In a first action 3410 of the method, the host computer provides user data. In an optional subaction 3411 of the first action 3410, the host computer provides the user data by executing a host application. In a second action 3420, the host computer initiates a transmission carrying the user data to the UE. In an optional third action 3430, the base station transmits to the UE the user data which was carried in the transmission that the host computer initiated, in accordance with the teachings of the embodiments described throughout this disclosure. In an optional fourth action 3440, the UE executes a client application associated with the host application executed by the host computer.

FIGURE 23 is a flowchart illustrating a method implemented in a communication system, in accordance with one embodiment. The communication system includes a host computer, a base station such as a AP STA, and a UE such as a Non-AP STA which may be those described with reference to Figures 20 and 21. For simplicity of the present disclosure, only drawing references to Figure 23 will be included in this section. In a first action 3510 of the method, the host computer provides user data. In an optional subaction (not shown) the host computer provides the user data by executing a host application. In a second action 3520, the host computer initiates a transmission carrying the user data to the UE. The transmission may pass via the base station, in accordance with the teachings of the embodiments described throughout this disclosure. In an optional third action 3530, the UE receives the user data carried in the transmission.

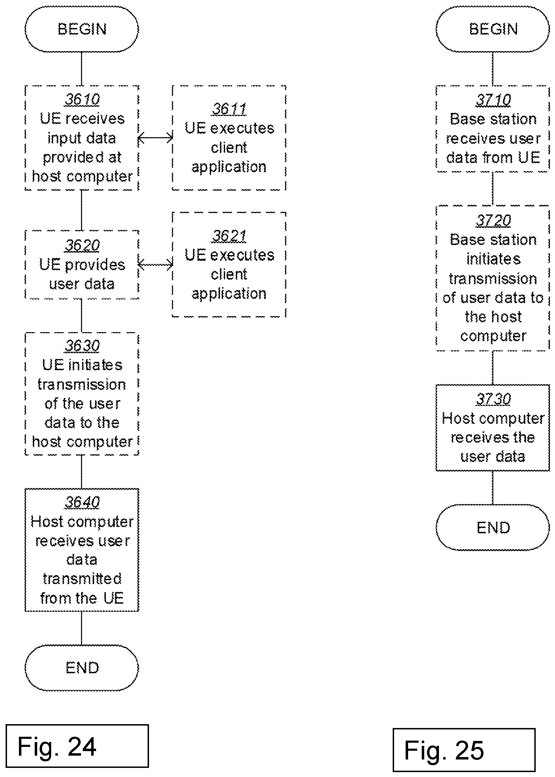

FIGURE 24 is a flowchart illustrating a method implemented in a communication system, in accordance with one embodiment. The communication system includes a host computer, a base station such as a AP STA, and a UE such as a Non-AP STA which may be those described with reference to Figures 20 and 21. For simplicity of the present disclosure, only drawing references to Figure 24 will be included in this section. In an optional first action 3610 of the method, the UE receives input data provided by the host computer. Additionally or alternatively, in an optional second action 3620, the UE provides user data. In an optional subaction 3621 of the second action 3620, the UE provides the user data by executing a client application. In a further optional subaction 3611 of the first action 3610, the UE executes a client application which provides the user data in reaction to the received input data provided by the host computer. In providing the user data, the executed client application may further consider user input received from the user. Regardless of the specific manner in which the user data was provided, the UE initiates, in an optional third subaction 3630, transmission of the user data to the host computer. In a fourth action 3640 of the method, the host computer receives the user data transmitted from the UE, in accordance with the teachings of the embodiments described throughout this disclosure.

FIGURE 25 is a flowchart illustrating a method implemented in a communication system, in accordance with one embodiment. The communication system includes a host computer, a base station such as a AP STA, and a UE such as a Non-AP STA which may be those described with reference to Figures 20 and 21. For simplicity of the present disclosure, only drawing references to Figure 25 will be included in this section. In an optional first action 3710 of the method, in accordance with the teachings of the embodiments described throughout this disclosure, the base station receives user data from the UE. In an optional second action 3720, the base station initiates transmission of the received user data to the host computer. In a third action 3730, the host computer receives the user data carried in the transmission initiated by the base station.

When using the word "comprise" or "comprising" it shall be interpreted as nonlimiting, i.e. meaning "consist at least of".

### Abbreviation Explanation

- MAC-I: Message Authentication Code - Integrity
- RRC: Radio Resource Control
- NG-RAN: Next Generation Radio Access Network
- RNTI: Radio Network Temporary Identifier
- C-RNTI: Cell RNTI
- I-RNTI: Inactive RNTI
- NR: New Radio (5G)
- LTE: Long Term Evolution (4G)
- MAC-I: Message Authentication Code - Integrity
- RRC: Radio Resource Control
- NG-RAN: Next Generation Radio Access Network
- RNTI: Radio Network Temporary Identifier
- C-RNTI: Cell RNTI
- I-RNTI: Inactive RNTI
- NR: New Radio (5G)
- LTE: Long Term Evolution (4G)
- EPC: Evolved Packet Core
- EPS: Evolved Packet System
- 5GC: 5G Core
- 5GS: 5G System
- PDCP: Packet Data Convergence Protocol
- PCI: Physical Cell Identity
- NAS: Non Access Stratum
- NIA: NR Integrity Protection Algorithm
- EIA: E-UTRA Integrity Protection Algorithm
- E-UTRA: Evolved Universal Terrestrial Radio Access
- RAT: Radio Access Technology

## Claims

1. A method performed by a wireless device (120) for resuming a radio connection in a wireless communications network (100) comprising a first Radio Access Technology, RAT, and a second RAT being different from the first RAT, wherein the wireless device (120) is operating in a first cell (11) served by a first radio network node (110) operating in the first RAT, and wherein the method comprises:
when a connection with first cell (11) is suspended,
- *performing (601)* a re-selection to a second cell (12) served by a second radio network node (112) operating in the second RAT;
- *triggering* (602) an RRC resume procedure in the second cell (12);
- *receiving (603)* a first set of parameters associated with the first cell (11), wherein the first set of parameters comprises at least one parameter identifying the wireless device (120) or the first cell (11);
- *receiving (604)* a second set of parameters associated with the second cell (12), wherein the second set of parameters comprises at least one parameter identifying the wireless device (120) or the second cell (12); the method is **characterised by**
- *determining (605)* an updated version of one or more parameters of the first set of parameters or an updated version of one or more parameters of the second set of parameters;
- *determining (606)* a security token based on at least one out of the first set of parameters and the updated version of the one or more parameters of the first set of parameters, and based on at least one out of the second set of parameters and the updated version of the one or more parameters of the second set of parameters; and
- *transmitting (607),* to the second cell (12), a resume request message comprising the security token.

2. The method of claim 1, wherein the first set of parameters comprises one or more out of: a Cell Radio Network Temporary Identifier, C-RNTI, Inactive Radio Network Temporary Identifier, I-RNTI, identifying the wireless device (120), and a Physical Cell Identifier, PCI, identifying the first cell (11), and wherein the second set of parameters comprises a Cell ID or a PCI identifying the second cell (12).

3. The method of claim 1, wherein the *determining (605)* of the updated version of the one or more parameters of the first set of parameters comprises:
- converting the one or more parameters of the first set of parameters to a format corresponding to the format of the one or more parameters of the second RAT by performing one or more out of:
mapping, recalculating, or truncating the one or more parameters of the first set of parameters to a shortened bit string when the first RAT is 5G New Radio, NR, technology and the second RAT is Long Term Evolution, LTE, technology, and
mapping, recalculating, or padding the one or more parameters of the first set of parameters to an extended bit string when the first RAT is LTE and the second RAT is NR, and
- using the converted one or more parameters of the first set of parameters in one or more variables defined in the second RAT as input in calculation of the security token for the second RAT.

4. The method of claim 1 or 3, wherein the *determining (605)* of the updated version of the one or more parameters of the second set of parameters comprises:
- converting the one or more parameters of the second set of parameters to a format corresponding to the format of the one or more parameters of the first set of parameters by performing one or more out of:
mapping, recalculating, or truncating the one or more parameters of the second set of parameters to a shortened bit string when the first RAT is LTE technology and the second RAT is NR technology and
mapping, recalculating, or padding the one or more parameters of the second set of parameters to an extended bit string when the first RAT is NR and the second RAT is LTE, and
- using the converted one or more parameters of the second set of parameters in one or more variables defined in the first RAT as input in calculation of the security token for the first RAT.

5. The method of claim 1 or 2, further comprising:
- creating a new variable comprising the one or more parameters of the first set of parameters in the format of the first RAT and comprising the one or more parameters of the second set of parameters in the format of the second RAT, and
wherein the *determining (606)* of the security token comprises:
using the new variable as input in calculation of the security token for the second RAT.

6. The method of claim 5, wherein the new variable is an extension of an existing variable.

7. The method of claim 1, wherein the *determining (605)* of the updated version of the one or more parameters of the first set of parameters or the updated version of the one or more parameters of the second set of parameters comprises:
- extending definition of existing variables to use one or more values in the second RAT format in place of the one or more parameters of the first set of parameters.

8. A method performed by a first radio network node (110) for assisting a wireless device (120) in resuming a radio connection in a wireless communications network (100) comprising a first Radio Access Technology, RAT, and a second RAT being different from the first RAT, wherein the wireless device (120) is operating in a first cell (11) served by the first radio network node (110) operating in the first RAT, and wherein the method comprises:
- *providing (801A)* the wireless device (120) with a first set of parameters associated with the first cell (11), wherein the first set of parameters comprises at least one parameter identifying the wireless device (120) or the first cell (11), and
when a connection between the wireless device (20) and the first cell (11) is suspended:
- *receiving* (802A), from a second radio network node (112) operating in the second RAT, a second set of parameters associated with a second cell (12) served by the second radio network node (112);
- *receiving* (803A), from the second radio network node (112), a security token received by the second radio network node (112) in a resume request message from the wireless device (120) when a radio connection with the first radio network node (110) has been suspended; the method is **characterised by**
- *determining (804A)* an updated version of one or more parameters of the first set of parameters or an updated version of one or more parameters of the second set of parameters and determining an expected security token based on at least one out of the first set of parameters and the updated version of the one or more parameters of the first set of parameters, and based on at least one out of the second set of parameters and the updated version of the one or more parameters of the second set of parameters; and
- by means of the received security token and the determined expected security token, *verifying (805A)* the wireless device's (120) identity;
- when the wireless device (120) is verified as valid, *transmitting (806A)*, to the second radio network node (120), one or more configurations and/or parameters relating to the radio connection to be resumed.

9. The method of claim 8, wherein the *determining* of the updated version of the one or more parameters of the first set of parameters comprises:
- converting the one or more parameters of the first set of parameters to a format corresponding to the format of the one or more parameters of the second RAT by performing one or more out of:
mapping, recalculating or truncating the one or more parameters of the first set of parameters to a shortened bit string when the first RAT is 5G New Radio, NR, technology and the second RAT is Long Term Evolution, LTE, technology, and
mapping, recalculating, or padding the one or more parameters of the first set of parameters to an extended bit string when the first RAT is LTE and the second RAT is NR; and
wherein the *determining (804A)* of the security token comprises:
- using the converted one or more parameters of the first set of parameters in one or more variables defined in the second RAT as input in calculation of the security token for the second RAT.

10. The method of claim 8 or 9, wherein the *determining* of the updated version of the one or more parameters of the second set of parameters comprises:
- converting the one or more parameters of the second set of parameters to a format corresponding to the format of the one or more parameters of the first set of parameters by performing one or more out of:
mapping, recalculating or truncating the one or more parameters of the second set of parameters to a shortened bit string when the first RAT is LTE technology and the second RAT is NR technology, and
mapping, recalculating, or padding the one or more parameters of the second set of parameters to an extended bit string when the first RAT is NR and the second RAT is LTE; and
wherein the *determining (804A)* of the security token comprises:
- using the converted one or more parameters of the second set of parameters in one or more variables defined in the first RAT as input in calculation of the security token for the first RAT.

11. The method of claim 8, further comprising:
- creating a new variable comprising the one or more parameters of the first set of parameters in the format of the first RAT and comprising the one or more parameters of the second set of parameters in the format of the second RAT, and wherein the *determining (804A)* of the security token comprises:
- using the new variable as input in calculation of the security token for the second RAT.

12. The method of claim 11, wherein the new variable is an extension of an existing variable.

13. A wireless device (120) for resuming a radio connection in a wireless communications network (100) comprising a first Radio Access Technology, RAT, and a second RAT being different from the first RAT, wherein the wireless device (120) is configured to operate in a first cell (11) served by a first radio network node (110) configured to operate in the first RAT, and wherein the method comprises:
when a connection with the first cell (11) is suspended, the wireless device (120) is configured to:
- perform a re-selection to a second cell (12) served by a second radio network node (112) operating in the second RAT;
- trigger an RRC resume procedure in the second cell (12);
- receive a first set of parameters associated with the first cell (11), wherein the first set of parameters comprises at least one parameter identifying the wireless device (120) or the first cell (11);
- receive a second set of parameters associated with the second cell (12), wherein the second set of parameters comprises at least one parameter identifying the wireless device (120) or the second cell (12); the wireless device is **characterised by**
- determine an updated version of one or more parameters of the first set of parameters or an updated version of one or more parameters of the second set of parameters;
- determine a security token based on at least one out of the first set of parameters and the updated version of the one or more parameters of the first set of parameters, and based on at least one out of the second set of parameters and the updated version of the one or more parameters of the second set of parameters; and
- transmit, to the second cell (12), a resume request message comprising the security token.

14. The wireless device (120) of claim 13, wherein the first set of parameters comprises one or more out of: a Cell Radio Network Temporary Identifier, C-RNTI, Inactive Radio Network Temporary Identifier, I-RNTI, identifying the wireless device (120), and a Physical Cell Identifier, PCI, identifying the first cell (11), and wherein the second set of parameters comprises a Cell ID or a PCI identifying the second cell (12).

15. The wireless device (120) of claim 13, wherein the wireless device (120) is configured to determine the updated version of the one or more parameters of the first set of parameters by converting the one or more parameters of the first set of parameters to a format corresponding to the format of the one or more parameters of the second RAT by performing one or more out of:
mapping, recalculating or truncating the one or more parameters of the first set of parameters to a shortened bit string when the first RAT is 5G New Radio, NR, technology and the second RAT is Long Term Evolution, LTE, technology; and
mapping, recalculating or padding the one or more parameters of the first set of parameters to an extended bit string when the first RAT is LTE and the second RAT is NR; and
wherein the wireless device (120) is configured to use the converted one or more parameters of the first set of parameters in one or more variables defined in the second RAT as input in calculation of the security token for the second RAT.

16. The wireless device (120) of claim 13 or 15, wherein the wireless device (120) is configured to determine the updated version of the one or more parameters of the second set of parameters by converting the one or more parameters of the second set of parameters to a format corresponding to the format of the one or more parameters of the first set of parameters by performing one or more out of:
mapping, recalculating or truncating the one or more parameters of the second set of parameters to a shortened bit string when the first RAT is LTE technology and the second RAT is NR technology, and
mapping, recalculating or padding the one or more parameters of the second set of parameters to an extended bit string when the first RAT is NR and the second RAT is LTE; and
wherein the wireless device (120) is configured to use the converted one or more parameters of the second set of parameters in one or more variables defined in the first RAT as input in calculation of the security token for the first RAT.

17. A first radio network node (110) for assisting a wireless device (120) in resuming a radio connection in a wireless communications network (100) comprising a first Radio Access Technology, RAT, and a second RAT being different from the first RAT, wherein the wireless device (120) is configured to operate in a first cell (11) served by the first radio network node (110) configured to operate in the first RAT, and wherein the first radio network node (110) is configured to:
- provide the wireless device (120) with a first set of parameters associated with the first cell (11), wherein the first set of parameters comprises at least one parameter identifying the wireless device (120) or the first cell (11), and
when a connection between the wireless device (120) and the first cell (11) is suspended:
- receive, from a second radio network node (112) operating in the second RAT, a second set of parameters associated with a second cell (12) served by the second radio network node (112);
- receive, from the second radio network node (112), a security token received by the second radio network node (112) in a resume request message from the wireless device (120) when a radio connection with the first radio network node (110) has been suspended; the first radio network node is **characterised by**
- determine an updated version of one or more parameters of the first set of parameters or an updated version of one or more parameters of the second set of parameters;
- determine an expected security token based on at least one out of the first set of parameters and the updated version of the one or more parameters of the first set of parameters, and based on at least one out of the second set of parameters and the updated version of the one or more parameters of the second set of parameters; and
- by means of the received security token and the determined expected security token, verify the wireless device's (120) identity;
- when the wireless device (120) is verified as valid, transmit, to the second radio network node (120), one or more configurations and/or parameters relating to the radio connection to be resumed.

18. The first radio network node (110) of claim 17, wherein the first radio network node (110) is configured to determine the updated version of the one or more parameters of the first set of parameters by converting the one or more parameters of the first set of parameters to a format corresponding to the format of the one or more parameters of the second RAT by truncating the one or more parameters of the first set of parameters when the first RAT is 5G New Radio, NR, technology and the second RAT is Long Term Evolution, LTE, technology or by padding the one or more parameters of the first set of parameters when the first RAT is LTE and the second RAT is NR, and wherein the first radio network node (110) is configured to use the converted one or more parameters of the first set of parameters in one or more variables defined in the second RAT as input in calculation of the security token for the second RAT.

## Patentansprüche

1. Verfahren, das von einer drahtlosen Vorrichtung (120) durchgeführt wird, zur Wiederaufnahme einer Funkverbindung in einem drahtlosen Kommunikationsnetzwerk (100), das eine erste Funkzugangstechnologie, RAT, und eine zweite RAT umfasst, die von der ersten RAT verschieden ist, wobei die drahtlose Vorrichtung (120) in einer ersten Zelle (11) operiert, die von einem ersten Funknetzwerkknoten (110) bedient wird, der in der ersten RAT funktioniert, und wobei das Verfahren umfasst:
wenn eine Verbindung mit der ersten Zelle (11) unterbrochen wird,
- Durchführen (601) einer Neuauswahl zu einer zweiten Zelle (12), die von einem zweiten Funknetzwerkknoten (112) bedient wird, der in der zweiten RAT funktioniert;
- Auslösen (602) einer RRC-Wiederaufnahmeprozedur in der zweiten Zelle (12);
- Empfangen (603) eines ersten Satzes von Parametern, der mit der ersten Zelle (11) assoziiert ist, wobei der erste Satz von Parametern mindestens einen Parameter umfasst, der die drahtlose Vorrichtung (120) oder die erste Zelle (11) identifiziert;
- Empfangen (604) eines zweiten Satzes von Parametern, der mit der zweiten Zelle (12) assoziiert ist, wobei der zweite Satz von Parametern mindestens einen Parameter umfasst, der die drahtlose Vorrichtung (120) oder die zweite Zelle (12) identifiziert;
wobei das Verfahren **gekennzeichnet ist durch**
- Bestimmen (605) einer aktualisierten Version eines oder mehrerer Parameter des ersten Satzes von Parametern oder einer aktualisierten Version eines oder mehrerer Parameter des zweiten Satzes von Parametern;
- Bestimmen (606) eines Sicherheitstokens basierend auf mindestens einem aus dem ersten Satz von Parametern und der aktualisierten Version des einen oder der mehreren Parameter des ersten Satzes von Parametern und basierend auf mindestens einem aus dem zweiten Satz von Parametern und der aktualisieren Version des einen oder der mehreren Parameter des zweiten Satzes von Parametern; und
- Senden (607) einer Wiederaufnahmeanforderungsnachricht mit dem Sicherheitstoken an die zweite Zelle (12).

2. Verfahren nach Anspruch 1, wobei der erste Satz von Parametern eine oder mehrere von Folgenden umfasst:
eine temporäre Zellenfunknetzwerkkennung, C-RNTI, eine temporäre Kennung eines inaktiven Funknetzwerks, I-RNTI, welche die drahtlose Vorrichtung (120) identifiziert, und eine Kennung einer physischen Zelle, PCI, welche die erste Zelle (11) identifiziert, und wobei der zweite Satz von Parametern eine Zell-ID oder eine PCI umfasst, welche die zweite Zelle (12) identifiziert.

3. Verfahren nach Anspruch 1, wobei das Bestimmen (605) der aktualisierten Version des einen oder der mehreren Parameter des ersten Satzes von Parametern umfasst:
- Umwandeln des einen oder der mehreren Parameter des ersten Satzes von Parametern in ein Format, das dem Format des einen oder der mehreren Parameter der zweiten RAT entspricht, indem eines oder mehreres von Folgendem durchgeführt wird:
Abbilden, Neuberechnen oder Trunkieren des einen oder der mehreren Parameter des ersten Satzes von Parametern auf eine gekürzte Bitfolge, wenn die erste RAT die 5G-New-Radio-,NR-,Technologie ist, und die zweite RAT eine Long-Term-Evolution-,LTE-,Technologie ist, und
Abbilden, Neuberechnen oder Auffüllen des einen oder der mehreren Parameter des ersten Satzes von Parametern auf eine erweiterte Bitfolge, wenn die erste RAT LTE ist, und die zweite RAT NR ist, und
- Verwenden des einen oder der mehreren umgewandelten Parameter des ersten Satzes von Parametern in einer oder mehreren Variablen, die in der zweiten RAT definiert sind, als Eingabe bei der Berechnung des Sicherheitstokens für die zweite RAT.

4. Verfahren nach Anspruch 1 oder 3, wobei das Bestimmen (605) der aktualisierten Version des einen oder der mehreren Parameter des zweiten Satzes von Parametern umfasst:
- Umwandeln des einen oder der mehreren Parameter des zweiten Satzes von Parametern in ein Format, das dem Format des einen oder der mehreren Parameter des ersten Satzes von Parametern entspricht, indem eines oder mehreres von Folgendem durchgeführt wird:
Abbilden, Neuberechnen oder Trunkieren des einen oder der mehreren Parameter des zweiten Satzes von Parametern auf eine gekürzte Bitfolge, wenn die erste RAT eine LTE-Technologie ist und die zweite RAT die NR-Technologie ist, und
Abbilden, Neuberechnen oder Auffüllen des einen oder der mehreren Parameter des zweiten Satzes von Parametern auf eine erweiterte Bitfolge, wenn die erste RAT NR ist, und die zweite RAT LTE ist, und
- Verwenden des einen oder der mehreren umgewandelten Parameter des zweiten Satzes von Parametern in einer oder mehreren Variablen, die in der ersten RAT definiert sind, als Eingabe bei der Berechnung des Sicherheitstokens für die erste RAT.

5. Verfahren nach Anspruch 1 oder 2, ferner umfassend:
- Erzeugen einer neuen Variablen, die den einen oder die mehreren Parameter des ersten Satzes von Parametern im Format der ersten RAT umfasst und den einen oder die mehreren Parameter des zweiten Satzes von Parametern im Format der zweiten RAT umfasst, und
wobei das Bestimmen (606) des Sicherheitstokens umfasst:
Verwenden der neuen Variablen als Eingabe bei der Berechnung des Sicherheitstokens für die zweite RAT.

6. Verfahren nach Anspruch 5, wobei die neue Variable eine Erweiterung einer bestehenden Variablen ist.

7. Verfahren nach Anspruch 1, wobei das Bestimmen (605) der aktualisierten Version des einen oder der mehreren Parameter des ersten Satzes von Parametern oder der aktualisierten Version des einen oder der mehreren Parameter des zweiten Satzes von Parametern umfasst:
- Erweitern einer Definition von bestehenden Variablen, um einen oder mehrere Werte im zweiten RAT-Format anstelle des einen oder der mehreren Parameter des ersten Satzes von Parametern zu verwenden.

8. Verfahren, das von einem ersten Funknetzwerkknoten (110) durchgeführt wird, zur Unterstützung einer drahtlosen Vorrichtung (120) bei der Wiederaufnahme einer Funkverbindung in einem drahtlosen Kommunikationsnetzwerk (100), das eine erste Funkzugangstechnologie, RAT, und eine zweite RAT umfasst, die von der ersten RAT verschieden ist, wobei die drahtlose Vorrichtung (120) in einer ersten Zelle (11) operiert, die vom ersten Funknetzwerkknoten (110) bedient wird, der in der ersten RAT funktioniert, und wobei das Verfahren umfasst:
- Versehen (801A) der drahtlosen Vorrichtung (120) mit einem ersten Satz von Parametern, der mit der ersten Zelle (11) assoziiert ist, wobei der erste Satz von Parametern mindestens einen Parameter umfasst, der die drahtlose Vorrichtung (120) oder die erste Zelle (11) identifiziert, und
wenn eine Verbindung zwischen der drahtlosen Vorrichtung (120) und der ersten Zelle (11) unterbrochen wird:
- Empfangen (802A) eines zweiten Satzes von Parametern, der mit einer zweiten Zelle (12) assoziiert ist, die von einem zweiten Funknetzwerkknoten (112) bedient wird, vom zweiten Funknetzwerkknoten (112), der in der zweiten RAT funktioniert;
- Empfangen (803A) eines Sicherheitstokens, der durch den zweiten Funknetzwerkknoten (112) in einer Wiederaufnahmeanforderungsnachricht von der drahtlosen Vorrichtung (120) empfangen wird, vom zweiten Funknetzwerkknoten (112), wenn eine Funkverbindung mit dem ersten Funknetzwerkknoten (110) unterbrochen wurde;
wobei das Verfahren **gekennzeichnet ist durch**
- Bestimmen (804A) einer aktualisierten Version eines oder mehrerer Parameter des ersten Satzes von Parametern oder einer aktualisierten Version eines oder mehrerer Parameter des zweiten Satzes von Parametern und Bestimmen eines erwarteten Sicherheitstokens basierend auf mindestens einem aus dem ersten Satz von Parametern und der aktualisierten Version des einen oder der mehreren Parameter des ersten Satzes von Parametern und basierend auf mindestens einem aus dem zweiten Satz von Parametern und der aktualisieren Version des einen oder der mehreren Parameter des zweiten Satzes von Parametern; und
- Verifizieren (805A) der Identität der drahtlosen Vorrichtung (120) mittels des empfangenen Sicherheitstokens und des bestimmten erwarteten Sicherheitstokens;
- Senden (806A), wenn die drahtlose Vorrichtung (120) als gültig verifiziert wird, einer oder mehrerer Konfigurationen und/oder Parameter in Bezug auf die wiederaufzunehmende Funkverbindung an den zweiten Funknetzwerkknoten (112).

9. Verfahren nach Anspruch 8, wobei das Bestimmen der aktualisierten Version des einen oder der mehreren Parameter des ersten Satzes von Parametern umfasst:
- Umwandeln des einen oder der mehreren Parameter des ersten Satzes von Parametern in ein Format, das dem Format des einen oder der mehreren Parameter der zweiten RAT entspricht, indem eines oder mehreres von Folgendem durchgeführt wird:
Abbilden, Neuberechnen oder Trunkieren des einen oder der mehreren Parameter des ersten Satzes von Parametern auf eine gekürzte Bitfolge, wenn die erste RAT die 5G-New-Radio-,NR-,Technologie ist, und die zweite RAT eine Long-Term-Evolution-,LTE-,Technologie ist, und
Abbilden, Neuberechnen oder Auffüllen des einen oder der mehreren Parameter des ersten Satzes von Parametern auf eine erweiterte Bitfolge, wenn die erste RAT LTE ist, und die zweite RAT NR ist; und
wobei das Bestimmen (804A) des Sicherheitstokens umfasst:
- Verwenden des einen oder der mehreren umgewandelten Parameter des ersten Satzes von Parametern in einer oder mehreren Variablen, die in der zweiten RAT definiert sind, als Eingabe bei der Berechnung des Sicherheitstokens für die zweite RAT.

10. Verfahren nach Anspruch 8 oder 9, wobei das Bestimmen der aktualisierten Version des einen oder der mehreren Parameter des zweiten Satzes von Parametern umfasst:
- Umwandeln des einen oder der mehreren Parameter des zweiten Satzes von Parametern in ein Format, das dem Format des einen oder der mehreren Parameter des ersten Satzes von Parametern entspricht, indem eines oder mehreres von Folgendem durchgeführt wird:
Abbilden, Neuberechnen oder Trunkieren des einen oder der mehreren Parameter des zweiten Satzes von Parametern auf eine gekürzte Bitfolge, wenn die erste RAT eine LTE-Technologie ist und die zweite RAT die NR-Technologie ist, und
Abbilden, Neuberechnen oder Auffüllen des einen oder der mehreren Parameter des zweiten Satzes von Parametern auf eine erweiterte Bitfolge, wenn die erste RAT NR ist, und die zweite RAT LTE ist, und
wobei das Bestimmen (804A) des Sicherheitstokens umfasst:
- Verwenden des einen oder der mehreren umgewandelten Parameter des zweiten Satzes von Parametern in einer oder mehreren Variablen, die in der ersten RAT definiert sind, als Eingabe bei der Berechnung des Sicherheitstokens für die erste RAT.

11. Verfahren nach Anspruch 8, ferner umfassend:
- Erzeugen einer neuen Variablen, die den einen oder die mehreren Parameter des ersten Satzes von Parametern im Format der ersten RAT umfasst und den einen oder die mehreren Parameter des zweiten Satzes von Parametern im Format der zweiten RAT umfasst, und wobei das Bestimmen (804A) des Sicherheitstokens umfasst:
- Verwenden der neuen Variablen als Eingabe bei der Berechnung des Sicherheitstokens für die zweite RAT.

12. Verfahren nach Anspruch 11, wobei die neue Variable eine Erweiterung einer bestehenden Variablen ist.

13. Drahtlose Vorrichtung (120) zum Wiederaufnehmen einer Funkverbindung in einem drahtlosen Kommunikationsnetzwerk (100), das eine erste Funkzugangstechnologie, RAT, und eine zweite RAT umfasst, die von der ersten RAT verschieden ist, wobei die drahtlose Vorrichtung (120) so konfiguriert ist, dass sie in einer ersten Zelle (11) operiert, die von einem ersten Funknetzwerkknoten (110) bedient wird, der so konfiguriert ist, dass er in der ersten RAT funktioniert, und wobei das Verfahren umfasst, dass:
die drahtlose Vorrichtung (120) bei Unterbrechung einer Verbindung mit der ersten Zelle (11) konfiguriert ist zum:
- Durchführen einer Neuauswahl zu einer zweiten Zelle (12), die von einem zweiten Funknetzwerkknoten (112) bedient wird, der in der zweiten RAT funktioniert;
- Auslösen einer RRC-Wiederaufnahmeprozedur in der zweiten Zelle (12);
- Empfangen eines ersten Satzes von Parametern, der mit der ersten Zelle (11) assoziiert ist, wobei der erste Satz von Parametern mindestens einen Parameter umfasst, der die drahtlose Vorrichtung (120) oder die erste Zelle (11) identifiziert;
- Empfangen eines zweiten Satzes von Parametern, der mit der zweiten Zelle (12) assoziiert ist, wobei der zweite Satz von Parametern mindestens einen Parameter umfasst, der die drahtlose Vorrichtung (120) oder die zweite Zelle (12) identifiziert;
wobei die drahtlose Vorrichtung **gekennzeichnet ist durch**
- Bestimmen einer aktualisierten Version eines oder mehrerer Parameter des ersten Satzes von Parametern oder einer aktualisierten Version eines oder mehrerer Parameter des zweiten Satzes von Parametern;
- Bestimmen eines Sicherheitstokens basierend auf mindestens einem aus dem ersten Satz von Parametern und der aktualisierten Version des einen oder der mehreren Parameter des ersten Satzes von Parametern und basierend auf mindestens einem aus dem zweiten Satz von Parametern und der aktualisieren Version des einen oder der mehreren Parameter des zweiten Satzes von Parametern; und
- Senden einer Wiederaufnahmeanforderungsnachricht mit dem Sicherheitstoken an die zweite Zelle (12) .

14. Drahtlose Vorrichtung (120) nach Anspruch 13, wobei der erste Satz von Parametern eine oder mehrere von Folgenden umfasst: eine temporäre Zellenfunknetzwerkkennung, C-RNTI, eine temporäre Kennung eines inaktiven Funknetzwerks, I-RNTI, welche die drahtlose Vorrichtung (120) identifiziert, und eine Kennung einer physischen Zelle, PCI, welche die erste Zelle (11) identifiziert, und wobei der zweite Satz von Parametern eine Zell-ID oder eine PCI umfasst, welche die zweite Zelle (12) identifiziert.

15. Drahtlose Vorrichtung (120) nach Anspruch 13, wobei die drahtlose Vorrichtung (120) so konfiguriert ist, dass sie die aktualisierte Version des einen oder der mehreren Parameter des ersten Satzes von Parametern durch Umwandeln des einen oder der mehreren Parameter des ersten Satzes von Parametern in ein Format bestimmt, das dem Format des einen oder der mehreren Parameter der zweiten RAT entspricht, indem sie eines oder mehreres von Folgendem durchführt:
Abbilden, Neuberechnen oder Trunkieren des einen oder der mehreren Parameter des ersten Satzes von Parametern auf eine gekürzte Bitfolge, wenn die erste RAT die 5G-New-Radio-,NR-,Technologie ist, und die zweite RAT eine Long-Term-Evolution-,LTE-,Technologie ist; und
Abbilden, Neuberechnen oder Auffüllen des einen oder der mehreren Parameter des ersten Satzes von Parametern auf eine erweiterte Bitfolge, wenn die erste RAT LTE ist, und die zweite RAT NR ist; und
wobei die drahtlose Vorrichtung (120) so konfiguriert ist, dass sie den einen oder der die mehreren umgewandelten Parameter des ersten Satzes von Parametern in einer oder mehreren Variablen, die in der zweiten RAT definiert sind, als Eingabe bei der Berechnung des Sicherheitstokens für die zweite RAT verwendet.

16. Drahtlose Vorrichtung (120) nach Anspruch 13 oder 15, wobei die drahtlose Vorrichtung (120) so konfiguriert ist, dass sie die aktualisierte Version des einen oder der mehreren Parameter des zweiten Satzes von Parametern durch Umwandeln des einen oder der mehreren Parameter des zweiten Satzes von Parametern in ein Format bestimmt, das dem Format des einen oder der mehreren Parameter des ersten Satzes von Parametern entspricht, indem sie eines oder mehreres von Folgendem durchführt:
Abbilden, Neuberechnen oder Trunkieren des einen oder der mehreren Parameter des zweiten Satzes von Parametern auf eine gekürzte Bitfolge, wenn die erste RAT eine LTE-Technologie ist und die zweite RAT die NR-Technologie ist, und
Abbilden, Neuberechnen oder Auffüllen des einen oder der mehreren Parameter des zweiten Satzes von Parametern auf eine erweiterte Bitfolge, wenn die erste RAT NR ist, und die zweite RAT LTE ist; und
wobei die drahtlose Vorrichtung (120) so konfiguriert ist, dass sie den einen oder der die mehreren umgewandelten Parameter des zweiten Satzes von Parametern in einer oder mehreren Variablen, die in der ersten RAT definiert sind, als Eingabe bei der Berechnung des Sicherheitstokens für die erste RAT verwendet.

17. Erster Funknetzwerkknoten (110) zum Unterstützen einer drahtlosen Vorrichtung (120) bei der Wiederaufnahme einer Funkverbindung in einem drahtlosen Kommunikationsnetzwerk (100), das eine erste Funkzugangstechnologie, RAT, und eine zweite RAT umfasst, die von der ersten RAT verschieden ist, wobei die drahtlose Vorrichtung (120) so konfiguriert ist, dass sie in einer ersten Zelle (11) operiert, die vom ersten Funknetzwerkknoten (110) bedient wird, der so konfiguriert ist, dass er in der ersten RAT funktioniert, und wobei der erste Funknetzwerkknoten (110) konfiguriert ist zum:
- Versehen der drahtlosen Vorrichtung (120) mit einem ersten Satz von Parametern, der mit der ersten Zelle (11) assoziiert ist, wobei der erste Satz von Parametern mindestens einen Parameter umfasst, der die drahtlose Vorrichtung (120) oder die erste Zelle (11) identifiziert, und
wenn eine Verbindung zwischen der drahtlosen Vorrichtung (120) und der ersten Zelle (11) unterbrochen wird:
- Empfangen eines zweiten Satzes von Parametern, der mit einer zweiten Zelle (12) assoziiert ist, die von einem zweiten Funknetzwerkknoten (112) bedient wird, vom zweiten Funknetzwerkknoten (112), der in der zweiten RAT funktioniert;
- Empfangen eines Sicherheitstokens, der durch den zweiten Funknetzwerkknoten (112) in einer Wiederaufnahmeanforderungsnachricht von der drahtlosen Vorrichtung (120) empfangen wird, vom zweiten Funknetzwerkknoten (112), wenn eine Funkverbindung mit dem ersten Funknetzwerkknoten (110) unterbrochen wurde;
wobei der Funknetzwerkknoten **gekennzeichnet ist durch**
- Bestimmen einer aktualisierten Version eines oder mehrerer Parameter des ersten Satzes von Parametern oder einer aktualisierten Version eines oder mehrerer Parameter des zweiten Satzes von Parametern;
- Bestimmen eines erwarteten Sicherheitstokens basierend auf mindestens einem aus dem ersten Satz von Parametern und der aktualisierten Version des einen oder der mehreren Parameter des ersten Satzes von Parametern und basierend auf mindestens einem aus dem zweiten Satz von Parametern und der aktualisieren Version des einen oder der mehreren Parameter des zweiten Satzes von Parametern; und
- Verifizieren der Identität der drahtlosen Vorrichtung (120) mittels des empfangenen Sicherheitstokens und des bestimmten erwarteten Sicherheitstokens;
- Senden, wenn die drahtlose Vorrichtung (120) als gültig verifiziert wird, einer oder mehrerer Konfigurationen und/oder Parameter in Bezug auf die wiederaufzunehmende Funkverbindung an den zweiten Funknetzwerkknoten (112).

18. Erster Funknetzwerkknoten (110) nach Anspruch 17, wobei der erste Funknetzwerkknoten (110) so konfiguriert ist, dass er die aktualisierte Version des einen oder der mehreren Parameter des ersten Satzes von Parametern durch Umwandeln des einen oder der mehreren Parameter des ersten Satzes von Parametern in ein Format, das dem Format des einen oder der mehreren Parameter der zweiten RAT entspricht, durch Trunkieren des einen oder der mehreren Parameter des ersten Satzes von Parametern, wenn die erste RAT die 5G-New-Radio-,NR-,Technologie ist, und die zweite RAT eine Long-Term-Evolution-,LTE-,Technologie ist, oder durch Auffüllen des einen oder der mehreren Parameter des ersten Satzes von Parametern bestimmt, wenn die erste RAT LTE ist und die zweite RAT NR ist, und wobei der erste Funknetzwerkknoten (110) so konfiguriert ist, dass er den einen oder die mehreren umgewandelten Parameter des ersten Satzes von Parametern in einer oder mehreren Variablen, die in der zweiten RAT definiert sind, als Eingabe bei der Berechnung des Sicherheitstokens für die zweite RAT verwendet.

## Revendications

1. Procédé réalisé par un dispositif sans fil (120) pour reprendre une connexion radio dans un réseau de communication sans fil (100) comprenant une première technologie d'accès radio, RAT, et une deuxième RAT différente de la première RAT, dans lequel le dispositif sans fil (120) fonctionne dans une première cellule (11) desservie par un premier nœud de réseau radio (110) fonctionnant dans la première RAT, et dans lequel le procédé comprend :
lorsqu'une connexion avec la première cellule (11) est suspendue,
- la réalisation (601) d'une resélection à une deuxième cellule (12) desservie par un deuxième nœud de réseau radio (112) fonctionnant dans la deuxième RAT ;
- le déclenchement (602) d'une procédure de reprise RRC dans la deuxième cellule (12) ;
- la réception (603) d'un premier ensemble de paramètres associés à la première cellule (11), dans lequel le premier ensemble de paramètres comprend au moins un paramètre identifiant le dispositif sans fil (120) ou la première cellule (11) ;
- la réception (604) d'un deuxième ensemble de paramètres associés à la deuxième cellule (12), dans lequel le deuxième ensemble de paramètres comprend au moins un paramètre identifiant le dispositif sans fil (120) ou la deuxième cellule (12) ;
le procédé est **caractérisé par**
- la détermination (605) d'une version mise à jour d'un ou plusieurs paramètres du premier ensemble de paramètres ou d'une version mise à jour d'un ou plusieurs paramètres du deuxième ensemble de paramètres ;
- la détermination (606) d'un jeton de sécurité sur la base d'au moins l'un parmi le premier ensemble de paramètres et la version mise à jour des un ou plusieurs paramètres du premier ensemble de paramètres, et sur la base d'au moins l'un parmi le deuxième ensemble de paramètres et la version mise à jour des un ou plusieurs paramètres du deuxième ensemble de paramètres ; et
- la transmission (607), à la deuxième cellule (12), d'un message de demande de reprise comprenant le jeton de sécurité.

2. Procédé selon la revendication 1, dans lequel le premier ensemble de paramètres comprend un ou plusieurs parmi :
un identifiant provisoire de réseau radio de cellule, C-RNTI, un identifiant provisoire de réseau radio inactif, I-RNTI, identifiant le dispositif sans fil (120), et un identifiant de cellule physique, PCI, identifiant la première cellule (11), et dans lequel le deuxième ensemble de paramètres comprend un ID de cellule ou un PCI identifiant la deuxième cellule (12).

3. Procédé selon la revendication 1, dans lequel la détermination (605) de la version mise à jour des un ou plusieurs paramètres du premier ensemble de paramètres comprend :
- la conversion des un ou plusieurs paramètres du premier ensemble de paramètres dans un format correspondant au format des un ou plusieurs paramètres de la deuxième RAT par la réalisation d'un ou plusieurs parmi :
le mappage, le recalcul ou la troncation des un ou plusieurs paramètres du premier ensemble de paramètres à une chaîne binaire raccourcie lorsque la première RAT est une technologie nouvelle radio, NR, 5G et la deuxième RAT est une technologie d'évolution à long terme, LTE, et
le mappage, le recalcul ou le remplissage des un ou plusieurs paramètres du premier ensemble de paramètres à une chaîne binaire étendue lorsque la première RAT est LTE et la deuxième RAT est NR, et
- l'utilisation des un ou plusieurs paramètres convertis du premier ensemble de paramètres dans une ou plusieurs variables définies dans la deuxième RAT en tant qu'entrée dans le calcul du jeton de sécurité pour la deuxième RAT.

4. Procédé selon la revendication 1 ou 3, dans lequel la détermination (605) de la version mise à jour des un ou plusieurs paramètres du deuxième ensemble de paramètres comprend :
- la conversion des un ou plusieurs paramètres du deuxième ensemble de paramètres dans un format correspondant au format des un ou plusieurs paramètres du premier ensemble de paramètres par la réalisation d'un ou plusieurs parmi :
le mappage, le recalcul ou la troncation des un ou plusieurs paramètres du deuxième ensemble de paramètres à une chaîne binaire raccourcie lorsque la première RAT est une technologie LTE et la deuxième RAT est une technologie NR, et
le mappage, le recalcul ou le remplissage des un ou plusieurs paramètres du deuxième ensemble de paramètres à une chaîne binaire étendue lorsque la première RAT est NR et la deuxième RAT est LTE, et
- l'utilisation des un ou plusieurs paramètres convertis du deuxième ensemble de paramètres dans une ou plusieurs variables définies dans la première RAT en tant qu'entrée dans le calcul du jeton de sécurité pour la première RAT.

5. Procédé selon la revendication 1 ou 2, comprenant en outre :
- la création d'une nouvelle variable comprenant les un ou plusieurs paramètres du premier ensemble de paramètres dans le format de la première RAT et comprenant les un ou plusieurs paramètres du deuxième ensemble de paramètres dans le format de la deuxième RAT, et
dans lequel la détermination (606) du jeton de sécurité comprend :
l'utilisation de la nouvelle variable en tant qu'entrée dans le calcul du jeton de sécurité pour la deuxième RAT.

6. Procédé selon la revendication 5, dans lequel la nouvelle variable est une extension d'une variable existante.

7. Procédé selon la revendication 1, dans lequel la détermination (605) de la version mise à jour des un ou plusieurs paramètres du premier ensemble de paramètres ou de la version mise à jour des un ou plusieurs paramètres du deuxième ensemble de paramètres comprend :
- l'extension d'une définition de variables existantes pour utiliser une ou plusieurs valeurs dans le format de la deuxième RAT à la place des un ou plusieurs paramètres du premier ensemble de paramètres.

8. Procédé réalisé par un premier nœud de réseau radio (110) pour aider un dispositif sans fil (120) à reprendre une connexion radio dans un réseau de communication sans fil (100) comprenant une première technologie d'accès radio, RAT, et une deuxième RAT différente de la première RAT, dans lequel le dispositif sans fil (120) fonctionne dans une première cellule (11) desservie par le premier nœud de réseau radio (110) fonctionnant dans la première RAT, et dans lequel le procédé comprend :
- la fourniture (801A), au dispositif sans fil (120), d'un premier ensemble de paramètres associés à la première cellule (11), dans lequel le premier ensemble de paramètres comprend au moins un paramètre identifiant le dispositif sans fil (120) ou la première cellule (11), et
lorsqu'une connexion entre le dispositif sans fil (20) et la première cellule (11) est suspendue :
- la réception (802A), depuis un deuxième nœud de réseau radio (112) fonctionnant dans la deuxième RAT, d'un deuxième ensemble de paramètres associés à la deuxième cellule (12) desservie par le deuxième nœud de réseau radio (112) ;
- la réception (803A), depuis le deuxième nœud de réseau radio (112), d'un jeton de sécurité reçu par le deuxième nœud de réseau radio (112) dans un message de demande de reprise depuis le dispositif sans fil (120) lorsqu'une connexion radio avec le premier nœud de réseau radio (110) a été suspendue ;
le procédé est **caractérisé par**
- la détermination (804A) d'une version mise à jour d'un ou plusieurs paramètres du premier ensemble de paramètres ou d'une version mise à jour d'un ou plusieurs paramètres du deuxième ensemble de paramètres et la détermination d'un jeton de sécurité attendu sur la base d'au moins l'un parmi le premier ensemble de paramètres et la version mise à jour des un ou plusieurs paramètres du premier ensemble de paramètres, et sur la base d'au moins l'un parmi le deuxième ensemble de paramètres et la version mise à jour des un ou plusieurs paramètres du deuxième ensemble de paramètres ; et
- au moyen du jeton de sécurité reçu et du jeton de sécurité attendu déterminé, la vérification (805A) de l'identité du dispositif sans fil (120) ;
- lorsque le dispositif sans fil (120) est vérifié comme étant valide, la transmission (806A), au deuxième nœud de réseau radio (112), d'une ou plusieurs configurations et/ou d'un ou plusieurs paramètres relatifs à la connexion radio à reprendre.

9. Procédé selon la revendication 8, dans lequel la détermination de la version mise à jour des un ou plusieurs paramètres du premier ensemble de paramètres comprend :
- la conversion des un ou plusieurs paramètres du premier ensemble de paramètres dans un format correspondant au format des un ou plusieurs paramètres de la deuxième RAT par la réalisation d'un ou plusieurs parmi :
le mappage, le recalcul ou la troncation des un ou plusieurs paramètres du premier ensemble de paramètres à une chaîne binaire raccourcie lorsque la première RAT est une technologie nouvelle radio, NR, 5G et la deuxième RAT est une technologie d'évolution à long terme, LTE, et
le mappage, le recalcul ou le remplissage des un ou plusieurs paramètres du premier ensemble de paramètres à une chaîne binaire étendue lorsque la première RAT est LTE et la deuxième RAT est NR ; et
dans lequel la détermination (804A) du jeton de sécurité comprend :
- l'utilisation des un ou plusieurs paramètres convertis du premier ensemble de paramètres dans une ou plusieurs variables définies dans la deuxième RAT en tant qu'entrée dans le calcul du jeton de sécurité pour la deuxième RAT.

10. Procédé selon la revendication 8 ou 9, dans lequel la détermination de la version mise à jour des un ou plusieurs paramètres du deuxième ensemble de paramètres comprend :
- la conversion des un ou plusieurs paramètres du deuxième ensemble de paramètres dans un format correspondant au format des un ou plusieurs paramètres du premier ensemble de paramètres par la réalisation d'un ou plusieurs parmi :
le mappage, le recalcul ou la troncation des un ou plusieurs paramètres du deuxième ensemble de paramètres à une chaîne binaire raccourcie lorsque la première RAT est une technologie LTE et la deuxième RAT est une technologie NR, et
le mappage, le recalcul ou le remplissage des un ou plusieurs paramètres du deuxième ensemble de paramètres à une chaîne binaire étendue lorsque la première RAT est NR et la deuxième RAT est LTE ; et
dans lequel la détermination (804A) du jeton de sécurité comprend :
- l'utilisation des un ou plusieurs paramètres convertis du deuxième ensemble de paramètres dans une ou plusieurs variables définies dans la première RAT en tant qu'entrée dans le calcul du jeton de sécurité pour la première RAT.

11. Procédé selon la revendication 8, comprenant en outre :
- la création d'une nouvelle variable comprenant les un ou plusieurs paramètres du premier ensemble de paramètres dans le format de la première RAT et comprenant les un ou plusieurs paramètres du deuxième ensemble de paramètres dans le format de la deuxième RAT, et dans lequel la détermination (804A) du jeton de sécurité comprend :
- l'utilisation de la nouvelle variable en tant qu'entrée dans le calcul du jeton de sécurité pour la deuxième RAT.

12. Procédé selon la revendication 11, dans lequel la nouvelle variable est une extension d'une variable existante.

13. Dispositif sans fil (120) pour reprendre une connexion radio dans un réseau de communication sans fil (100) comprenant une première technologie d'accès radio, RAT, et une deuxième RAT différente de la première RAT, dans lequel le dispositif sans fil (120) est configuré pour fonctionner dans une première cellule (11) desservie par un premier nœud de réseau radio (110) configuré pour fonctionner dans la première RAT, et dans lequel le procédé comprend :
lorsqu'une connexion avec la première cellule (11) est suspendue, le dispositif sans fil (120) est configuré pour :
- réaliser une resélection à une deuxième cellule (12) desservie par un deuxième nœud de réseau radio (112) fonctionnant dans la deuxième RAT ;
- déclencher une procédure de reprise RRC dans la deuxième cellule (12) ;
- recevoir un premier ensemble de paramètres associés à la première cellule (11), dans lequel le premier ensemble de paramètres comprend au moins un paramètre identifiant le dispositif sans fil (120) ou la première cellule (11) ;
- recevoir un deuxième ensemble de paramètres associés à la deuxième cellule (12), dans lequel le deuxième ensemble de paramètres comprend au moins un paramètre identifiant le dispositif sans fil (120) ou la deuxième cellule (12) ;
le dispositif sans fil est **caractérisé par**
- déterminer une version mise à jour d'un ou plusieurs paramètres du premier ensemble de paramètres ou une version mise à jour d'un ou plusieurs paramètres du deuxième ensemble de paramètres ;
- déterminer un jeton de sécurité sur la base d'au moins l'un parmi le premier ensemble de paramètres et la version mise à jour des un ou plusieurs paramètres du premier ensemble de paramètres, et sur la base d'au moins l'un parmi le deuxième ensemble de paramètres et la version mise à jour des un ou plusieurs paramètres du deuxième ensemble de paramètres ; et
- transmettre, à la deuxième cellule (12), un message de demande de reprise comprenant le jeton de sécurité.

14. Dispositif sans fil (120) selon la revendication 13, dans lequel le premier ensemble de paramètres comprend un ou plusieurs parmi : un identifiant provisoire de réseau radio de cellule, C-RNTI, un identifiant provisoire de réseau radio inactif, I-RNTI, identifiant le dispositif sans fil (120), et un identifiant de cellule physique, PCI, identifiant la première cellule (11), et dans lequel le deuxième ensemble de paramètres comprend un ID de cellule ou un PCI identifiant la deuxième cellule (12).

15. Dispositif sans fil (120) selon la revendication 13, dans lequel le dispositif sans fil (120) est configuré pour déterminer la version mise à jour des un ou plusieurs paramètres du premier ensemble de paramètres par la conversion des un ou plusieurs paramètres du premier ensemble de paramètres dans un format correspondant au format des un ou plusieurs paramètres de la deuxième RAT par la réalisation d'un ou plusieurs parmi :
le mappage, le recalcul ou la troncation des un ou plusieurs paramètres du premier ensemble de paramètres à une chaîne binaire raccourcie lorsque la première RAT est une technologie nouvelle radio, NR, 5G et la deuxième RAT est une technologie d'évolution à long terme, LTE ; et
le mappage, le recalcul ou le remplissage des un ou plusieurs paramètres du premier ensemble de paramètres à une chaîne binaire étendue lorsque la première RAT est LTE et la deuxième RAT est NR ; et
dans lequel le dispositif sans fil (120) est configuré pour utiliser les un ou plusieurs paramètres convertis du premier ensemble de paramètres dans une ou plusieurs variables définies dans la deuxième RAT en tant qu'entrée dans le calcul du jeton de sécurité pour la deuxième RAT.

16. Dispositif sans fil (120) selon la revendication 13 ou 15, dans lequel le dispositif sans fil (120) est configuré pour déterminer la version mise à jour des un ou plusieurs paramètres du deuxième ensemble de paramètres par la conversion des un ou plusieurs paramètres du deuxième ensemble de paramètres dans un format correspondant au format des un ou plusieurs paramètres du premier ensemble de paramètres par la réalisation d'un ou plusieurs parmi :
le mappage, le recalcul ou la troncation des un ou plusieurs paramètres du deuxième ensemble de paramètres à une chaîne binaire raccourcie lorsque la première RAT est une technologie LTE et la deuxième RAT est une technologie NR, et
le mappage, le recalcul ou le remplissage des un ou plusieurs paramètres du deuxième ensemble de paramètres à une chaîne binaire étendue lorsque la première RAT est NR et la deuxième RAT est LTE ; et
dans lequel le dispositif sans fil (120) est configuré pour utiliser les un ou plusieurs paramètres convertis du deuxième ensemble de paramètres dans une ou plusieurs variables définies dans la première RAT en tant qu'entrée dans le calcul du jeton de sécurité pour la première RAT.

17. Premier nœud de réseau radio (110) pour aider un dispositif sans fil (120) à reprendre une connexion radio dans un réseau de communication sans fil (100) comprenant une première technologie d'accès radio, RAT, et une deuxième RAT différente de la première RAT, dans lequel le dispositif sans fil (120) est configuré pour fonctionner dans une première cellule (11) desservie par le premier nœud de réseau radio (110) configuré pour fonctionner dans la première RAT, et dans lequel le premier nœud de réseau radio (110) est configuré pour :
- fournir, au dispositif sans fil (120), un premier ensemble de paramètres associés à la première cellule (11), dans lequel le premier ensemble de paramètres comprend au moins un paramètre identifiant le dispositif sans fil (120) ou la première cellule (11), et
lorsqu'une connexion entre le dispositif sans fil (120) et la première cellule (11) est suspendue :
- recevoir, depuis un deuxième nœud de réseau radio (112) fonctionnant dans la deuxième RAT, un deuxième ensemble de paramètres associés à une deuxième cellule (12) desservie par le deuxième nœud de réseau radio (112) ;
- recevoir, depuis le deuxième nœud de réseau radio (112), un jeton de sécurité reçu par le deuxième nœud de réseau radio (112) dans un message de demande de reprise depuis le dispositif sans fil (120) lorsqu'une connexion radio avec le premier nœud de réseau radio (110) a été suspendue ;
le premier nœud de réseau radio (110) est **caractérisé par**
- déterminer une version mise à jour d'un ou plusieurs paramètres du premier ensemble de paramètres ou une version mise à jour d'un ou plusieurs paramètres du deuxième ensemble de paramètres ;
- déterminer un jeton de sécurité attendu sur la base d'au moins l'un parmi le premier ensemble de paramètres et la version mise à jour des un ou plusieurs paramètres du premier ensemble de paramètres, et sur la base d'au moins l'un parmi le deuxième ensemble de paramètres et la version mise à jour des un ou plusieurs paramètres du deuxième ensemble de paramètres ; et
- au moyen du jeton de sécurité reçu et du jeton de sécurité attendu déterminé, vérifier l'identité du dispositif sans fil (120) ;
- lorsque le dispositif sans fil (120) est vérifié comme étant valide, transmettre, au deuxième nœud de réseau radio (112), une ou plusieurs configurations et/ou un ou plusieurs paramètres relatifs à la connexion radio à reprendre.

18. Premier nœud de réseau radio (110) selon la revendication 17, dans lequel le premier nœud de réseau radio (110) est configuré pour déterminer la version mise à jour des un ou plusieurs paramètres du premier ensemble de paramètres par la conversion des un ou plusieurs paramètres du premier ensemble de paramètres dans un format correspondant au format des un ou plusieurs paramètres de la deuxième RAT par la troncation des un ou plusieurs paramètres du premier ensemble de paramètres lorsque la première RAT est une technologie nouvelle radio, NR, 5G et la deuxième RAT est une technologie d'évolution à long terme, LTE, ou par le remplissage des un ou plusieurs paramètres du premier ensemble de paramètres lorsque la première RAT est LTE et la deuxième RAT est NR, et dans lequel le premier nœud de réseau radio (110) est configuré pour utiliser les un ou plusieurs paramètres convertis du premier ensemble de paramètres dans une ou plusieurs variables définies dans la deuxième RAT en tant qu'entrée dans le calcul du jeton de sécurité pour la deuxième RAT.
